(19) Europäisches Patentamt
European Patent Office
Office européen des brevets

(11) EP 3 504 292 B1

(12) **EUROPEAN PATENT SPECIFICATION**

(45) Date of publication and mention of the grant of the patent:
**27.05.2020 Bulletin 2020/22**

(21) Application number: **17758844.9**

(22) Date of filing: **22.08.2017**

(51) Int Cl.:
***C09K 19/34*** *(2006.01)* ***C09K 19/20*** *(2006.01)*
***C09K 19/04*** *(2006.01)* ***C09K 19/30*** *(2006.01)*
***C09K 19/58*** *(2006.01)*

(86) International application number:
**PCT/EP2017/071080**

(87) International publication number:
**WO 2018/036989 (01.03.2018 Gazette 2018/09)**

(54) **LIQUID CRYSTALLINE MEDIUM AND LIQUID CRYSTAL DISPLAY**
FLÜSSIGKRISTALLINES MEDIUM UND FLÜSSIGKRISTALLANZEIGE
MILIEU CRISTALLIN LIQUIDE ET ÉCRAN À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2016 EP 16185533**

(43) Date of publication of application:
**03.07.2019 Bulletin 2019/27**

(73) Proprietor: **Merck Patent GmbH**
**64293 Darmstadt (DE)**

(72) Inventors:
- **SONG, Dong-Mee**
  **Hwaseong 18321 (KR)**
- **CHOI, Yong-Hyun**
  **Pyeongtaek-Shi**
  **Pyeongtaek 451-765 (KR)**
- **KANG, Jae-Hyun**
  **Seoul 135-800 (KR)**
- **YUN, Yong-Kuk**
  **Hwaseong 18477 (KR)**

(56) References cited:
**EP-A2- 2 568 032**
**WO-A1-2010/022891**
**WO-A1-2011/137986**
**WO-A1-2013/034219**
**WO-A1-2013/156113**
**WO-A1-2014/169985**
**WO-A1-2015/101405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 504 292 B1

## Description

The present invention relates to a liquid crystalline medium which comprises one or more mesogenic compounds selected from the group of compounds of formulae I and II as set forth herein below, one or more chiral compounds and one or more polymerisable compounds, and to a composite system obtained from or respectively obtainable from the medium by polymerising the one or more polymerisable compounds. Furthermore, the present invention relates to liquid crystal displays comprising the resulting composite system, and especially to displays operating in reflective mode. The present invention further relates to a process for preparing the composite system comprising spatially selective polymerisation of the medium.

Liquid crystal (LC) displays are known from the prior art. Commonly used display devices are based on the Schadt-Helfrich effect and contain a liquid crystal medium having a twisted nematic structure, such as, for example, TN ("twisted nematic") cells having twist angles of typically 90° and STN ("super-twisted nematic") cells having twist angles of typically from 180° to 270°. The twisted structure in these displays is usually achieved by adding one or more chiral dopants to a nematic or smectic LC medium.

Also known are LC displays which contain liquid crystal media having a chiral nematic or cholesteric structure. These media have a significantly higher twist compared with the media used in TN and STN cells. A cholesteric liquid crystal (CLC) exhibits selective reflection of circularly polarised light, wherein the direction of rotation of the light vector corresponds to the direction of rotation of the cholesteric helix. CLC displays are particularly useful for operation in reflected mode as cholesteric liquid crystals having an appropriate cholesteric pitch selectively reflect light such that they may be coloured and allow to avoid the use of colour filters.

The reflection wavelength is dependent on the pitch p of the cholesteric helix and the mean birefringence of the cholesteric liquid crystal in accordance with the following equation (1):

$$\lambda_{max} = n_{mean} \cdot p \qquad (1)$$

wherein $\lambda_{max}$ is the wavelength of the selective reflection maximum, $n_{mean}$ is the mean refractive index, with $n_{mean}=(n_o+n_e)/2$ and $n_o$ and $n_e$ being the ordinary refractive index and respectively the extraordinary refractive index, and the pitch p is the distance for the orientational axis (director) of the CLC to undergo a $2\pi$ rotation.

Examples of customary cholesteric liquid crystal displays (CLC displays) are the so-called SSCT ("surface stabilised cholesteric texture") and PSCT ("polymer stabilised cholesteric texture") displays. SSCT and PSCT displays usually contain a CLC medium which has, for example, in the initial state a planar structure which reflects light having a certain wavelength, and which can be switched into a focal conic, light-scattering structure by application of an electrical alternating-voltage pulse, or vice versa. On application of a stronger voltage pulse, the CLC medium can be switched into a homeotropic, transparent state, from which it relaxes into the planar state after rapid switching-off of the voltage or into the focal conic state after slow switching-off.

In the planar texture Bragg reflection occurs, where the reflected light has the same handedness as the cholesteric helix.

In the focal conic state, the helical axes are randomly arranged and the texture shows light scattering because of the discontinuous spatial variations of the refractive indices at the domain boundaries.

Both planar and focal conic configurations are typically stable in the absence of external electric field. The effect of electric-field-driven textural transitions between planar and focal conic states forms the basis of operation of CLC displays, wherein when the texture of the CLC is switched from the planar to the focal conic texture, the Bragg reflection disappears and the CLC scatters the incident light due to the helical axes being randomly distributed.

However, the switching between the states is typically achieved only through the homeotropic state, where the cholesteric helix is completely unwound by a dielectric coupling between LC molecules with positive dielectric anisotropy ($\Delta\varepsilon > 0$) and a vertical electric field.

Conventionally, CLC switching from the planar state to the focal conic state is induced by a pulse of an AC square wave. When a voltage beyond a critical value is applied, the CLC will switch into the homeotropic state. Subsequent transition to the planar state can be achieved if the field is turned off quickly. However, if the voltage is turned off slowly, the homeotropic state of the CLC can be changed to focal conic state. In this driving scheme, the transition from the focal conic to the planar state is accomplished through an intermediate homeotropic state.

WO 92/19695 and US 5,384,067 describe, for example, a PSCT display containing a CLC medium having positive dielectric anisotropy and up to 10% by weight of a phase-separated polymer network which is dispersed in the liquid-crystal material. US 5,453,863 describes, for example, an SSCT display containing a polymer-free CLC medium having positive dielectric anisotropy.

The planar alignment of the CLC medium in the initial state, i.e. before application of a voltage, is achieved in SSCT displays by, for example, surface treatment of the cell walls. In PSCT displays, the CLC medium additionally

comprises a phase-separated polymer or polymer network which stabilises the structure of the CLC medium in the respective addressed state.

For PSCT systems typically a small amount of reactive, i.e. polymerisable monomer, e.g. 1%, is dispersed in the CLC and polymerised in the liquid crystal phase to form anisotropic polymer networks. The formed polymer network has an aligning effect on the LC. Depending on the cholesteric pitch, polymerisation condition and structure of the polymer network, normal- and reverse-mode polymer-stabilized chiral nematic displays can be produced.

SSCT and PSCT displays are bistable, i.e. the respective state is retained after the electric field has been switched off and is only converted back into the initial state by reapplication of a field, wherein a short voltage pulse is sufficient. By contrast, in electro-optical displays such as TN or STN displays the LC medium in an addressed pixel immediately returns to the initial state after the electric field has been switched off, meaning that maintenance of the addressing voltage is necessary for durable production of a pixel.

Such properties, in particular bistability, are not only useful in CLC displays, but also in, for example, polarizer-free electro-optical devices such as electrically switchable privacy windows and light shutters.

In US 5,570,216 polymer stabilized bistable cholesteric liquid crystal displays are described, wherein the polymer network, which anchors the LC molecules in both the active and the inactive areas, locks the inactive areas in a transparent state.

SSCT and PSCT displays generally do not require backlighting. In the planar state, the CLC medium in a pixel exhibits selective light reflection of a certain wavelength in accordance with the above equation (1), meaning that the pixel appears in the corresponding reflection colour, for example in front of a black background. The reflection colour disappears on changing into the focal conic, scattering or homeotropic transparent state.

For the above-mentioned reasons, CLC displays have significantly lower power consumption compared with TN or STN displays. In addition, they exhibit only slight viewing-angle dependence or none at all in the scattering state. Moreover, they do not require active-matrix addressing as in the case of TN displays, but instead can be operated in the simpler multiplex or passive-matrix mode.

A CLC medium for the above-mentioned displays can be prepared, for example, by doping a nematic LC medium with a chiral dopant having a high twisting power. The pitch p of the induced cholesteric helix is then given by the concentration c and the helical twisting power HTP of the chiral dopant in accordance with equation (2):

$$p = (HTP\ c)^{-1} \qquad (2)$$

It is also possible to use two or more dopants, for example in order to compensate for the temperature dependence of the HTP of the individual dopants and thus to achieve small temperature dependence of the helix pitch and the reflection wavelength of the CLC medium. For the total HTP ($HTP_{total}$) then approximately equation (3) holds:

$$HTP_{total} = \sum_i c_i\, HTP_i \qquad (3)$$

wherein $c_i$ is the concentration of each individual dopant and $HTP_i$ is the helical twisting power of each individual dopant.

CLC materials for use in the above-mentioned displays should typically have good chemical and thermal stability and good stability to electric fields and electromagnetic radiation. Furthermore, the liquid-crystal materials should have a broad cholesteric liquid crystal phase having a high clearing point, sufficiently high birefringence, high positive dielectric anisotropy and low rotational viscosity.

In CLC displays electrodes are generally disposed such that in the CLC medium both active areas or regions are formed which are addressable by an electric field as well as inactive areas or regions are formed which are non-addressed, such as areas between addressable pixels. A problem leading to a degradation in the contrast can arise when the state in the inactive areas is not or is only poorly controlled.

This problem can be overcome by applying a so-called black mask. However, this requires an additional manufacturing step and care must be taken to provide smooth mask surfaces and to avoid introducing contaminants.

As described in e.g. US 6,285,434, for multi-colour CLC displays independent cells can be formed by providing partitions between the cells. In this case, in a subsequent step the cells are selectively filled or injected with the CLC showing the desired colour, for example with CLC media respectively having red, green and blue colours.

WO 2010/022891 A1, WO 2011/137986 A1, WO 2015/101405 A1, WO 2014/169985 A1, WO 2013/156113 A1, WO 2013/034219 A1 and EP 2 568 032 A2 describe chiral liquid crystalline media encapsulated by or respectively stabilized by a polymer.

There is still a need in the art for reflective LC displays which exhibit favourable contrast, while providing a liquid crystalline medium having suitable properties such as a large working-temperature range, short response times, a low threshold voltage, small temperature dependence of the reflection wavelength and in particular high values of the

birefringence.

An object of the present invention is therefore to provide improved composite systems, electro-optical switching elements and LC displays which exhibit favourable contrast, while further providing additional favourable characteristics such as improved mechanical stability.

Moreover, it is an object to provide mesogenic media which are useful in such systems, elements and displays, and which allow favourable performance in the production thereof. In particular, it is an object to provide mesogenic media having suitably high $\Delta\varepsilon$ and high electrical resistance as well as suitably high $\Delta n$ and favourable values of the electro-optical parameters, while furthermore particularly providing relatively low rotational viscosity and favourable reliability, broad and stable LC, in particular chiral nematic, phase ranges, low melting points and a relatively high clearing point, and a suitably high voltage holding ratio, and which in particular can give a suitably low threshold voltage and improved low-temperature behaviour.

It is a further object to provide an improved method for preparing such composite systems, electro-optical switching elements and LC displays, wherein the method suitably and efficiently provides ease of fabrication and leads to favourable characteristics of the systems, elements and LC displays. Further objects of the present invention are immediately evident to the person skilled in the art from the following detailed description.

The objects are solved by the subject-matter defined in the independent claims, while preferred embodiments are set forth in the respective dependent claims and are further described below.

The present invention in particular provides the following items including main aspects, preferred embodiments and particular features, which respectively alone and in combination contribute to solving the above object and eventually provide additional advantages.

A first aspect of the present invention provides a liquid-crystalline medium according to claim 1, comprising

- one or more mesogenic compounds selected from the group of compounds of formulae I and II

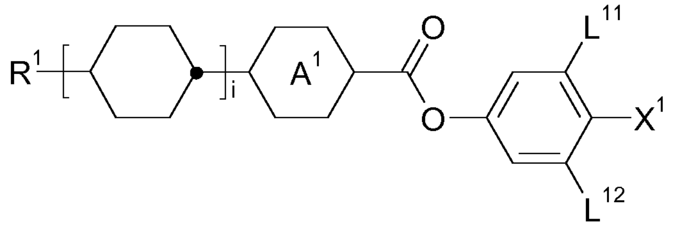

I

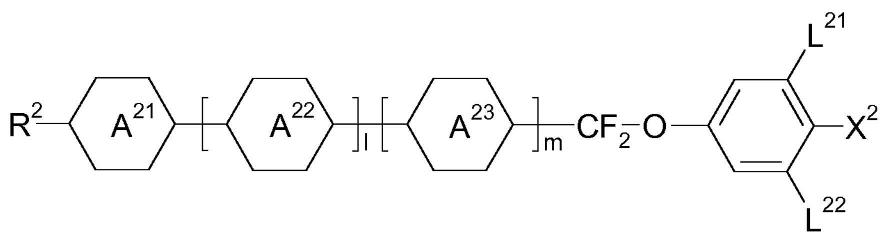

II

wherein

| | |
|---|---|
| $R^1$ and $R^2$ | are, independently of each other, alkyl, alkoxy, fluorinated alkyl or fluorinated alkoxy with 1 to 12 C atoms, alkenyl, alkenyloxy, alkoxyalkyl, fluorinated alkenyl or fluorinated alkenyloxy with 2 to 12 C atoms, |
| $L^{11}$, $L^{12}$, $L^{21}$ and $L^{22}$ | are, independently of each other, H or F, preferably F, |

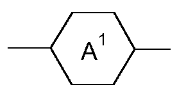

is

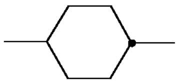, 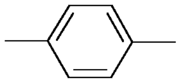 or 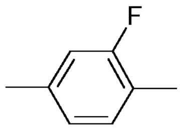,

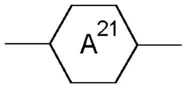

to

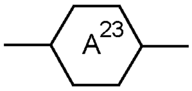

are, independently of each other,

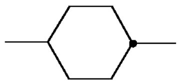, 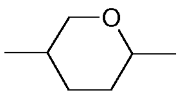, 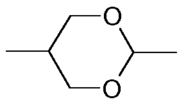,

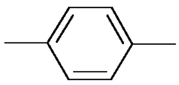, 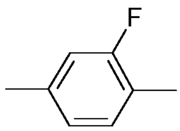, 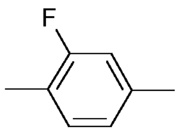

or

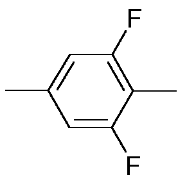,

| | |
|---|---|
| $X^1$ | is CN or NCS, preferably CN, |
| $X^2$ | is halogen, preferably F, halogenated, preferably fluorinated, alkyl or alkoxy with 1 to 3 C atoms, preferably $CF_3$ or $OCF_3$, or halogenated, preferably fluorinated, alkenyl or alkenyloxy with 2 or 3 C atoms, and |
| i, l and m | are, independently of each other, 0 or 1, |

- one or more chiral compounds, and
- one or more polymerisable compounds,

wherein the one or more polymerisable compounds are present in an amount, based on the overall contents of the medium, of 2.0% or more by weight, and wherein the one or more polymerisable compounds comprise at least one compound which contains a cycloalkyl group selected from unsubstituted or substituted bridged bicyclic rings and unsubstituted or substituted adamantyl.

It is preferred that the one or more chiral compounds are present in a concentration such that the medium exhibits a selective reflection with a wavelength in the near UV or in the visible range of the electromagnetic spectrum.

It has surprisingly been found that by providing the medium according to the invention a favourable combination of suitable and advantageous properties and characteristics is obtainable. In particular, the provided mesogenic media have suitably high $\Delta\varepsilon$ and high electrical resistance as well as suitably high $\Delta n$ and favourable values of the electro-optical parameters. Furthermore, a relatively low rotational viscosity and favourable reliability, broad and stable LC, in particular chiral nematic, phase ranges, low melting points and a relatively high clearing point, and a suitably high voltage holding ratio can be obtained for the medium, which in particular can also give a suitably low threshold voltage and improved low-temperature behaviour.

At the same time the provided mesogenic media are useful in the systems, elements and displays, in particular reflective displays, according to the invention, while furthermore allowing favourable performance in the production thereof in accordance with the present production method described below.

Surprisingly, the medium according to the invention is particularly suited to produce a composite system by polymerisation of the polymerisable constituents contained in the medium, wherein a two-component system, favourably and preferably a two-phase system is obtained or respectively obtainable. In particular, a system can advantageously be prepared, preferably prepared in situ, wherein a low molecular weight component is provided which contains one or more mesogenic compounds according to the invention and one or more chiral compounds and which has favourable electro-optical, physical and chemical properties suitable for LC displays, preferably reflective displays, and which preferably exhibits a selective reflection with a wavelength in the near UV or in the visible range of the electromagnetic spectrum. At the same time a polymeric component comprising one or more polymeric structures can be prepared from the medium, wherein the one or more polymeric structures are obtained by or respectively obtainable from polymerising the one or more polymerisable compounds as provided in the medium. In particular, the medium can advantageously be subjected to spatially selective polymerisation, wherein the resulting components become arranged in separate phases or even in separate regions. In this respect the formed polymer has suitably low solubility in the low molecular weight component.

In another aspect according to the invention there is thus provided a composite system, in particular a chiral composite system and preferably a spatially distinct two-phase system, obtained from or respectively obtainable from the medium according to the invention by polymerising the one or more polymerisable constituents contained in the medium, wherein the system comprises a low molecular weight component, which preferably is a low molecular weight phase, comprising the one or more mesogenic compounds selected from the group of compounds of formulae I and II as set forth above and below and the one or more chiral compounds as set forth above and below, and wherein this component preferably exhibits a selective reflection with a wavelength in the near UV or in the visible range of the electromagnetic spectrum, and wherein the system further comprises a polymeric component, which preferably is a polymeric phase separate from the low molecular weight component, wherein the polymeric component comprises one or more polymeric structures obtained by or respectively obtainable from polymerising the one or more polymerisable compounds.

It has surprisingly been found that according to the present invention a system can be provided with advantageous electro-optical as well as mechanical properties, wherein the system can particularly favourably be used in light modulation elements and LC displays, preferably in reflective CLC displays. Therein the two components can favourably be provided as two chemically and spatially distinct phases.

In a further aspect of the present invention a light modulation element, in particular an electro-optical switching element and a liquid crystal mirror, for example an LC mirror for automotive applications, is provided, which comprises the composite system according to the invention and at least one substrate, preferably two opposing substrates, wherein the components are supported by the at least one substrate and are separated such that the polymeric component comprising the one or more polymeric structures forms polymeric walls to contain the low molecular weight component in compartments, i.e. in separate or individual regions or volumes. The dimensions of these compartments is determined and set by the pattern used for the spatially selective polymerisation.

According to the invention elements can thus be provided which exhibit significant benefits, for example in that the walls, preferably formed by an in situ polymerisation process as described above, can contribute to mechanical stability giving improved pressure insensitivity and cell gap stability, which in turn can lead to improved reliability and colour stability, especially in the reflective mode. Moreover, by providing walls for containment as well as for further mechanical support, the substrate may be varied more freely, in particular enabling the possibility of using flexible substrates.

When the substrate comprises electrodes to electrically address the low molecular weight component and the polymeric walls are based on the surface of the substrate, wherein the walls are at least partially formed in electrically inactive regions, the transmission or respectively reflection of the inactive area can favourably be controlled or set such that the contrast between the active and inactive areas can be advantageously improved. In an embodiment the inactive areas are substantially covered by polymer walls, more preferably fully covered by polymer walls.

In this respect, active area means a region wherein the mesogenic medium can be addressed and switched by an electric field. By contrast, inactive areas, also called electrically inactive regions herein, are regions which are

non-addressable or respectively non-switchable, i.e. regions where there is no electric field or no sufficient electric field to switch the state or respectively phase of the medium, that is regions in which a given threshold voltage cannot be reached or exceeded, for example inter-pixel regions.

In another aspect of the invention a liquid crystal display is provided which comprises the composite system or the light modulation element according to the invention.

By using the composite system or the light modulation element, which favourably are obtainable from the LC medium as presently provided, it was surprisingly found that reflective LC displays can be provided which exhibit favourable contrast, while at the same time having a liquid crystalline medium exhibiting suitable properties such as a large working-temperature range, short response times, a low threshold voltage, low temperature dependence of the reflection wavelength and in particular high values of the birefringence.

Overall this can lead to displays with improved mechanical stability as well as electro-optical performance, e.g. in terms of readability and especially sunlight readability as well as low power consumption, while the use of colour filters and crossed polarizers may be avoided.

It has surprisingly been found that the improved systems, elements and displays according to the invention can be obtained by providing the chiral liquid-crystalline medium as described above and below and polymerising the polymerisable constituent(s) contained in the medium such that separate polymeric structures are formed, which are preferably formed in situ and arranged as polymeric walls. Advantageously, the mesogenic medium according to the invention provides benefits both during the production process as well as in the produced devices.

In a further aspect the invention therefore provides a process for preparing a composite system and/or a light modulation element, preferably a light modulation element, more preferably an electro-optical switching element, wherein the process comprises the following steps:

(a) providing the medium as described above and below as a layer, preferably a layer having a thickness of 20 μm or less, more preferably of 10 μm or less, and even more preferably from 5 μm or more to 8 μm or less, and

(b) carrying out spatially selective polymerisation of the one or more polymerisable compounds contained in the medium as provided in step (a), wherein the polymerisation is carried out in defined regions of the layer and wherein polymeric structures are obtained in the defined regions.

The method is unexpectedly useful in preparing the composite systems, electro-optical switching elements, LC mirrors, and LC displays according to the invention, wherein the method suitably and efficiently provides ease of fabrication and leads to favourable characteristics of the systems, elements and LC displays.

Without limiting the present invention thereby, in the following the invention is illustrated by the detailed description of the aspects, embodiments and particular features, and particular embodiments are described in more detail.

According to the invention a chiral liquid-crystalline medium is provided which comprises one or more mesogenic compounds selected from the group of compounds of formulae I and II as set forth above and below, one or more chiral compounds, and one or more polymerisable compounds, wherein preferably the one or more chiral compounds are present in a concentration such that the medium exhibits a selective reflection with a wavelength in the near UV or in the visible range of the electromagnetic spectrum, and wherein the one or more polymerisable compounds are present in an amount, based on the overall contents of the medium, of at least 2% by weight.

The term "liquid crystal" (LC) relates to materials or media having liquid-crystalline mesophases in some temperature ranges (thermotropic LCs) or in some concentration ranges in solutions (lyotropic LCs), preferably to thermotropic LCs, in particular nematic LCs, and more preferably to chiral nematic or respectively cholesteric media. They contain mesogenic compounds.

The terms "mesogenic compound" and "liquid crystal compound" mean a compound comprising one or more calamitic (rod- or board/lath-shaped) or discotic (disc-shaped) mesogenic groups, i.e. groups with the ability to induce liquid-crystalline phase or mesophase behaviour.

The LC compounds or materials and the mesogenic compounds or materials comprising mesogenic groups do not necessarily have to exhibit a liquid-crystalline phase themselves. It is also possible that they show liquid-crystalline phase behaviour only in mixtures with other compounds. This includes low-molecular-weight non-reactive liquid-crystalline compounds, reactive or polymerizable liquid-crystalline compounds, and liquid-crystalline polymers.

For the sake of simplicity, the term "liquid crystal" material or medium is used for both liquid crystal materials or media and mesogenic materials or media, and vice versa, and the term "mesogen" is used for the mesogenic groups of the material.

The term "non-mesogenic compound or material" means a compound or material that does not contain a mesogenic group as defined above.

The term "chiral" in general is used to describe an object that is non-superimposable on its mirror image. By

contrast, "achiral" (non-chiral) objects are objects that are identical to their mirror image. The medium according to the invention exhibits chirality. This can be achieved by providing cholesteric liquid crystals, which are also known as chiral nematic liquid crystals. The terms chiral nematic and cholesteric are used synonymously herein, unless explicitly stated otherwise.

The chiral LC medium according to the invention preferably is a CLC medium with short helical pitch for use in improved reflective LCDs, more preferably with high optical anisotropy and with a suitably high dielectric anisotropy especially for advanced applications.

The inventive chiral LC medium contains one or more chiral compounds, and the medium preferably exhibits a selective reflection with a wavelength in the near UV or in the visible range of the electromagnetic spectrum. More preferably, the cholesteric pitch of the medium is selected such that the wavelength of selective reflection is in the visible range of the electromagnetic spectrum, i.e. in the range from 400 nm to 800 nm. In an embodiment, the medium has a pitch length of ≤ 1 μm, i.e. of 1 μm or less. Chiral dopants and their concentrations can be provided such that the cholesteric pitch of the medium is suitably set or adjusted.

In a preferred embodiment, the liquid crystal medium contains one or more chiral dopants. The chiral dopants preferably have a high absolute value of the HTP and can generally be added in relatively low concentrations to mesogenic base mixtures and have good solubility in the achiral component. If two or more chiral compounds are employed, they may have the same or opposite direction of rotation and the same or opposite temperature dependence of the twist.

Particular preference is given to chiral compounds having an absolute value of the helical twisting power (HTP) of 20 $\mu m^{-1}$ or more, more preferably of 40 $\mu m^{-1}$ or more, even more preferably of 60 $\mu m^{-1}$ or more, and most preferably in the range of 80 $\mu m^{-1}$ or more to 260 $\mu m^{-1}$ or less, preferably in the commercial liquid-crystal mixture MLC-6828 from Merck KGaA.

In a preferred embodiment of the present invention, the chiral component consists of two or more chiral compounds which all have the same sign of the HTP. The temperature dependence of the HTP of the individual compounds may be high or low. The temperature dependence of the pitch of the medium can be compensated by mixing compounds having different temperature dependence of the HTP in corresponding ratios.

Suitable chiral dopants are known in the art, some of which are commercially available, such as, for example, cholesteryl nonanoate, R/S-811, R/S-1011, R/S-2011, R/S-3011, R/S-4011, B(OC)2C*H-C-3 or CB15 (all Merck KGaA, Darmstadt, Germany).

Particularly suitable chiral dopants are compounds which contain one or more chiral radicals and one or more mesogenic groups, or one or more aromatic or alicyclic groups which form a mesogenic group with the chiral radical.

Suitable chiral radicals are, for example, chiral branched hydrocarbon radicals, chiral ethanediols, binaphthols or dioxolanes, furthermore mono- or polyvalent chiral radicals selected from the group consisting of sugar derivatives, sugar alcohols, sugar acids, lactic acids, chiral substituted glycols, steroid derivatives, terpene derivatives, amino acids or sequences of a few, preferably 1-5, amino acids.

Preferred chiral radicals are sugar derivatives, such as glucose, mannose, galactose, fructose, arabinose and dextrose; sugar alcohols, such as, for example, sorbitol, mannitol, iditol, galactitol or anhydro derivatives thereof, in particular dianhydrohexitols, such as dianhydrosorbide (1,4:3,6-dianhydro-D-sorbide, isosorbide), dianhydromannitol (isosorbitol) or dianhydroiditol (isoiditol); sugar acids, such as, for example, gluconic acid, gulonic acid and ketogulonic acid; chiral substituted glycol radicals, such as, for example, mono- or oligoethylene or propylene glycols, wherein one or more $CH_2$ groups are substituted by alkyl or alkoxy; amino acids, such as, for example, alanine, valine, phenylglycine or phenylalanine, or sequences of from 2 to 5 of these amino acids; steroid derivatives, such as, for example, cholesteryl or cholic acid radicals; terpene derivatives, such as, for example, menthyl, neomenthyl, campheyl, pineyl, terpineyl, isolongifolyl, fenchyl, carreyl, myrthenyl, nopyl, geraniyl, linaloyl, neryl, citronellyl or dihydrocitronellyl.

Suitable chiral radicals and mesogenic chiral compounds are described, for example, in DE 34 25 503, DE 35 34 777, DE 35 34 778, DE 35 34 779 and DE 35 34 780, DE 43 42 280, EP 01 038 941 and DE 195 41 820.

Preferable chiral compounds used according to the present invention are selected from the following groups of compounds.

In an embodiment preference is given to dopants selected from the group consisting of compounds of the following formulae A-I to A-III:

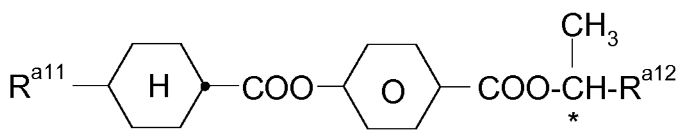

A-I

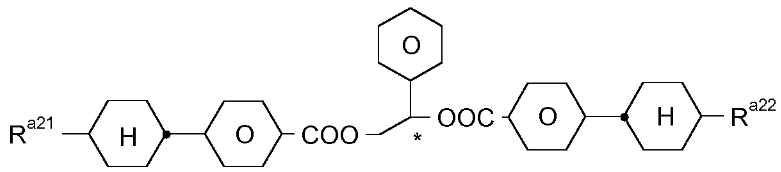

A-II

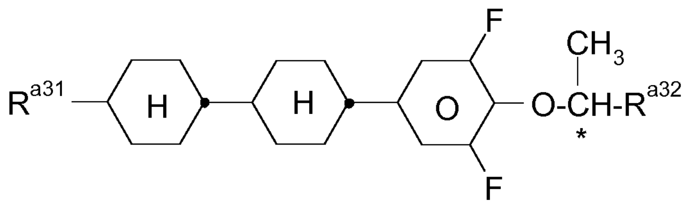

A-III

in which

$R^{a11}$ and $R^{a12}$, independently of one another, are alkyl, oxaalkyl or alkenyl having from 2 to 9, preferably up to 7, carbon atoms, and $R^{a11}$ is alternatively methyl or alkoxy having from 1 to 9 carbon atoms, preferably both are alkyl, preferably n-alkyl,

$R^{a21}$ and $R^{a22}$, independently of one another, are alkyl or alkoxy having from 1 to 9, preferably up to 7, carbon atoms, oxaalkyl, alkenyl or alkenyloxy having from 2 to 9, preferably up to 7, carbon atoms, preferably both are alkyl, preferably n-alkyl,

$R^{a31}$ and $R^{a32}$, independently of one another, are alkyl, oxaalkyl or alkenyl having from 2 to 9, preferably up to 7, carbon atoms, and $R^{a11}$ is alternatively methyl or alkoxy having from 1 to 9 carbon atoms, preferably both are alkyl, preferably n-alkyl.

Particular preference is given to chiral dopants selected from the group consisting of the compounds of the following formulae:

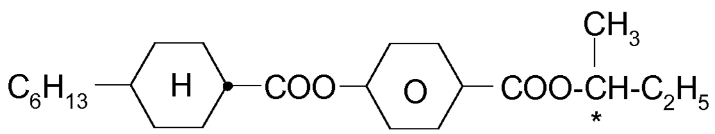

A-I-1

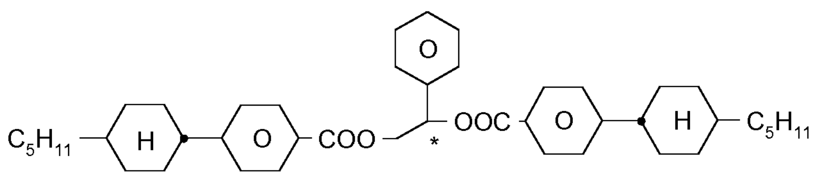

A-II-1

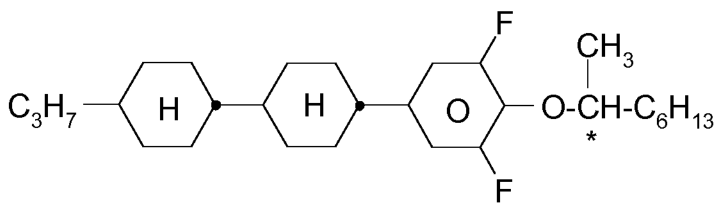

A-III-1

Further preferred dopants are derivatives of isosorbide, isomannitol or isoiditol of the following formula A-IV

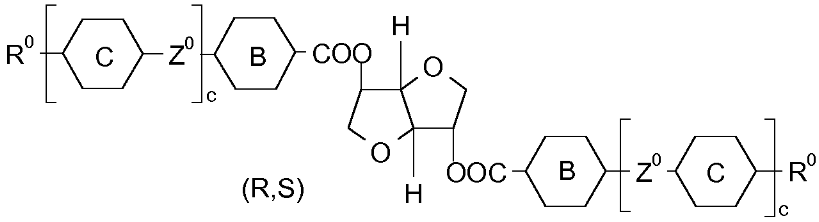

(R,S)

A-IV

in which the group

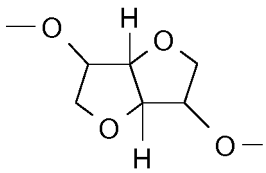

is

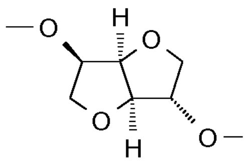

(dianhydrosorbitol),

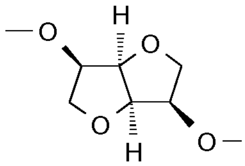

(dianhydromannitol),

or

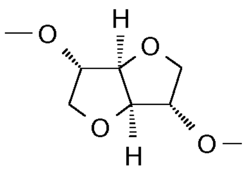

(dianhydroiditol),

preferably dianhydrosorbitol,
and chiral ethanediols, such as, for example, diphenylethanediol (hydrobenzoin), in particular mesogenic hydrobenzoin derivatives of the following formula A-V

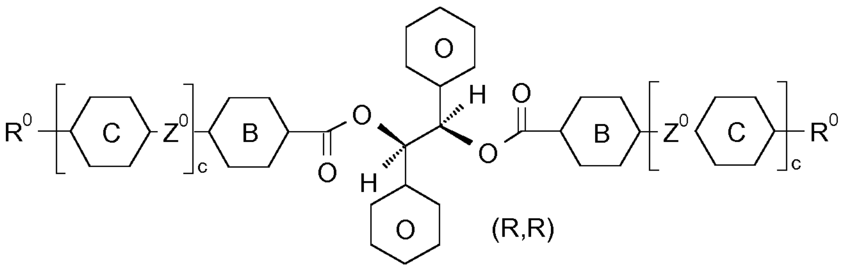

(R,R)

A-V

including the (R,S), (S,R), (R,R) and (S,S) enantiomers, which are not shown,

in which

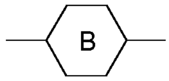

and

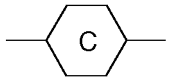

are each, independently of one another, 1,4-phenylene, which may also be mono-, di- or trisubstituted by L, or 1,4-cyclohexylene,

L is H, F, Cl, CN or optionally halogenated alkyl, alkoxy, alkylcarbonyl, alkoxycarbonyl or alkoxycarbonyloxy having 1-7 carbon atoms,

c is 0 or 1,

$Z^0$ is -COO-, -OCO-, -CH2CH2- or a single bond, and

$R^0$ is alkyl, alkoxy, alkylcarbonyl, alkoxycarbonyl or alkylcarbonyloxy having 1-12 carbon atoms.

Compounds of formula A-IV are described in WO 98/00428. Compounds of the formula A-V are described in GB-A-2,328,207.

In another embodiment particularly preferred chiral dopants are chiral binaphthyl derivatives, as described in WO 02/94805, chiral binaphthol acetal derivatives, as described in WO 02/34739, chiral TADDOL derivatives, as described in WO 02/06265, and chiral dopants having at least one fluorinated bridging group and a terminal or central chiral group, as described in WO 02/06196 and WO 02/06195.

Particular preference is given to chiral compounds of formula A-VI

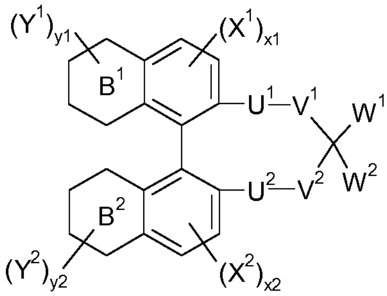

A-VI

in which

$X^1$, $X^2$, $Y^1$ and $Y^2$ are each, independently of one another, F, Cl, Br, I, CN, SCN, SF5, straight-chain or branched alkyl having from 1 to 25 carbon atoms, which may be monosubstituted or polysubstituted by F, Cl, Br, I or CN and in which, in addition, one or more non-adjacent $CH_2$ groups may each, independently of one another, be replaced by -O-, -S-, -NH-, $NR^0$-, -CO-, -COO-, -OCO-, -OCOO-, -S-CO-, -CO-S-, -CH=CH- or -C≡C- in such a way that O and/or S atoms are not bonded directly to one another, a polymerisable group or cycloalkyl or aryl having up to 20 carbon atoms, which may optionally be monosubstituted or polysubstituted by halogen, preferably F, or by a polymerisable group,

$x^1$ and $x^2$ are each, independently of one another, 0, 1 or 2,

$y^1$ and $y^2$ are each, independently of one another, 0, 1, 2, 3 or 4,

$B^1$ and $B^2$ are each, independently of one another, an aromatic or partially or fully saturated aliphatic six-membered ring in which one or more CH groups may be replaced by N atoms and one or more non-adjacent $CH_2$ groups may be replaced by O and/or S,

$W^1$ and $W^2$ are each, independently of one another, $-Z^1-A^1-(Z^2-A^2)_m-R$, and one of the two is alternatively $R^1$ or $A^3$, but both are not simultaneously H, or

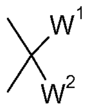

is

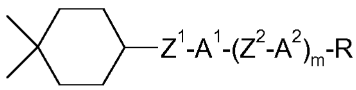

or

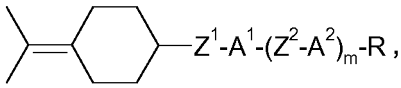

$U^1$ and $U^2$ are each, independently of one another, $CH_2$, O, S, CO or CS,

$V^1$ and $V^2$ are each, independently of one another, $(CH_2)_n$, in which from one to four non-adjacent $CH_2$ groups may be replaced by O and/or S, and one of $V^1$ and $V^2$ and, in the case where

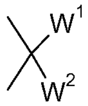

is

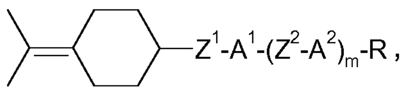

both are a single bond,

$Z^1$ and $Z^2$ are each, independently of one another, -O-, -S-, -CO-, -COO-, -OCO-, -O-COO-, $-CO-NR^0-$, $-NR^0-CO-$, $-O-CH_2-$, $-CH_2-O-$, $-S-CH_2-$, $-CH_2-S-$, $-CF_2-O-$, $-O-CF_2-$, $-CF_2-S-$, $-S-CF_2-$, $-CH_2-CH_2-$, $-CF_2-CH_2-$, $-CH_2-CF_2-$, $-CF_2-CF_2-$, -CH=N-, -N=CH-, -N=N-, -CH=CH-, -CF=CH-, -CH=CF-, -CF=CF-, -C≡C-, a combination of two of these groups, where no two O and/or S and/or N atoms are bonded directly to one another, preferably -CH=CH-COO-, or -COO-CH=CH-, or a single bond,

$A^1$, $A^2$ and $A^3$ are each, independently of one another, 1,4-phenylene, in which one or two non-adjacent CH groups may be replaced by N, 1,4-cyclohexylene, in which one or two non-adjacent $CH_2$ groups may be replaced by O and/or S, 1,3-dioxolane-4,5-diyl, 1,4-cyclohexenylene, 1,4-bicyclo[2.2.2]octylene, piperidine-1,4-diyl, naphthalene-2,6-diyl, decahydronaphthalene-2,6-diyl or 1,2,3,4-tetrahydronaphthalene-2,6-diyl, where each of these groups may be monosubstituted or polysubstituted by L, and in addition $A^1$ is a single bond,

L is a halogen atom, preferably F, CN, $NO_2$, alkyl, alkoxy, alkylcarbonyl, alkoxycarbonyl or alkoxycarbonyloxy having 1-7 carbon atoms, in which one or more H atoms may be replaced by F or Cl,

m is in each case, independently, 0, 1, 2 or 3, and

R and $R^1$ are each, independently of one another, H, F, Cl, Br, I, CN, SCN, SF5, straight-chain or branched alkyl having from 1 or 3 to 25 carbon atoms respectively, which may optionally be monosubstituted or polysubstituted by F, Cl, Br, I or CN, and in which one or more non-adjacent $CH_2$ groups may be replaced by -O-, -S-, -NH-, -$NR^0$-, -CO-, -COO-, -OCO-, -O-COO-, -S-CO-, -CO-S-, -CH=CH- or -C≡C-, where no two O and/or S atoms are bonded directly to one another, or a polymerisable group.

Particular preference is given to chiral binaphthyl derivatives of the formula A-VI-1

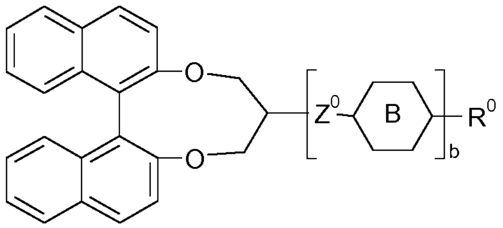

A-VI-1

in particular those selected from the following formulae A-VI-1a to A-VI-1c:

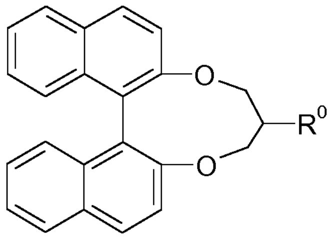

A-VI-1a

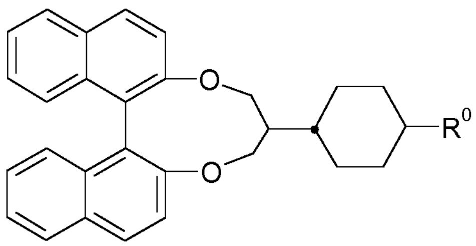

A-VI-1b

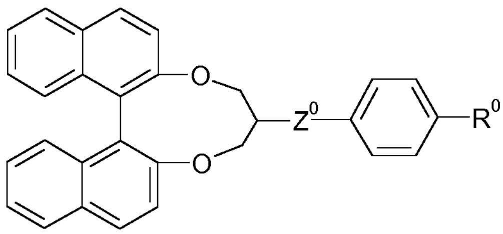

A-VI-1c

in which B and $Z^0$ are as defined for formula A-IV, and $Z^0$ more preferably is -OCO- or a single bond,

$R^0$ is as defined for formula A-IV or H or alkyl having from 1 to 4 carbon atoms, and

b is 0, 1 or 2.

Particular preference is furthermore given to chiral binaphthyl derivatives of the formula A-VI-2

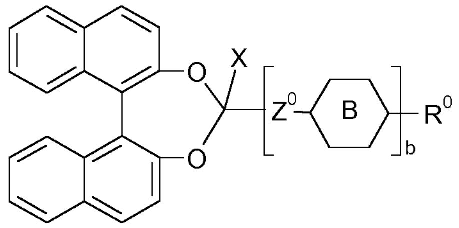

A-VI-2

in particular to those selected from the following formulae A-VI-2a to A-VI-2f:

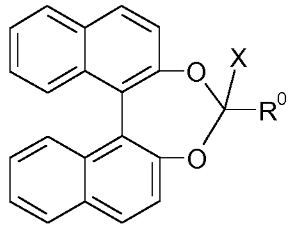

A-VI-2a

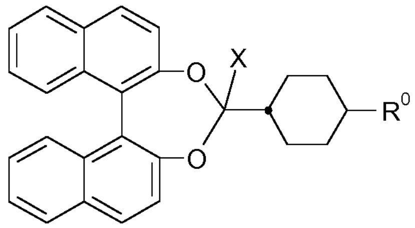

A-VI-2b

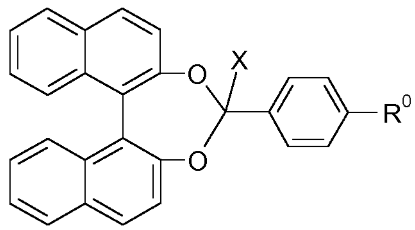

A-VI-2c

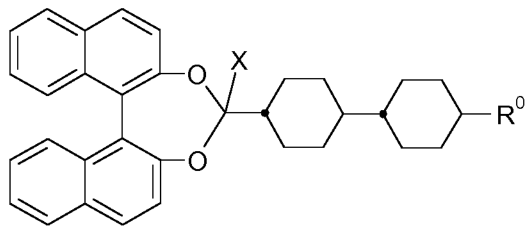

A-VI-2d

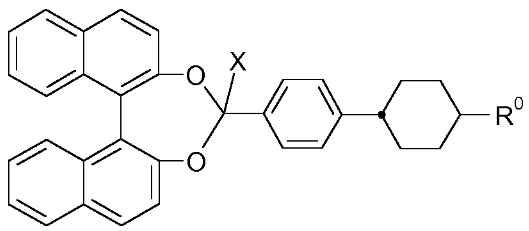

A-VI-2e

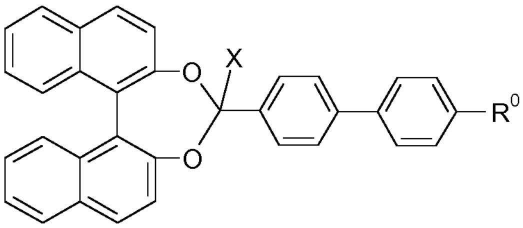

A-VI-2f

in which $R^0$ is as defined for formula A-VI, and X is H, F, Cl, CN or $R^0$, preferably F.

In a particularly preferred embodiment, the chiral medium according to the invention comprises one or more compounds of formula R-5011 and S-5011. In an embodiment the medium contains R-5011. In another embodiment the medium contains S-5011.

According to the invention the liquid-crystalline medium comprises one or more mesogenic compounds selected from the group of compounds of formulae I and II as set forth above and below. In an embodiment the medium contains one or more mesogenic compounds of formula I. In another embodiment the medium contains one or more mesogenic compounds of formula II. In yet another embodiment the medium contains one or more mesogenic compounds of formula I and one or more mesogenic compounds of formula II.

In a preferred embodiment, the chiral medium according to the invention further comprises one or more compounds of formula III

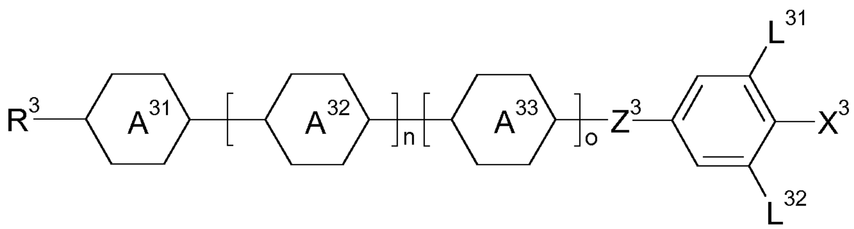

III

wherein

$R^3$ is alkyl, alkoxy, fluorinated alkyl or fluorinated alkoxy with 1 to 7 C atoms, alkenyl, alkenyloxy, alkoxyalkyl or fluorinated alkenyl with 2 to 7 C atoms, preferably is alkyl or alkenyl with 1 to 7 C atoms,

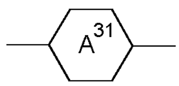

to

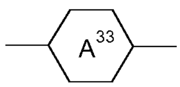

are, independently of each other,

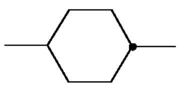 , 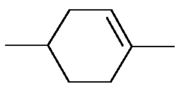 , 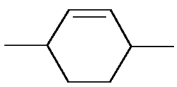 ,

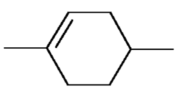 , 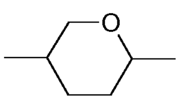 , 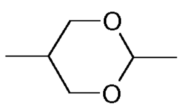 ,

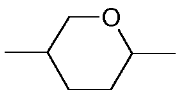, 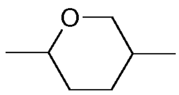, 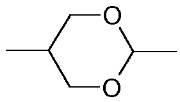,

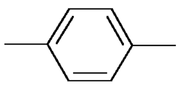, 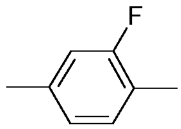, 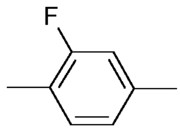,

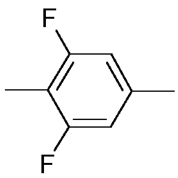 or 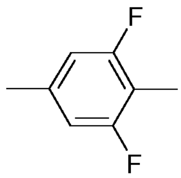,

preferably

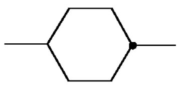, 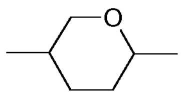, 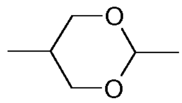,

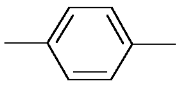, 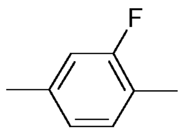, 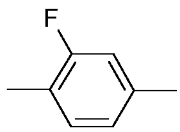,

or

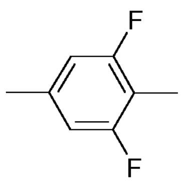,

$L^{31}$ and $L^{32}$, are, independently of each other, H or F, preferably $L^{31}$ is F,

$X^3$ is halogen, halogenated alkyl or alkoxy with 1 to 3 C atoms or halogenated alkenyl or alkenyloxy with 2 or 3 C atoms, preferably is F, Cl, $OCF_3$ or $CF_3$, more preferably is F, Cl or $-OCF_3$,

$Z^3$ is $-CH_2CH_2-$, $-CF_2CF_2-$, -COO-, *trans*- -CH=CH-, *trans*--CF=CF-, $-CH_2O-$ or a single bond, preferably $-CH_2CH_2-$, -COO-, *trans*- -CH=CH- or a single bond, and more preferably -COO-, *trans*- -CH=CH- or a single bond, and

n and o are, independently of each other, 0 or 1.

In one embodiment it is preferred that the medium additionally comprises one or more compounds selected from the group of formulae IV and V, preferably one or more compounds of each of them,

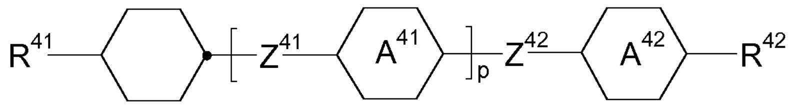 IV

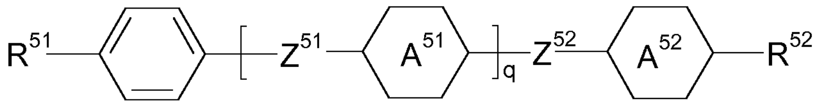 V

wherein

$R^{41}$, $R^{42}$, $R^{51}$ and $R^{52}$ independently of each other have the meaning given for $R^2$ under formula II above, preferably $R^{41}$ is alkyl and $R^{42}$ is alkyl or alkoxy or $R^{41}$ is alkenyl and $R^{42}$ is alkyl, preferably $R^{51}$ is alkyl and $R^{52}$ is alkyl or alkenyl or $R^{51}$ is alkenyl and $R^{52}$ is alkyl or alkenyl, more preferably alkyl,

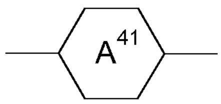 and 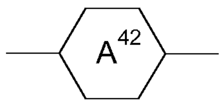

independently of each other and in case

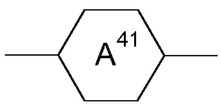

is present twice, also these independently of each other are

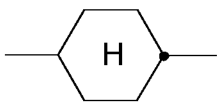, 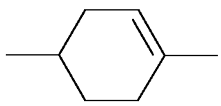, 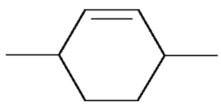,

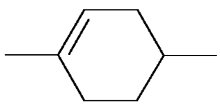, 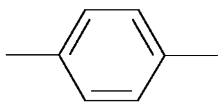, 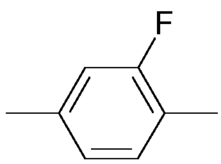,

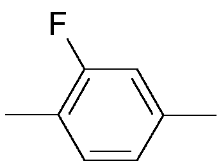, 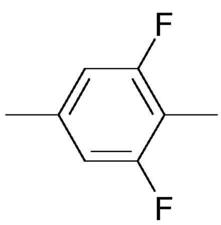, 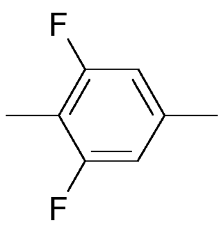

or

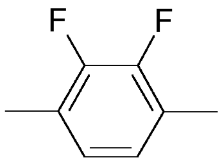

preferably at least one of

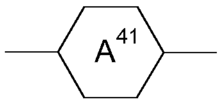

and

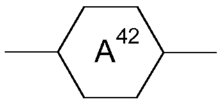

is

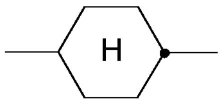

,

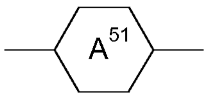

and

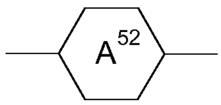

independently of each other and in case

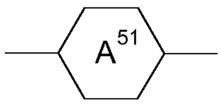

is present twice, also these independently of each other are

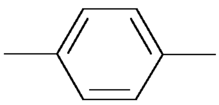

,

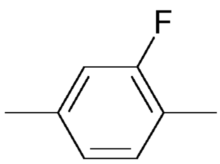

,

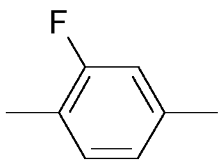

,

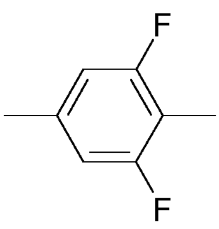

,

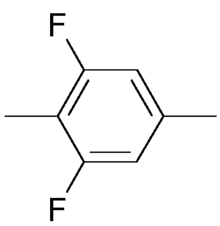

or

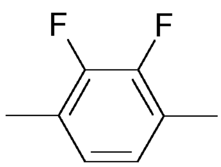

,

preferably at least one of

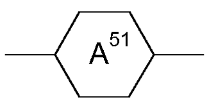

and

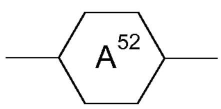

is

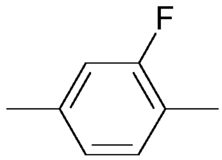 or 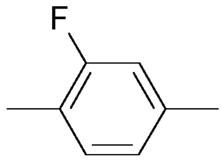 ,

$Z^{41}$, $Z^{42}$, $Z^{51}$ and $Z^{52}$ independently of each other, and in case $Z^{41}$ and/or $Z^{51}$ is/are present twice, also these independently of each other, are $-CH_2CH_2-$, -COO-, *trans*- -CH=CH-, *trans*- -CF=CF-, $-CH_2O-$, $-CF_2O-$,-C≡C- or a single bond, preferably at least one of $Z^{41}$ and $Z^{42}$ and at least one of $Z^{51}$ and $Z^{52}$ each is a single bond, and

p and q are, independently of each other, 0, 1 or 2,

wherein p preferably is 0 or 1.

The media preferably comprise one or more compounds of formula III, wherein n and o both are 1, $Z^3$ preferably is a single bond, and all rings are 1,4-phenylene, which independently of each other optionally are fluorinated once or twice, and/or one or more compounds of formula V, wherein q is 2 and $Z^{51}$ and $Z^{51}$ preferably are both a single bond.

In another embodiment the media according to the present invention further comprise one or more compounds of formula VI

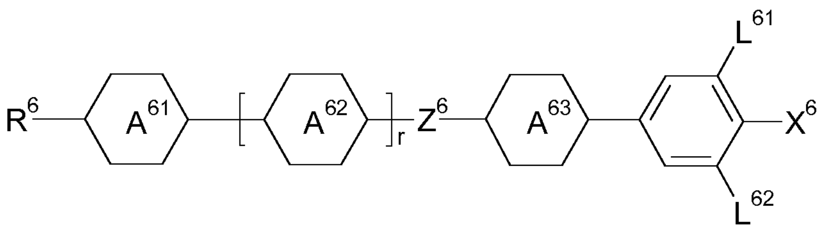

VI

wherein

$R^6$ is alkyl, alkoxy, fluorinated alkyl or fluorinated alkoxy with 1 to 7 C atoms, alkenyl, alkenyloxy, alkoxyalkyl or fluorinated alkenyl with 2 to 7 C atoms, preferably is alkyl with 1 to 7 C atoms or alkenyl with 2 to 7 C atoms,

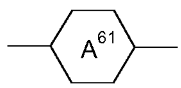

to

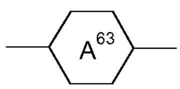

are, independently of each other,

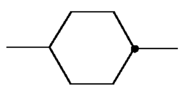 , 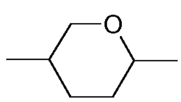 , 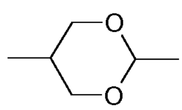 ,

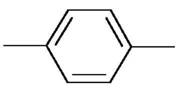 , 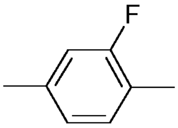 , 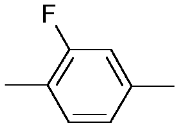

or

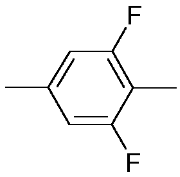 ,

$L^{61}$ and $L^{62}$ are, independently of each other, H or F, preferably $L^{61}$ is F,

$X^6$ is halogen, halogenated alkyl or alkoxy with 1 to 3 C atoms or halogenated alkenyl or alkenyloxy with 2 or 3 C atoms, preferably is F, Cl, $OCF_3$ or $CF_3$, more preferably is F, Cl or $OCF_3$,

$Z^6$ is $-CH_2CH_2-$, $-CF_2CF_2-$, -COO-, *trans*- -CH=CH-, *trans*--CF=CF- or $-CH_2O-$, preferably is $-CH_2CH_2-$, -COO- or trans- -CH=CH-, and more preferably is -COO- or $-CH_2CH_2-$, and

r is 0 or 1.

Many of the mesogenic compounds or mixtures thereof described above and below are commercially available. These compounds are either known or can be prepared by methods which are known *per se,* as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known *per se,* but are not mentioned here in greater detail.

According to the invention the chiral liquid-crystalline medium comprises one or more polymerisable compounds, wherein the one or more polymerisable compounds are present in an amount, based on the overall contents of the medium, of at least 2% by weight, preferably of at least 3% by weight, more preferably of at least 4% by weight, and even more preferably of at least 5% by weight.

Preferably, the one or more polymerisable compounds are contained in the medium in an amount, based on the overall contents of the medium, in the range from 2% by weight to 30% by weight.

The amount of provided polymerisable material should be sufficient to form the polymeric structures as desired, in particular the polymeric walls. However, the amount should also be sufficiently small to provide regions after the polymerisation in which substantially only or at least predominantly LC medium is contained. The amount of polymerisable constituent(s) can depend on the specific layout or design of the component or phase system, wherein *inter alia* area sizes of the active and inactive regions and polymeric wall or structure widths and lengths as well as wall density may play a role in determining and setting appropriate amounts of the one or more polymerisable compounds.

In a particularly preferred embodiment, the medium comprises the one or more polymerisable compounds in an amount, based on the overall contents of the medium, from 4% by weight to 20% by weight, more preferably from 5% by weight to 15% by weight.

In the medium according to the invention one or more polymerisable, curable or hardenable compounds are provided as the precursors for the polymeric structures or walls.

The polymerisable compounds have at least one polymerisable group. The polymerisable group is preferably selected from $CH_2=CW^1-COO-$,

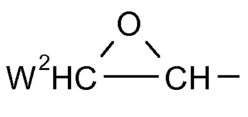 , 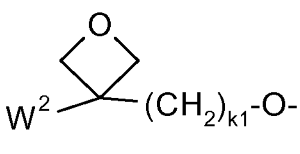

, $CH_2=CW^2-(O)_{k1}-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-$

$CH_2)_2N$-, HO-$CW^2W^3$-, HS-$CW^2W^3$-, $HW^2N$-, HO-$CW^2W^3$-NH-, $CH_2$=$CW^1$-CO-NH-, $CH_2$=CH-(COO)$_{k1}$-Phe-(O)$_{k2}$-, Phe-CH=CH-, HOOC-, OCN-, with $W^1$ being H, Cl, CN, phenyl or alkyl with 1 to 5 C atoms, in particular H, Cl or $CH_3$, $W^2$ and $W^3$ being independently of each other H or alkyl with 1 to 5 C atoms, in particular H, methyl, ethyl or n-propyl, Phe being 1,4-phenylene and $k_1$ and $k_2$ being independently of each other 0 or 1.

The polymerisable or reactive group is preferably selected from a vinyl group, an acrylate group, a methacrylate group, a fluoroacrylate group, an oxetane group or an epoxy group, especially preferably an acrylate group or a methacrylate group.

Preferably, the one or more polymerisable compounds are selected from acrylates, methacrylates, fluoroacrylates and vinyl acetate, wherein the composition more preferably further comprises one or more direactive and/or trireactive polymerisable compounds, preferably selected from diacrylates, dimethacrylates, triacrylates and trimethacrylates.

In an embodiment the one or more polymerisable compounds comprise polymerisable groups selected from one, two or more acrylate, methacrylate and vinyl acetate groups, more preferably one, two or more acrylate and/or methacrylate groups, wherein the compounds preferably are non-mesogenic compounds.

In a preferred embodiment the medium according to the invention comprises one or more monoacrylates. Particularly preferred monoreactive compounds are selected from methyl acrylate, ethyl acrylate, propyl acrylate, isopropyl acrylate, butyl acrylate, t-butyl acrylate, pentyl acrylate, hexyl acrylate, nonyl acrylate, 2-ethylhexyl acrylate, 2-hydroxyethyl acrylate, 2-hydroxy-butyl acrylate and isobornyl acrylate.

Additionally or alternatively the medium according to the invention preferably comprises one or more monomethacrylates. Particularly preferred monoreactive compounds are selected from methyl methacrylate, ethyl methacrylate, propyl methacrylate, ispropyl methacrylate, butyl methacrylate, t-butyl methacrylate, pentyl methacrylate, hexyl methacrylate, nonyl methacrylate, dodecyl methacrylate, 2-ethyl-hexyl methacrylate, 2-hydroxy-ethyl methacrylate, 2-hydroxy-butyl methacrylate, isobornyl methacrylate and 1-adamantyl methacrylate.

In an embodiment it is particularly preferred to use one or both, more preferably both, of 2-ethyl-hexyl acrylate and isobornyl methacrylate.

Alternatively or additionally reactive mesogens (RMs) or mesogenic monomers may be used.

Accordingly, in a preferred embodiment of the invention polymerisable compounds are selected from the compounds of the formula M

$$R^{Ma}\text{-}A^{M1}\text{-}(Z^{M1}\text{-}A^{M2})_{m1}\text{-}R^{Mb} \qquad M$$

in which the individual radicals are defined as follows:

| | |
|---|---|
| $R^{Ma}$ and $R^{Mb}$ | are each independently P, P-Sp-, H, F, Cl, Br, I, -CN, -$NO_2$, -NCO, -NCS, -OCN, -SCN, SF5 or straight-chain or branched alkyl having 1 to 25 carbon atoms, in which one or more non-adjacent $CH_2$ groups may each independently also be replaced by -C($R^0$)=C($R^{00}$)-, -C≡C-, -N($R^{00}$)-, -O-, -S-, -CO-, -CO-O-, -O-CO-, -O-CO-O-, in such a way that no oxygen and/or sulphur atoms are joined directly to one another, and in which one or more hydrogen atoms may also be replaced by F, Cl, Br, I, CN, P or P-Sp-, where preferably at least one of the $R^{Ma}$ and $R^{Mb}$ radicals is or contains a P or P-Sp- group, |
| preferably $R^{Ma}$ and $R^{Mb}$ | are each independently P, P-Sp-, H, halogen, $SF_5$, $NO_2$, an alkyl, alkenyl or alkynyl group, where preferably at least one of the $R^{Ma}$ and $R^{Mb}$ radicals is or contains a P or P-Sp- group, |
| P | is a polymerisable group, |
| Sp | is a spacer group or a single bond, |
| $A^{M1}$ and $A^{M2}$ | are each independently an aromatic, heteroaromatic, alicyclic or heterocyclic group, preferably having 4 to 25 ring atoms, preferably carbon atoms, which also comprises or may contain fused rings, and which may optionally be mono- or polysubstituted by L, |
| L | is P, P-Sp-, OH, $CH_2OH$, F, Cl, Br, I, -CN, -$NO_2$, -NCO,-NCS, -OCN, -SCN, -C(=O)N($R^x$)$_2$, -C(=O)$Y^1$, -C(=O)$R^x$, -N($R^x$)$_2$, optionally substituted silyl, optionally substituted aryl having 6 to 20 carbon atoms, or straight-chain or branched alkyl, alkoxy, alkylcarbonyl, alkoxycarbonyl, alkylcarbonyloxy or alkoxycarbonyloxy having 1 to 25 carbon atoms or alkenyl or alkynyl having 2 to 25 carbon atoms, in which one or more hydrogen atoms may also be replaced by F, Cl, P or P-Sp-, preferably P, P-Sp-, H, OH, $CH_2OH$, halogen, $SF_5$, $NO_2$, an |

alkyl, alkenyl or alkynyl group,

$Y^1$ is halogen, preferably F,

$Z^{M1}$ is -O-, -S-, -CO-, -CO-O-, -OCO-, -O-CO-O-, -OCH2-, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -C≡C-, -CH=CH-, -COO-, -OCO-CH=CH-, $CR^0R^{00}$ or a single bond,

$R^0$ and $R^{00}$ are each independently H or alkyl having 1 to 12 carbon atoms,

$R^x$ is P, P-Sp-, H, halogen, straight-chain, branched or cyclic alkyl having 1 to 25 carbon atoms, in which one or more non-adjacent $CH_2$ groups may also be replaced by -O-, -S-, -CO-, -CO-O-, -O-CO-, -O-CO-O-, in such a way that no oxygen and/or sulphur atoms are joined directly to one another, and in which one or more hydrogen atoms may also be replaced by F, Cl, P or P-Sp-, an optionally substituted aryl or aryloxy group having 6 to 40 carbon atoms, or an optionally substituted heteroaryl or heteroaryloxy group having 2 to 40 carbon atoms,

m1 is 0, 1, 2, 3 or 4, and

n1 is 1, 2, 3 or 4,

where at least one substituent, preferably one, two or three substituents and more preferably one or two substituents from the group of $R^{Ma}$, $R^{Mb}$ and the substituent L present is a P or P-Sp- group or contains at least one P or P-Sp- group.

Particular preference is given to compounds of the formula M in which one of $R^{ma}$ and $R^{mb}$ or both are P or P-Sp-.

Suitable and preferred RMs for use in the liquid crystalline media according to the invention are, for example, selected from the following formulae:

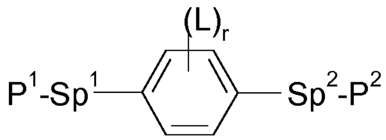

M1

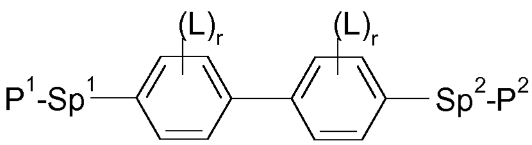

M2

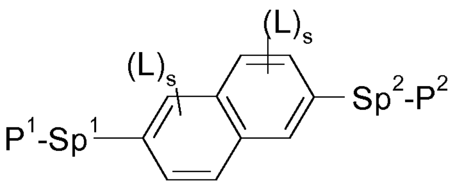

M3

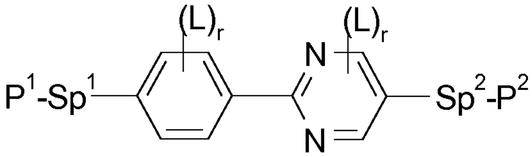

M4

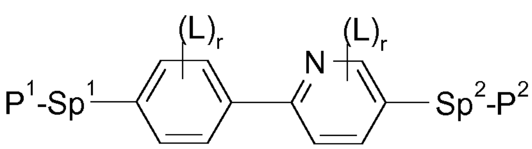

M5

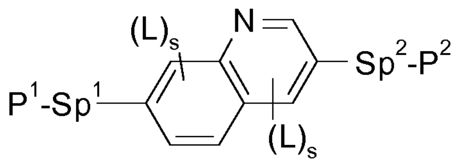

M6

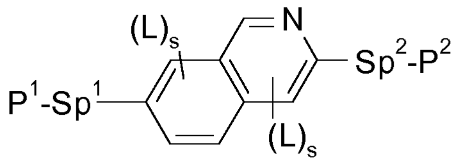

M7

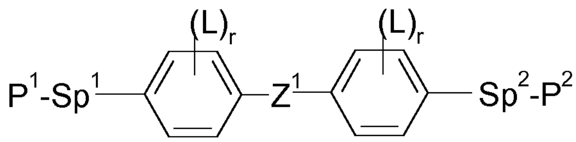

M8

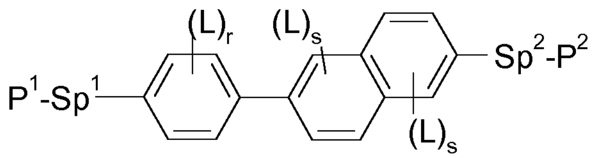

M9

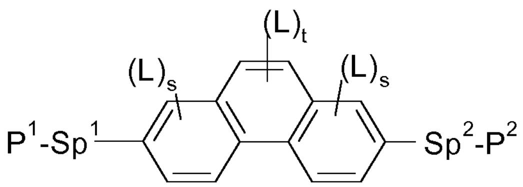

M10

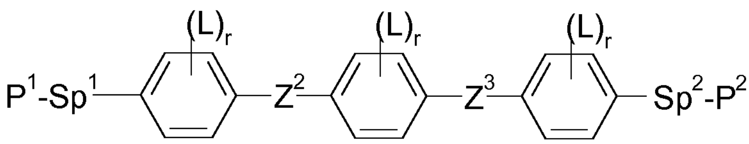

M11

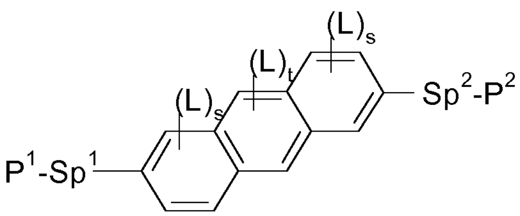

M12

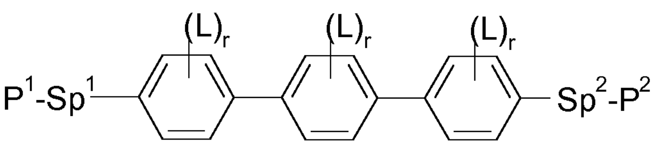

M13

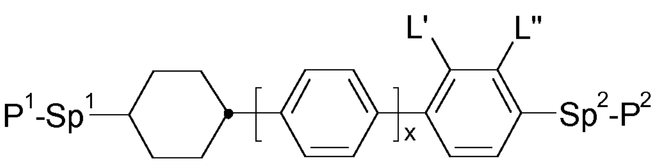

M14

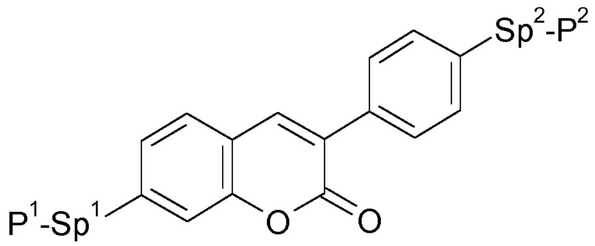

M15

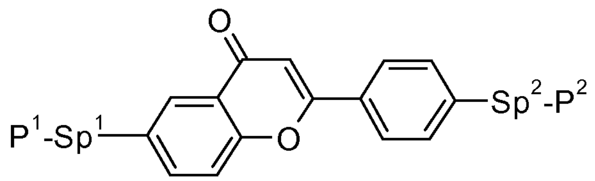

M16

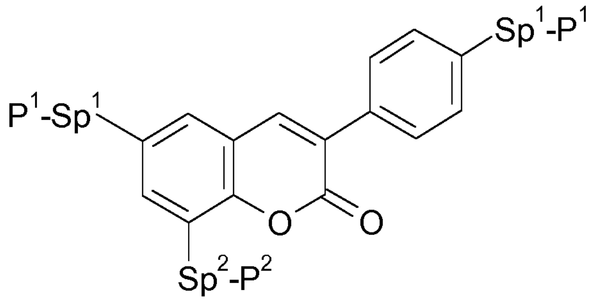

M17

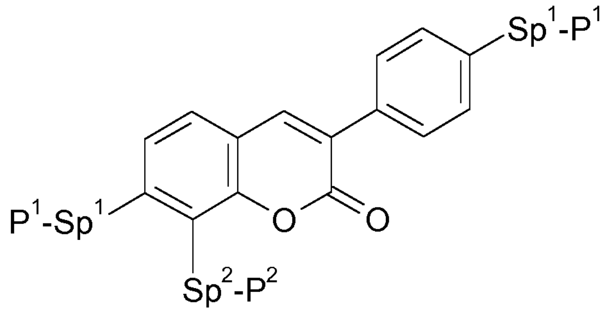

M18

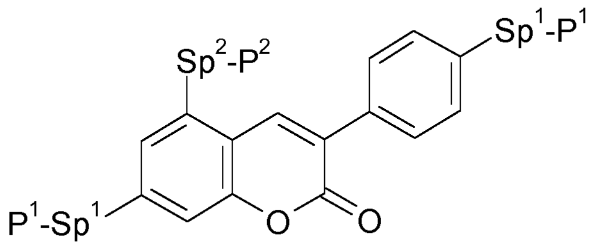

M19

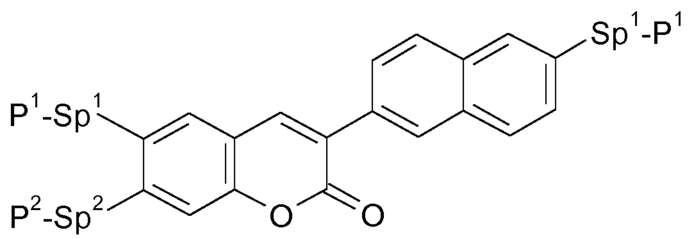

M20

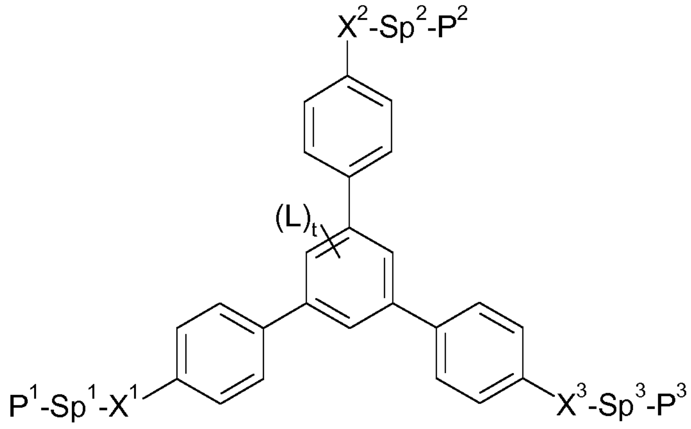

M21

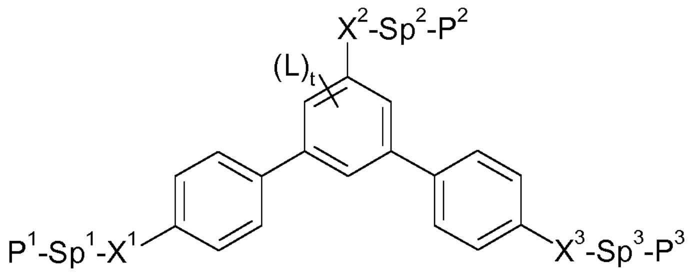

M22

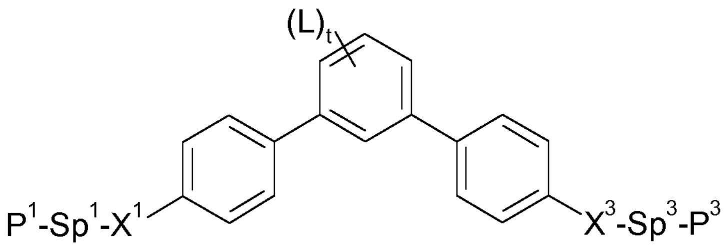

M23

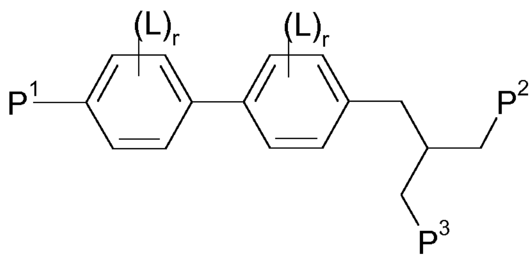

M24

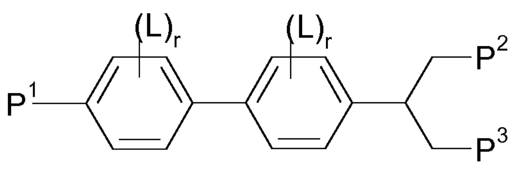

M25

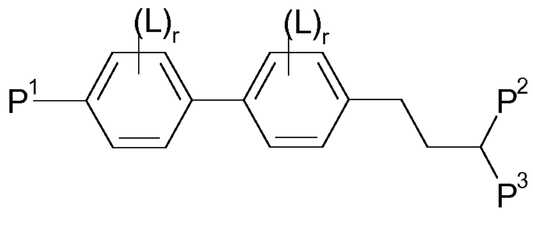

M26

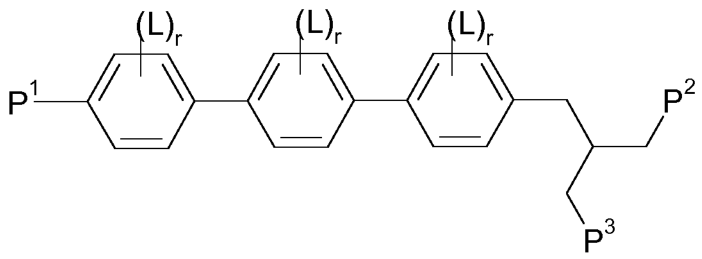

M27

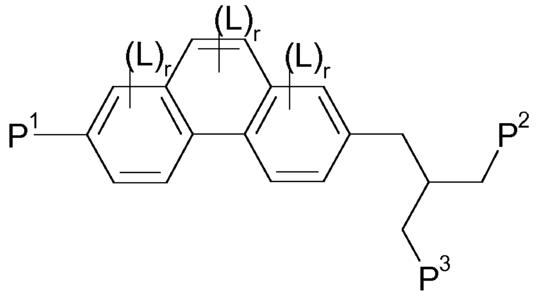

M28

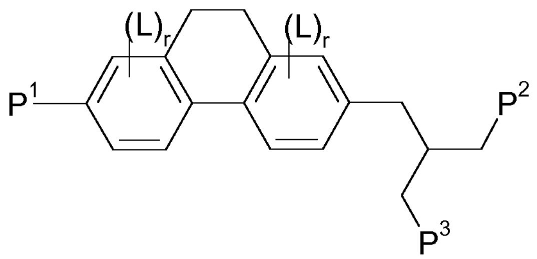

M29

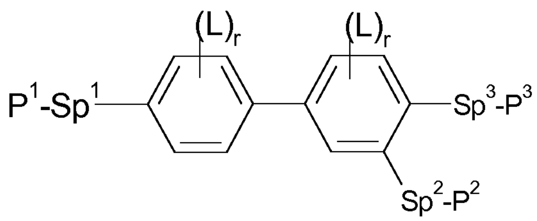

M30

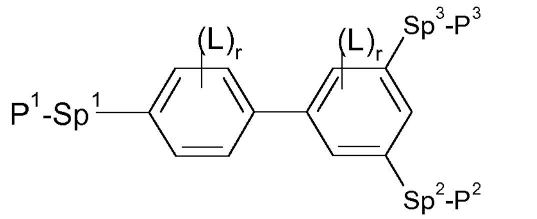

M31

in which the individual radicals are defined as follows:

$P^1$ to $P^3$ are each independently a polymerisable group, preferably having one of the definitions specified above and below for P, more preferably an acrylate, methacrylate, fluoroacrylate, oxetane, vinyloxy or epoxy group,

$Sp^1$ to $Sp^3$ are each independently a single bond or a spacer group, preferably having one of the definitions of Sp given above and below, and more preferably $-(CH_2)_{p1}-$, $-(CH_2)_{p1}-O-$,$-(CH_2)_{p1}-CO-O-$ or $-(CH_2)_{p1}-O-CO-O-$, in which p1 is an integer from 1 to 12, and where the bond to the adjacent ring in the latter groups is via the oxygen atom, where one of the $P^1-Sp^1-$, $P^2-Sp^2-$ and $P^3-Sp^3-$ radicals may also be $R^{aa}$,

$R^{aa}$ is H, F, Cl, CN or straight-chain or branched alkyl having 1 to 25 carbon atoms, in which one or more non-adjacent $CH_2$ groups may each independently also be replaced by $C(R^0)=C(R^{00})$-, -O≡C-, $-N(R^0)$-, -O-, -S-, -CO-, -CO-O-, -O-CO-, -O-CO-O-, in such a way that no oxygen and/or sulphur atoms are joined directly to one another, and in which one or more hydrogen atoms may also be replaced by F, Cl, CN or $P^1$-$Sp^1$-, more preferably straight-chain or branched, optionally mono- or polyfluorinated alkyl, alkoxy, alkenyl, alkynyl, alkylcarbonyl, alkoxycarbonyl, or alkylcarbonyloxy having 1 to 12 carbon atoms (where the alkenyl and alkynyl radicals have at least two and the branched radicals at least three carbon atoms),

$R^0$ and $R^{00}$ are the same or different at each instance and are each independently H or alkyl having 1 to 12 carbon atoms,

$R^y$ and $R^z$ are each independently H, F, $CH_3$ or $CF_3$,

$Z^1$ is -O-, -CO-, $-C(R^yR^z)$- or $-CF_2CF_2$-,

$Z^2$ and $Z^3$ are each independently -CO-O-, -O-CO-, $-CH_2O$-, $-OCH_2$-, $-CF_2O$-, $-OCF_2$- or $-(CH_2)_n$-, where n is 2, 3 or 4,

L is the same or different at each instance and has the meaning given under formula M above, preferably is F, Cl, CN, or straight-chain or branched, optionally mono- or polyfluorinated alkyl, alkoxy, alkenyl, alkynyl, alkylcarbonyl, alkoxycarbonyl or alkylcarbonyloxy having 1 to 12 carbon atoms, preferably F,

L' and L" are each independently H, F or Cl,

$X^1$ to $X^3$ are independently of one another -CO-O-, -O-CO- or a single bond,

r is 0, 1, 2, 3 or 4,

s is 0, 1, 2 or 3,

t is 0, 1 or 2, and

x is 0 or 1.

Suitable polymerisable compounds are listed, for example, in Table G. Particularly preferred reactive mesogens are compounds of formulae RM-A and RM-B as shown in Example 2.

In a preferred embodiment the one or more polymerisable compounds comprise at least one compound which contains one or more non-aromatic rings, for example bi-, tri or tetracyclic hydrocarbon rings, e.g. bridged bicyclo rings or four connected cyclohexane rings.

According to the invention the one or more polymerisable compounds comprise at least one compound which contains a cycloalkyl group selected from unsubstituted or substituted bridged bicyclic rings and unsubstituted or substituted adamantyl, preferably isobornyl or adamantyl.

By providing rigid and bulky cyclic, non-aromatic groups as described above in at least some of the reactive monomers or polymer precursors favourable product properties can be obtained. In particular, the mechanical stability and hardness of the formed polymeric structures or walls obtained from polymerisation can be favourably set and adjusted, while furthermore the optical properties of the material can be suitably controlled.

It is particularly preferred that at least one crosslinking agent is added to the medium, i.e. a polymerisable compound containing two or more polymerisable groups. Crosslinking of the polymeric structures or walls in the prepared system or element can provide additional benefits, especially with respect to further improved stability and containment. In this respect direactive and multireactive compounds can serve to form polymer networks of their own and/or to crosslink polymer chains formed substantially from polymerising monoreactive compounds.

Crosslinkers may favourably influence for example the physical and mechanical polymer properties such as hardness as well as adhesion.

Conventional crosslinkers known in the art can be used. It is particularly preferred to additionally provide direactive or multireactive acrylates and/or methacrylates, preferably added in an amount, based on the overall composition, from 0.1% by weight to 2.5% by weight, more preferably from 0.5% by weight to 1.0% by weight. Particularly preferred compounds are selected from ethylene diacrylate, propylene diacrylate, butylene diacrylate, pentylene diacrylate, hexylene diacrylate, pentaerythritol tetraacrylate, ethylene dimethacrylate, propylene diamethcrylate, butylene dimethacrylate, pentylene dimethacrylate, hexylene dimethacrylate, tripropylene glycol diacrylate, trimethylpropane trimethacrylate and pentaerythritol triacrylate.

The ratio of monoreactive monomers and di- or multireactive monomers can be favourably set and adjusted to influence the polymer make-up of the polymeric structures and their properties.

Suitable and conventionally used thermal initiators or photoinitiators can be added to the medium to facilitate the reaction, for example azo compounds or organic peroxides such as Luperox type initiators. Moreover, suitable conditions for the polymerisation and suitable types and amounts of initiators are known in the art and are described in the literature.

For example, when polymerising by means of UV light, a photoinitiator can be used that decomposes under UV irradiation to produce free radicals or ions that start the polymerisation reaction. For polymerising acrylate or methacrylate groups preferably a radical photoinitiator is used. For polymerising vinyl, epoxide or oxetane groups preferably a cationic photoinitiator is used. It is also possible to use a thermal polymerisation initiator that decomposes when heated to produce free radicals or ions that start the polymerisation. Typical radical photoinitiators are for example the commercially available Irgacure®, e.g. Irgacure 651 containing 2,2-dimethoxy-1,2-diphenyl ethan-1-one, or Darocure® (Ciba Geigy AG, Basel, Switzerland). A typical cationic photoinitiator is for example UVI 6974 (Union Carbide).

It has surprisingly been found that the medium according to the invention can be favourably used to produce the systems, elements and respectively displays according to the invention. The medium exhibits favourable characteristics during the production process, in particular in the polymerisation reaction, and furthermore contributes to the advantageous product properties.

As used herein, the term "polymer" will be understood to mean a molecule that encompasses a backbone of one or more distinct types of repeating units (the smallest constitutional unit of the molecule) and is inclusive of the commonly known terms "oligomer", "copolymer", "homopolymer" and the like. Further, it will be understood that the term polymer is inclusive of, in addition to the polymer itself, residues from initiators, catalysts, and other elements attendant to the synthesis of such a polymer, where such residues are understood as not being covalently incorporated thereto.

The term "(meth)acrylic polymer" as used in the present invention includes a polymer obtained from acrylic monomers, a polymer obtainable from methacrylic monomers, and a corresponding co-polymer obtainable from mixtures of such monomers.

The term "polymerisation" means the chemical process to form a polymer by bonding together multiple polymerisable groups or polymer precursors (polymerisable compounds) containing such polymerisable groups.

Polymerisable compounds with one polymerisable group are also referred to as "monoreactive" compounds, compounds with two polymerisable groups as "direactive" compounds, and compounds with more than two polymerisable groups as "multireactive" compounds. Compounds without a polymerisable group are also referred to as "non-reactive" or "non-polymerisable" compounds.

Polymerisation can be carried out using conventional methods. The polymerisation can be carried out in one or more steps. In particular, polymerisation of the polymerisable compound(s) is preferably achieved by exposure to heat or to actinic radiation, wherein exposure to actinic radiation means irradiation with light, like UV light, visible light or IR light, irradiation with X-rays or gamma rays, or irradiation with high-energy particles, such as ions or electrons. In a preferred embodiment free radical polymerisation is carried out.

Polymerisation can be carried out at a suitable temperature. In an embodiment polymerisation is performed at a temperature below the clearing point of the mesogenic mixture. In an alternative embodiment it is however also possible to carry out the polymerisation at or above the clearing point.

In an embodiment, polymerisation is carried out by photoirradiation, i.e. with light, preferably UV light. As a source for actinic radiation, for example a single UV lamp or a set of UV lamps can be used. When using a high lamp power the curing time can be reduced. Another possible source for photoradiation is a laser, like e.g. a UV laser, a visible laser or an IR laser.

Preferably, polymerisation is carried out by adding to the chiral liquid crystalline host mixture one or more polymerisable compounds, preferably a mixture comprising mono-reactive and di-reactive compounds plus a suitable photoinitiator, and polymerising the polymerisable compounds, for example by exposure to UV irradiation, for a relatively short time, e.g. for an hour or less. Preferably the polymerisation is carried out in electro-optical cells maintained at a temperature in the cholesteric phase of the chiral liquid crystalline host mixture.

In the process according to the invention a composite system and light modulation element can be prepared by polymerising the polymerisable constituent contained in the chiral LC medium in a spatially selective way. In particular, the LC medium is provided as a layer and polymerisation only occurs in defined regions of the layer. Thereby, polymeric structures, preferably polymer walls, are formed in the defined regions.

The term "layer" includes rigid or flexible, self-supporting or freestanding films or layers with more or less pronounced mechanical stability, as well as coatings or layers on a supporting substrate or between two substrates.

The spatial selectivity of the polymerisation can be achieved by different means, either alone or in combination.

For example, in case a substrate is provided, a pretreated or prestructured substrate may be used. In this context selected surface areas on the substrate may be activated or respectively passivated for a subsequent polymerisation by physical and/or chemical treatment or modification, for example using irradiation, plasma treatment or selective printing or stamping. Direct substrate prepatterning or selective priming, e.g. by printing, may be particularly useful in roll-to-roll processing. Polymerisation may then be initiated and proceed on the activated areas.

However, it is preferred to use substrates as given without any pretreatment and to form the polymeric structures in situ by spatially selective treatment of the medium. Therefore, in a preferred embodiment, spatially selective polymerisation is effected by selectively exposing the provided medium in defined regions of the layer to actinic radiation. In this respect standard procedures known in the photolithography field can be employed. Preferably, photopolymerisation using UV light is used. Spatially selective irradiation of defined regions in the layer can be achieved for example by scanning a light beam, preferably a focused light beam, over the material sample, or by moving the sample in a defined manner through the beam. A beam shutter can be used to interrupt or intermit sample irradiation. So-called maskless lithography is commonly known.

In a preferred embodiment the provided layer of the medium is supported on a substrate, and even more preferably the layer is sandwiched between two substrates. The polymeric structures are then formed as polymeric walls by selectively exposing the defined regions to UV radiation. This can be achieved by irradiation of the sample with UV light which exhibits spatially modulated intensity, thereby achieving spatial discrimination. Most preferably a photomask is used in this process, wherein the polymer builds and aggregates in unmasked areas or regions.

Photomasks, production thereof, and suitable alignment and positioning of photomasks are commonly known. These masks are typically made of an opaque material or respectively comprise an opaque layer, wherein transparent portions in the mask, formed by e.g. holes or through etching, make up a defined pattern through which light can pass. This pattern then determines the areas in which irradiation and thus in turn polymerisation in the medium layer can occur. For example, a chromium photomask on a quartz plate may be used. Alternatively, laser printing on a transparency as well as photographic films may be used to obtain photomasks. The desired pattern can be adjusted for example with respect to wall width or distance between walls.

The pattern applied to the medium may, for example, be in the form of stripes or form an array of squares, i.e. be a pixelated pattern. However, also oblong shapes and/or rounded edges are included as possible pattern elements. Preferably, compartments are formed using a square shape. In a preferred embodiment the compartments each have a side length of 100 μm or more, more preferably 500 μm or more, and even more preferably 750 μm or more. In a particular embodiment squares having a side length in the range from 500 μm or more and 1000 μm or less are formed. The polymer walls formed preferably have a width of 5 μm or more, more preferably of 10 μm or more, and even more preferably 20 μm or more.

By the polymerisation the two-component system as described above and below is formed. In particular, a separate polymer phase distinct from the low molecular weight mesogenic phase is produced, which favourably can be provided as polymer walls.

In an embodiment the composite system is provided as a layer or respectively a layered structure, wherein it is also possible to arrange stacked layers or structures. The system can preferably be provided as a self-adhering and/or self-sustaining film, more preferably on a substrate.

In a particularly preferred embodiment polymer walls are prepared by using in situ photopolymerisation of the chiral LC medium as described above and below. Therein phase separation occurs upon polymerisation, in particular phase separation is induced by polymerisation. Thus the CLC medium can be separated into compartments, such as pixels, by embedding the CLC medium by boundaries in an advantageous in situ process. Preferably, polymerisation is carried out substantially to completion such that the amount of residual reactive monomer is kept at a minimum, wherein preferably phase separation occurs to a great extent.

Advantageously, also in the regions where no polymerisation occurs the concentration of the polymerisable compound(s) may suitably decrease by a depletion process. This effect may be explained as follows. In the regions where polymerisation takes place phase separating polymer is built up while further monomer molecules are fed into the reaction, wherein the monomers may then be replenished at or towards the reaction sites by diffusion down concentration gradients from regions where no polymerisation reaction occurs.

In the light modulation element preferably at least one substrate comprises electrodes to electrically address the low molecular weight component. Favourably the polymer walls are based on the surface of the at least one substrate and are built up in inactive areas of the CLC display, or they are at least partially formed in electrically inactive regions. This way unwanted light reflection in the inactive areas can be avoided or reduced to a minimum. Consequently, problems of colour mixing can be minimized and contrast and readability can be improved. Thus the amount of CLC material is minimized in the inactive areas or regions, at least to a degree that degradation of the overall contrast can be avoided or reduced.

The polymer walls as provided by the present process can effectively serve a function similar to that of a black mask. There is thus no need to include additionally a standard black mask. This is advantageous in that in such an additional step of including the typical black mask care must be taken to provide smooth mask surfaces and to avoid introducing contaminants.

Moreover, the walls can be effective in keeping the cell gap, for example in flexible displays or when exposed to external pressure such as touching. This can favourably contribute to achieving stability in terms of reflectivity and colour. Such improved cell gap uniformity can thus lead to improved colour uniformity. At the same time the mechanical support afforded by the polymeric structures may allow to more freely choose substrates, in particular in view of flexible displays. In this respect plastic substrates, for example films of polyester such as polyethyleneterephthalate (PET) or polyethylenenaphthalate (PEN), polyvinylalcohol (PVA), polycarbonate (PC) or triacetylcellulose (TAC), for mechanical support may be particularly useful considering that they may not only be flexible but also thinner and lighter in weight compared to conventional substrates such as glass, while also providing further benefits in the manufacturing and assembly.

In order to ensure suitable performance and operability of the devices over time and also under extreme conditions, for example elevated temperatures or exposure to UV light during operation, it is desirable to keep the amount of residual, unreacted monomer at a minimum.

Therefore, in a preferred embodiment, subsequent to carrying out the spatially selective polymerisation the whole material layer is blanket exposed to either a thermal treatment or to light irradiation, preferably UV radiation. This way the amount of residual monomer can be decreased in the whole system or element. It is understood that the term "whole layer" means those areas of interest for application purposes, which may exclude edge or fringe areas. In this respect the term "whole" thus refers to a treatment or exposure without spatial selectivity or without spatial discrimination.

This preferable additional treatment step is not only useful in increasing device reliability, but it can at the same time favourably influence device performance in the active areas. In particular, the preferable subsequent polymerisation, which is also carried out in the active regions while however using a significantly lower amount of residual monomer, can lead to a polymer stabilisation of the cholesteric texture (PSCT). Depending on the desired initial state, the second, blanket polymerisation may be carried out in the presence or absence of an electric field.

For the devices according to the invention either a planar or a focal conic configuration may be set initially, preferably a planar state. Such states or textures can preferably be set or adjusted by polymer stabilization, particularly preferably by the treatment as described above, and/or by surface stabilization.

The process according to the invention can be favourably used to efficiently and effectively produce the advantageous light modulation, LC mirrors or electro-optical devices as described above and below, which are obtained from or respectively obtainable from the medium by polymerising the one or more polymerisable compounds as described above and below. The devices preferably are reflective devices exhibiting a selective reflection with a wavelength in the near UV or in the visible range of the electromagnetic spectrum. Therein, reflection in the inactive areas is favourably suppressed or susbtantially avoided by the provision of the polymeric structures.

Moreover, by performing the present process there is no need for an additional step of filling CLC into preformed containers or structures.

In a preferred embodiment of the present invention the liquid crystalline media according to the invention comprise one or more compounds selected from the compounds of formulae I-1 to I-5, preferably selected from the compounds of formulae I-2, I-4 and I-5, most preferably of formula I-2

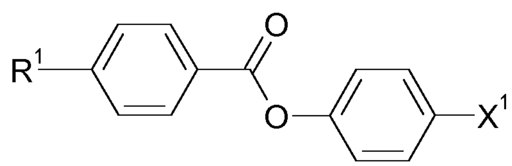

I-1

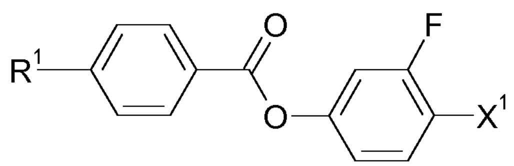

I-2

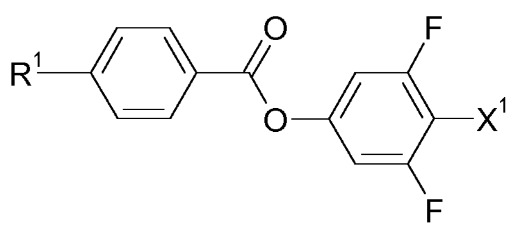

I-3

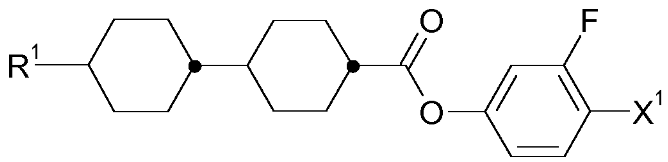

I-4

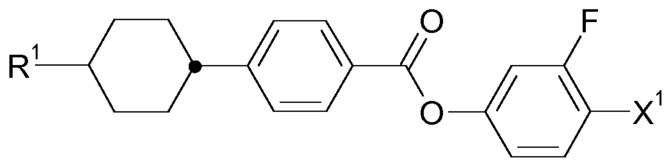

I-5

wherein $R^1$ and $X^1$ have the respective meanings given under formula I above, and $R^1$ preferably is alkyl, most preferably n-alkyl, and $X^1$ preferably is CN.

In a preferred embodiment of the present invention the liquid crystalline media comprise one or more compounds selected from the group of compounds of formulae II-1 and II-2, preferably of formula II-2

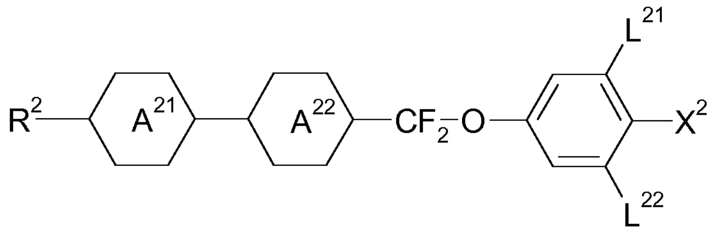

II-1

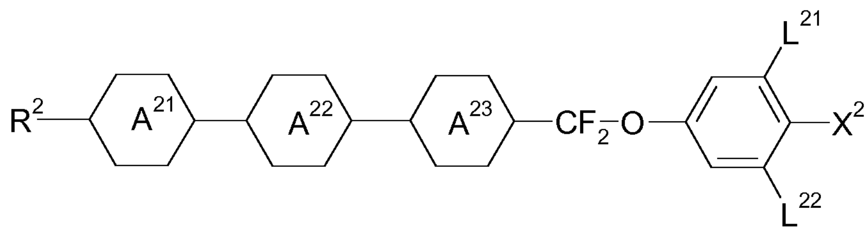

II-2

wherein the respective groups have the meanings given under formula II above, and $X^2$ preferably is F or $OCF_3$.

Preferably the media comprise one or more compounds selected from the group of compounds of formulae II-1 and II-2, wherein $L^{21}$ and $L^{22}$ both are F.

Preferably the media comprise one or more compounds of formula II-1, which preferably are selected from the group of compounds of formulae II-1 a to II-1c, preferably of formula II-1 c

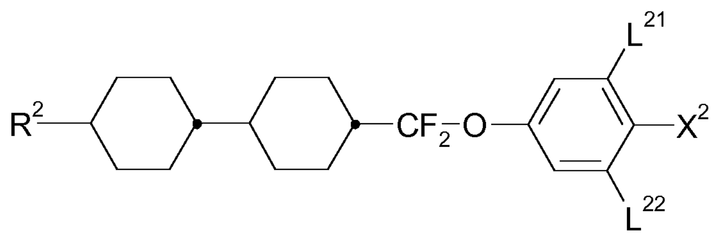

II-1a

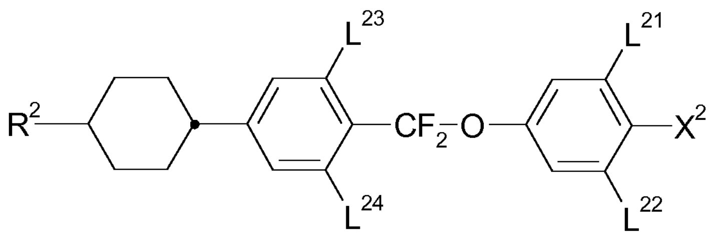

II-1b

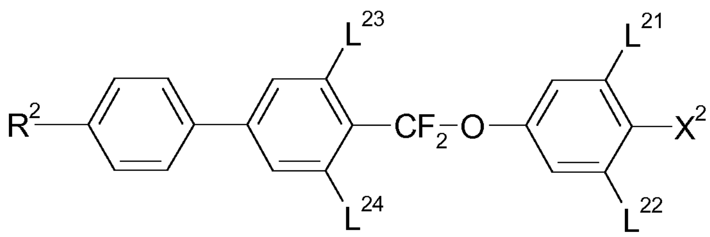

II-1c

wherein the respective groups have the meanings given above, and preferably $L^{21}$ and $L^{22}$ are both F and $L^{23}$ and $L^{24}$ are both H or $L^{21}$, $L^{22}$, $L^{23}$ and $L^{24}$ are all F.

In a preferred embodiment the media comprise one or more compounds of formula II-1c, wherein $L^{21}$, $L^{22}$, $L^{23}$ and $L^{24}$ all are F.

Preferably the media comprise one or more compounds selected from the group of compounds of formulae II-2a to II-2c, preferably of formula II-2c,

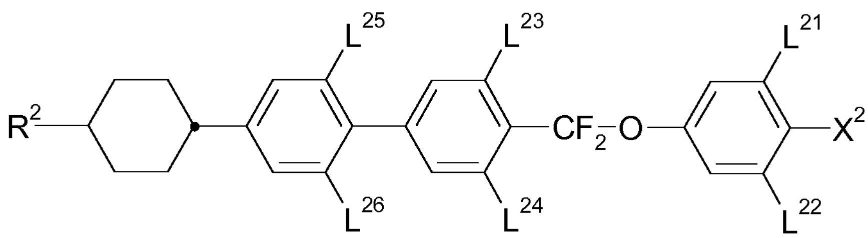

II-2a

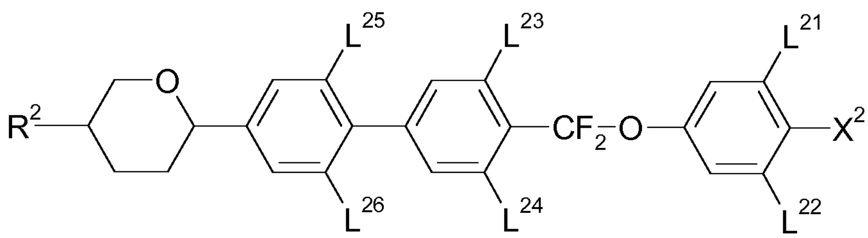

II-2b

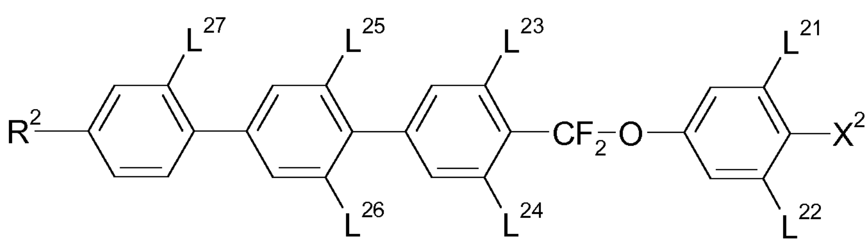

II-2c

wherein the respective groups have the meanings given above, and $L^{23}$ to $L^{27}$ are independently of each other and of the other groups H or F, and preferably $L^{21}$ and $L^{22}$ are both F and two or three of $L^{23}$ to $L^{27}$, most preferably $L^{23}$ to $L^{25}$, are F and the others of $L^{21}$ to $L^{27}$ are H or F, preferably H, and $X^2$ preferably is F or $OCF_3$ and most preferably F.

Especially preferred compounds of formula II-2 are the compounds of formula II-2c-1

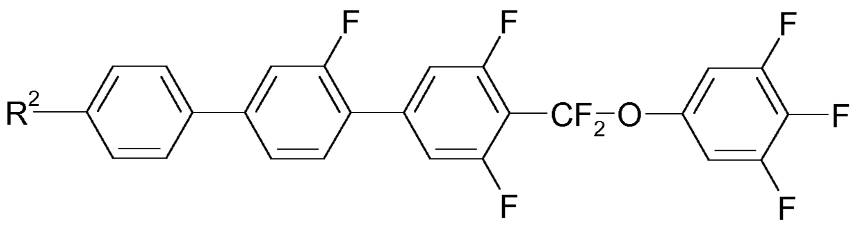

II-2c-1

wherein $R^2$ has the meaning given above.

In a further preferred embodiment of the present invention the media comprise one or more compounds selected from the group of compounds of formulae 111-1 and III-2

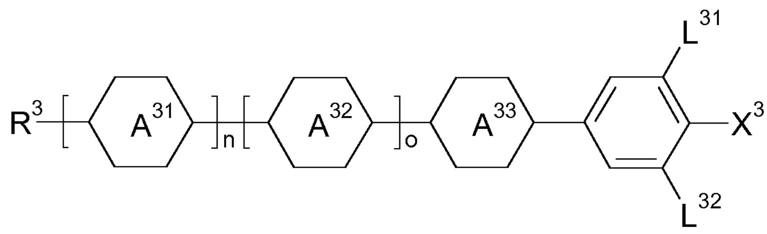

III-1

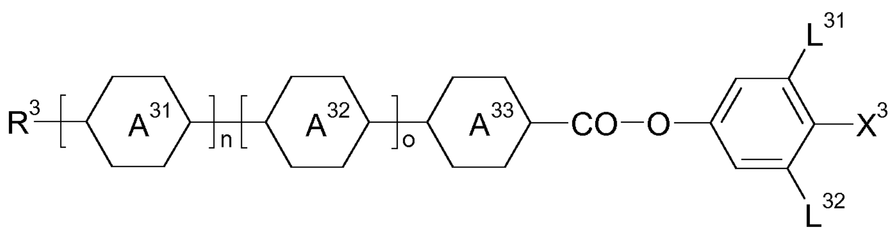

III-2

wherein the respective groups have the meanings given under formula III above.

Preferably the media comprise one or more compounds of formula 111-1, preferably selected from the group of compounds of formulae III-1a to III-1 g, more preferably selected from the group of compounds of formulae III-1a, III-1c, III-1 d and III-1e, and most preferably one or more compounds each of formulae III-1a, III-1c and III-1e

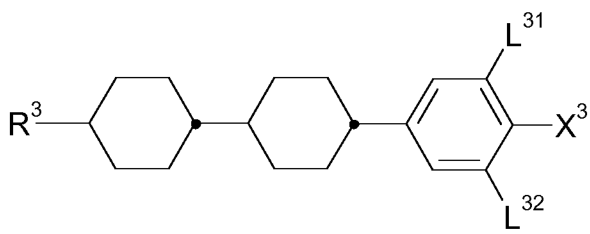

III-1a

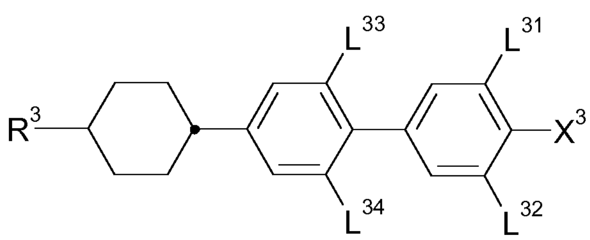

III-1b

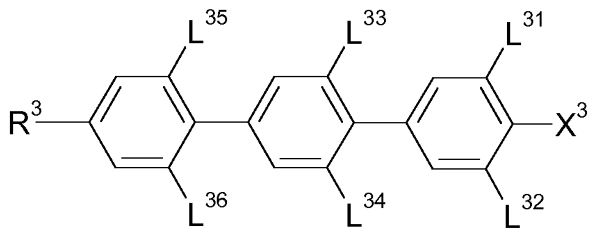

III-1c

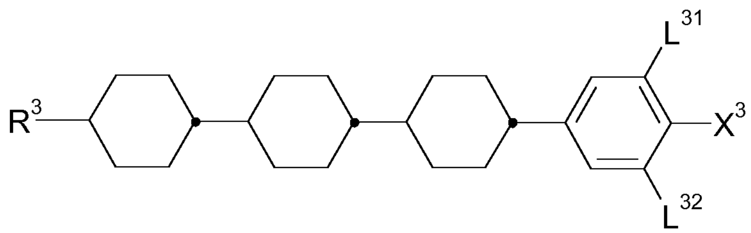

III-1d

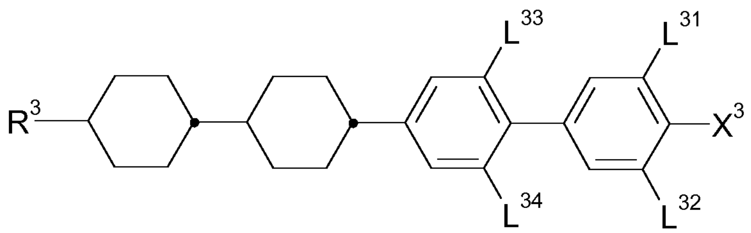

III-1e

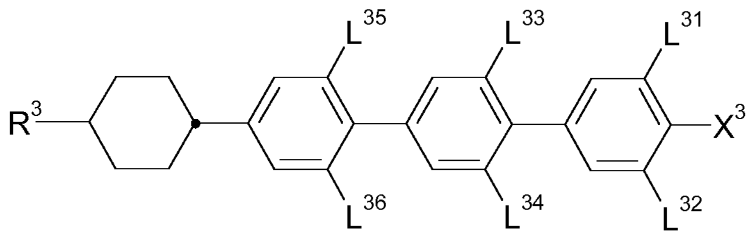

III-1f

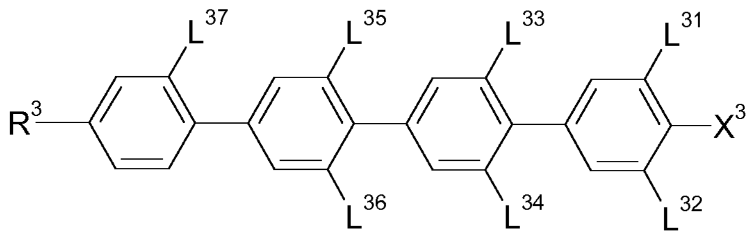

III-1g

wherein the respective groups have the meanings given above, and $L^{33}$ to $L^{37}$ are independently of each other and of the other groups H or F, and preferably $L^{31}$ and $L^{32}$ are both F and two or three of $L^{33}$ to $L^{37}$, most preferably $L^{33}$ to $L^{35}$, are F and the others of $L^{31}$ to $L^{37}$ are H or F, preferably H, and $X^3$ preferably is F or $OCF_3$.

Particularly preferable compounds of formula 111-1 are selected from the group of compounds of formulae III-1 a-1, III-1 c-1, and III-1 e-1

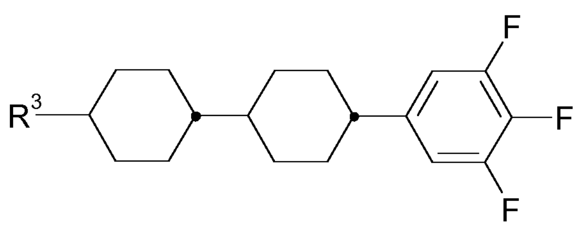

III-1a-1

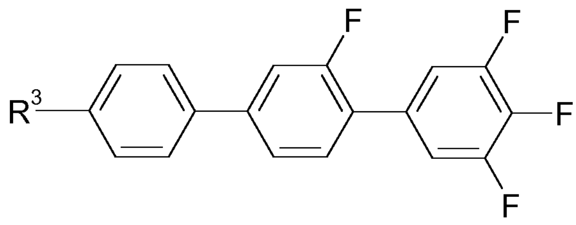

III-1c-1

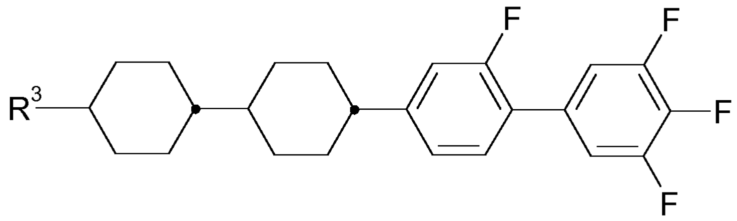

III-1e-1

wherein $R^3$ has the meaning given above.

Preferably the compounds of formula IV are selected from the group of compounds of formulae IV-1 to IV-7, more preferably of formulae IV-6 and/or IV-7

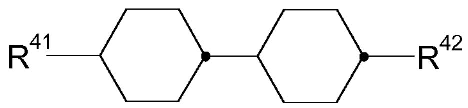

IV-1

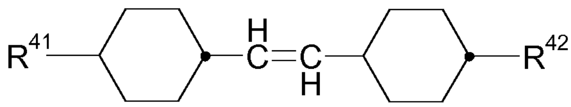

IV-2

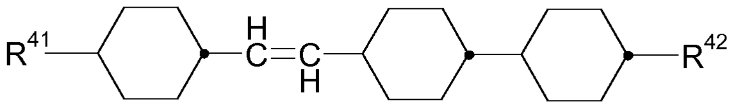

IV-3

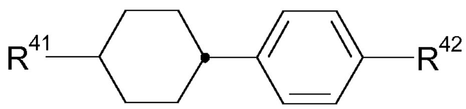

IV-4

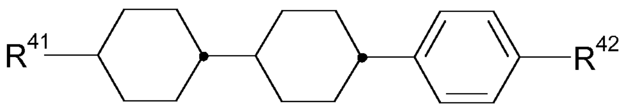

IV-5

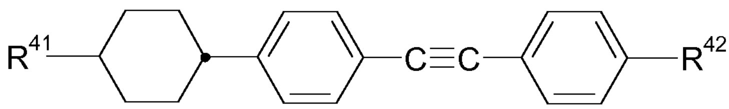

IV-6

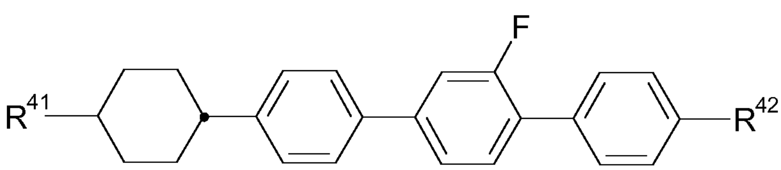

IV-7

wherein $R^{41}$ and $R^{42}$ have the respective meanings given under formula IV above, and $R^{41}$ preferably is alkyl or alkenyl,

more preferably alkenyl, and $R^{42}$ preferably is alkyl or alkenyl, more preferably alkyl, and alternatively in formula IV-2 $R^{41}$ and $R^{42}$ preferably both are alkyl and in formula IV-4 $R^{41}$ preferably is alkyl or alkenyl, more preferably alkyl and $R^{42}$ preferably is alkyl or alkoxy, more preferably alkoxy.

Preferably the media comprise one or more compounds selected from the group of compounds of formulae IV-6 and IV-7, and more preferably one or more compounds each of formulae IV-6 and IV-7.

Preferred compounds of formula IV-6 are compounds of formulae CPTP-n-m and CPTP-n-Om, more preferably compounds of formula CPTP-n-Om, while preferred compounds of formula IV-7 are compounds of formula CPGP-n-m. The definitions of these abbreviations (acronyms) are explained in tables A to C and illustrated in table D below.

In a preferred embodiment the liquid crystalline media according to the present invention comprise one or more compounds of formula V selected from the group of compounds of formulae V-1 to V-6

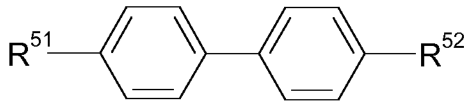

V-1

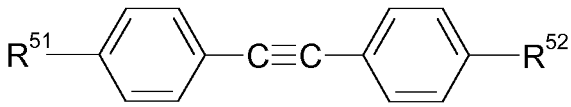

V-2

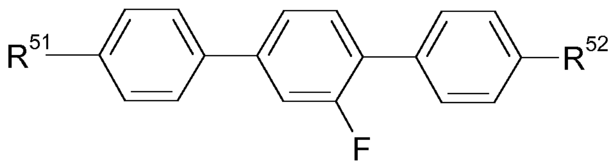

V-3

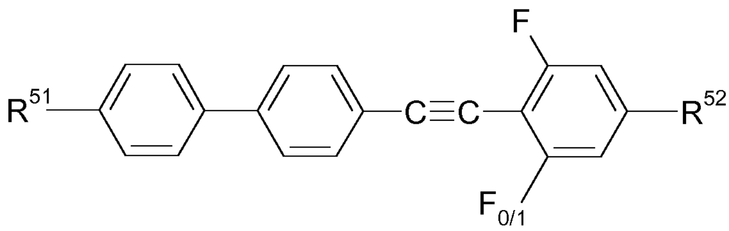

V-4

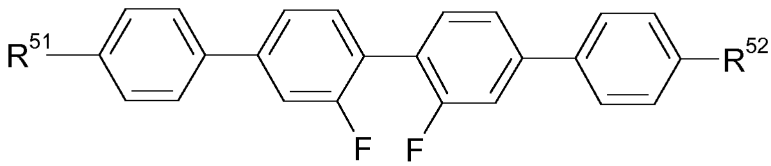

V-5

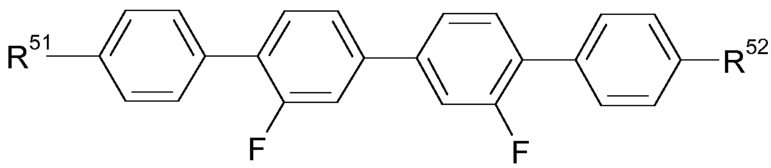

V-6

wherein $R^{51}$ and $R^{52}$ have the respective meanings given under formula V above, and $R^{51}$ preferably is alkyl, more preferably n-alkyl, and in formula V-1 $R^{52}$ preferably is alkenyl, more preferably 3-alkenyl and most preferably -(CH2)2-CH=CH-CH3, and in formula V-3 $R^{52}$ preferably is alkyl or alkenyl, more preferably n-alkyl or 3-alkenyl, and most preferably -(CH2)2-CH=CH2, in formulae V-3 to V-6 $R^{52}$ preferably is alkyl, and in V-4 "$F_{0/1}$" preferably is F.

Preferred compounds of formula V-1 are compounds of formulae PP-n-2V and PP-n-2Vm, more preferably compounds of formula PP-1-2V1. Preferred compounds of formula V-2 are compounds of formulae PTP-n-Om, especially preferred PTP-1-O2, PTP-2-O1 and PTP-3-O1. Preferred compounds of formula V-3 are compounds of formulae PGP-n-m, PGP-n-2V and PGP-n-2Vm, more preferably of formulae PGP-2-m, PGP-3-m and PGP-n-2V. Preferred compounds of formula V-4 are compounds of formula PPTUI-n-m, more preferably PPTUI-3-2, PPTUI-3-3, PPTUI-3-4 and PPTUI-4-4. Preferred compounds of formula V-5 are compounds of formula PGGIP-n-m. Preferred compounds of formula V-6 are compounds of formula PGIGP-n-m. The definitions of these abbreviations (acronyms) are explained in tables A to C and illustrated in table D below.

The compounds of formula VI are preferably selected from the group of compounds of formulae VI-1 and VI-2, preferably of formula VI-1

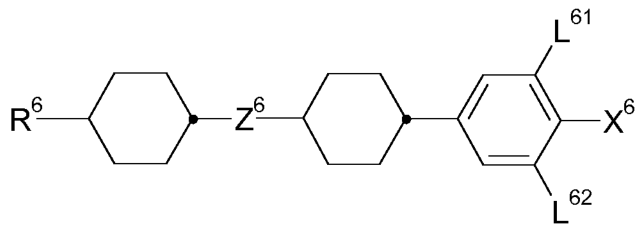

VI-1

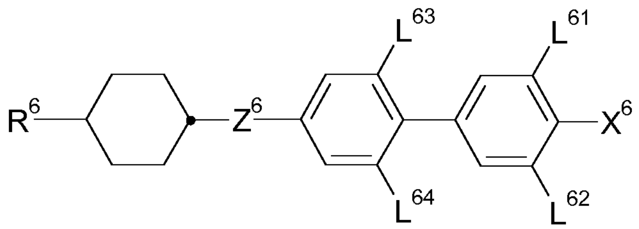

VI-2

wherein the respective groups have the meanings given above, and $L^{63}$ and $L^{64}$ are, independently of each other and of the other groups H or F, and preferably $Z^6$ is -CH2-CH2- and preferably $X^6$ is F.

Preferably the one or more mesogenic compounds contained in the chiral LC medium according to the invention comprise, more preferably predominantly consist of, even more preferably essentially consist of, and most preferably entirely consist of compounds selected from the group of compounds of formulae I to VI.

"Comprising" herein means in the context of compositions that the entity referred to, e.g. the medium or the component, contains the component or components or the compound or compounds in question, preferably in a total concentration of 10 % or more, and more preferably of 20 % or more, unless explicitly defined otherwise.

In this context the term "predominantly consisting of" means that the entity referred to contains 55 % or more, preferably 60 % or more, and most preferably 70 % or more of the component or components or of the compound or compounds in question, unless explicitly defined otherwise.

In this context the term "essentially consisting of" means that the entity referred to contains 80 % or more, preferably 90 % or more and most preferably 95 % or more of the component or components or of the compound or compounds in question, unless explicitly defined otherwise.

In this context the term "entirely consisting of" means that the entity referred to contains 98 % or more, preferably 99 % or more, and most preferably 100.0 % of the component or components or of the compound or compounds in question, unless explicitly defined otherwise.

Also other mesogenic compounds, which are not explicitly mentioned above, can optionally and beneficially be used in the media according to the instant invention. Such compounds are known in the field.

The liquid crystal media according to the instant invention preferably have a clearing point of 85°C or more, preferably of 90°C or more.

$\Delta n$, at 589 nm ($Na^D$) and 20°C, of the liquid crystal media according to the instant invention preferably is in the range of 0.100 to 0.350, more preferably in the range of 0.120 to 0.330 and most preferably in the range of 0.130 to 0.310.

$\Delta\varepsilon$, at 1 kHz and 20°C, of the liquid crystal medium according to the invention preferably is 10 or more, more preferably 15 or more, even more preferably 20 or more, and most preferably 25 or more, while it preferably is 60 or less, more preferably 55 or less. Particularly preferably it is in the range of 10 to 55.

Preferably the nematic phase of the inventive media without the chiral dopants extends at least from 0 °C or less to 80°C or more, more preferably at least from -20°C or less to 85°C or more, even more preferably at least from -20°C or less to 90°C or more, and most preferably at least from -30°C or less to 95°C or more.

Compounds of formula I preferably are used in the media in a total concentration from 1 % to 35 %, more preferably from 2 % to 30 %, even more preferably from 3 % to 20 %, and most preferably from 5 % to 15 % of the total mixture.

Compounds of formulae II and III preferably are used together in the media in a total concentration from 40% to 80 %, more preferably from 45 % to 75 %, even more preferably from 50 % to 70 %, and most preferably from 55 % to 65 % of the total mixture.

Compounds of formula II preferably are used in the media in a total concentration from 15 % to 35 %, more preferably from 20 % to 30 % and most preferably from 22 % to 28 % of the total mixture.

Compounds of formula III preferably are used in the media in a total concentration from 15 % to 45 %, more preferably from 25 % to 40 % and most preferably from 30 % to 35 % of the total mixture.

Compounds of formula IV preferably are used in the media in a total concentration from 10 % to 35 %, more preferably from 15 % to 30 % and most preferably from 20 % to 25 % of the total mixture.

Compounds of formula V preferably are used in the media in a total concentration from 10 % to 30 %, preferably from 12 % to 28 % and most preferably from 16 % to 23 % of the total mixture.

Compounds of formula VI preferably are used in the media in a total concentration from 0 % to 30 %, more preferably from 0.1 % to 15 % and most preferably from 1 % to 10 % of the total mixture.

Optionally the media according to the present invention may comprise further liquid crystal compounds in order to adjust the physical properties. Such compounds are known in the field. Their concentration in the media according to the instant invention is preferably 0 % to 30 %, more preferably 0.1 % to 20 % and most preferably 1 % to 15 %.

Preferably the media according to the present invention comprise one or more compounds of

- formula I-2 and/or
- formula II-1c, preferably of formula PUQU-n-F, and/or
- formula II-2c, preferably of formulae II-2c-1, and/or
- formula III-1a, preferably of formulae III-1a-1, and/or
- formula III-1c, preferably of formulae III-1c-1, and/or
- formula III-1d, preferably of formulae III-1d-1, and/or
- formula IV-6, preferably of formulae CPTP-n-Om and/or CPTP-n-m, and/or
- formula IV-7, preferably of formulae CPGP-n-Om and/or CPGP-n-m, and/or
- formula V-1, preferably of formula PP-n-mV, and/or PP-n-mVl, and/or
- formula V-2, preferably of formula PTP-n-Om, and/or
- formula V-3, preferably of formulae PGP-n-m and/or PGP-n-mV, and/or
- formula V-4, preferably of formula PPTUI-n-m, and/or
- formula R-5011 or S-5011, and/or
- one or more reactive polymerisable compounds, and/or
- one or more polymerisation initiators.

Herein the term dielectrically positive is used for compounds or components with $\Delta\varepsilon > 3.0$, dielectrically neutral with $-1.5 \leq \Delta\varepsilon \leq 3.0$ and dielectrically negative with $\Delta\varepsilon < -1.5$. $\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host mixture is less than 10 % its concentration is reduced by a factor of 2 until the resultant mixture is stable enough at least to allow the determination of its properties. Preferably the concentration is kept at least at 5 %, however, in order to keep the significance of the results as high as possible. The capacities of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

$\Delta\varepsilon$ is defined as ($\varepsilon_{||}$ - $\varepsilon_{\perp}$), while $\varepsilon_{av.}$ is ($\varepsilon_{||}$ + 2 $\varepsilon_{\perp}$) / 3. For dielectrically positive compounds the mixture ZLI-4792 and for dielectrically neutral as well as for dielectrically negative compounds the mixture ZLI-3086, both of Merck KGaA, Germany are used as host mixture, respectively. The dielectric permittivities of the compounds are determined from the change of the respective values of the host mixture upon addition of the compounds of interest. The values are extrapolated to a concentration of the compounds of interest of 100 %.

Components having a nematic phase at the measurement temperature of 20 °C are measured as such, all others are treated like compounds.

The term threshold voltage refers herein to the optical threshold and is given for 10 % relative contrast ($V_{10}$) and the term saturation voltage refers to the optical saturation and is given for 90 % relative contrast ($V_{90}$), if not explicitly stated otherwise. The capacitive threshold voltage ($V_0$), also called Freedericks-threshold ($V_{Fr}$), is only used if explicitly mentioned.

The ranges of parameters given herein are all including the limiting values, unless explicitly stated otherwise.

Herein, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy ($\Delta n$) is determined at a wavelength of 589.3 nm. The dielectric anisotropy ($\Delta\varepsilon$) is determined at a frequency of 1 kHz. The threshold voltages as well as all other electro-optical properties are determined with test cells prepared at Merck KGaA, Germany. The test cells for the determination of $\Delta\varepsilon$ have a cell gap of approximately 20 $\mu$m. The electrode is a circular ITO electrode with an area of 1.13 $cm^2$ and a guard ring. The orientation layers are lecithin for homeotropic orientation ($\varepsilon_{||}$) and polyimide AL-1054 from Japan Synthetic Rubber for planar homogeneous orientation ($\varepsilon_{\perp}$). The capacities are determined with a frequency response analyser Solatron 1260 using a sine wave with a voltage of 0.3 $V_{rms}$. The test cells used have a cell gap selected to have an optical retardation matching the first transmission minimum according to Gooch and Tarry or below, typically of about 0.45 $\mu m^{-1}$. The light used in the electro-optical measurements is white light. The setup used is commercially available equipment of Autronic Melchers, Karlsruhe, Germany. The characteristic voltages are determined under perpendicular observation. The threshold ($V_{10}$) - mid grey ($V_{50}$) - and saturation ($V_{90}$) voltages are determined for 10 %, 50 % and 90 % relative contrast, respectively.

The response times are given as rise time ($\tau_{on}$) for the time for the change of the relative contrast from 0 % to 90 % ($t_{90}$ - $t_0$), i.e. including the delay time ($t_{10}$ - $t_0$), as decay time ($\tau_{off}$) for the time for the change of the relative contrast from 100 % back to 10 % ($t_{100}$ - $t_{10}$) and as the total response time ($\tau_{total}$) = $\tau_{on}$ + $\tau_{off}$), respectively.

The liquid crystal media according to the present invention may contain further additives in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is herein not taken into consideration for the values and ranges of the concentrations of the liquid crystal components and compounds of the liquid crystal media. This also holds for the concentration of dichroic dyes optionally used in the mixtures, which are not counted when the concentrations of the compounds respectively the components of the host mixture are specified. The concentration of the respective additives is always given relative to the final doped mixture.

The liquid crystal media according to the present invention consist of several compounds, preferably of 3 to 30, more preferably of 4 to 20, and most preferably of 4 to 16 compounds. These compounds are mixed in a conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle systems, the constituents of which are ready to use mixtures themselves.

Preferably the liquid crystal media according to the present invention comprising one or more chiral dopants selectively reflect radiation in the visible range of the electromagnetic spectrum, i.e. in the range from 400 nm to 800 nm. Preferably their band of selective reflection extends into this range of wavelengths, more preferably the centre wavelength of their reflection band lies within this range, and most preferably their complete reflection band lies within this range. Preferably the media have a selective reflection with a half bandwidth (1/2 FWHM) in the range from 15 nm to 60 nm, more preferably in the range from 20 nm to 55 nm and most preferably from 25 nm to 50 nm. In particular, the relative half bandwidth, i.e. the ratio of the half bandwidth (1/2 FWHM) and the centre wavelength of the reflection band, preferably is in the range from 1 % to 20 %, more preferably in the range from 2 % to 16 %, even more preferably in the range from 4 % to 10 %, and most preferably in the range from 6 % to 8 %.

The wavelength of the centre of the resultant selective reflection at a given temperature may be calculated from the actual concentration of the chiral dopant in the host used via the approximation of the polynomial series (I):

$$\lambda_{cent.}[c(dop.)] = \alpha \cdot [c(dop.)]^{-1} + \beta \cdot [c(dop.)]^{-2} + \gamma \cdot [c(dop.)]^{-3} + \ldots \qquad (I)$$

wherein

| | |
|---|---|
| $\alpha$, $\beta$ and $\gamma$ | are material constants specific for the combination of a given chiral dopant in a given host mixture and |
| c(dop.) | is the concentration of the chiral dopant in the host mixture. |

In many practical cases, even consideration only of the first term, the linear term ("$\alpha \cdot [c(dop.)]^{-1}$"), yields results with sufficient accuracy. The parameter "$\alpha$" is analogous to the inverse of the HTP (i.e. $HTP^{-1}$). Here, in the determination of the wavelength of the selective reflection of a cholesteric LC, which is similar to a "Bragg" reflection, however, the effective refractive index of the mixture has to be taken into account additionally for a more exact numerical description.

Typically the parameters $\alpha$, $\beta$ and $\gamma$ depend more strongly on the type of the chiral dopant than on the specific liquid crystal mixture used. They depend on the enantiomeric excess of the respective chiral dopant. They have their respective largest absolute values for the pure enantiomers and are zero for racemates. Herein the values given are those for the pure enantiomers, having an enantiomeric excess of 98 % or more.

Preferably the absolute value of the parameter $\alpha$ of the chiral dopant, respectively the chiral dopants, in the respective liquid crystal medium according to the present invention is in the range from 5 nm to 25 nm, more preferably in the range from 10 nm to 20 nm and most preferably in the range from 12 nm to 16 nm.

The media may comprise more than one chiral dopant. In case they comprise two or more chiral dopants, these may beneficially be selected in one of the known ways to compensate e.g. against temperature dependence of the cholesteric pitch and, hence, of the wavelength of selective reflection. Here in one host mixture chiral dopants having the same sign of the parameter $\alpha$ may be used as well as chiral dopants having the opposite sign of this parameter, depending on the nature of the parameters for the terms of higher order of equation (I), in particular of the parameter $\beta$, the parameter of the quadratic term.

In a particularly preferred embodiment of the present invention a single chiral dopant is used which shows a small temperature dependence of the chiral pitch induced in the respective host mixture, i.e. has a small parameter $\beta$.

All temperatures, in particular melting points and clearing points, of the materials are given in degrees centigrade.

Herein and especially in the following examples, the structures of the liquid crystal compounds are represented by abbreviations, which are also called "acronyms". The transformation of the abbreviations into the corresponding structures is straight forward according to the following three tables A to C.

All groups $C_nH_{2n+1}$, $C_mH_{2m+1}$ and $C_lH_{2l+1}$ are preferably straight chain alkyl groups with n, m and l C atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively E vinylene, wherein n, m and l preferably, independently of one another, denote 1 to 7.

Table A lists the symbols used for the ring elements, table B those for the linking groups and table C those for the symbols for the left-hand and the right-hand end groups of the molecules.

Table D lists exemplary molecular structures together with their respective codes.

**Table A: Ring Elements**

| | | | |
|---|---|---|---|
| C | 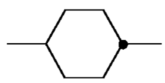 | P | 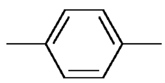 |
| D | 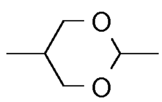 | DI | 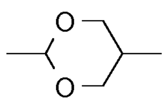 |
| A | 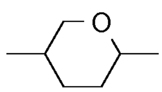 | AI | 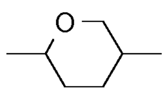 |
| G | 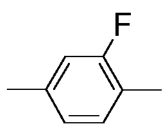 | GI | 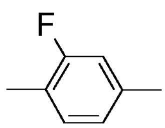 |

(continued)

| | | | |
|---|---|---|---|
| **U** | 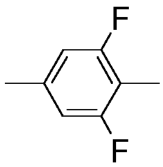 | **UI** | 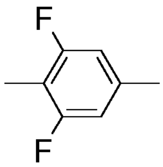 |
| **Y** | 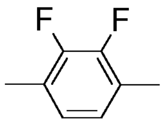 | | |
| **M** | 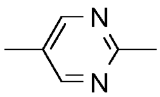 | **MI** | 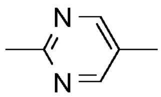 |
| **N** | 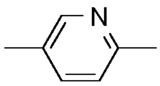 | **NI** | 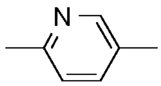 |
| **np** | 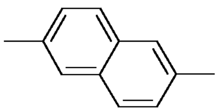 | | |
| **n3f** | 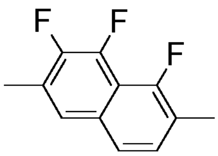 | **n3fI** | 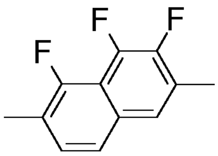 |
| **th** | 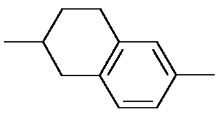 | **thI** | 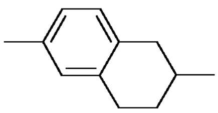 |
| **th2f** | 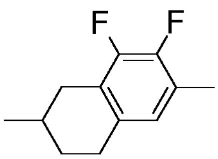 | **th2fI** | 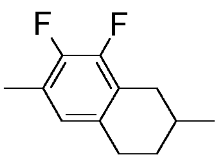 |
| **o2f** | 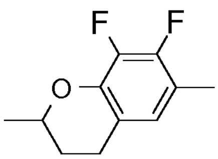 | **o2fI** | 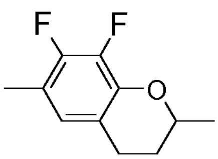 |
| **dh** | 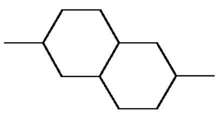 | | |
| **K** | 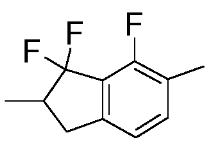 | **KI** | 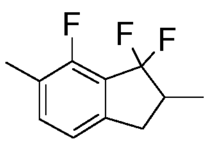 |
| **L** | 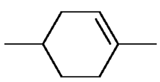 | **LI** | 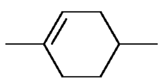 |

(continued)

| | | | |
|---|---|---|---|
| **F** | 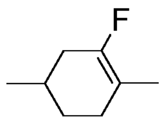 | **FI** | 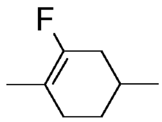 |

**Table B: Linking Groups**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | $CnH_{2n+1}-$ | **-n** | $-CnH_{2n+1}$ |
| **-nO-** | $CnH_{2n+1}-O-$ | **-On** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH- C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-Cl-** | Cl- | **-Cl** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C≡C- | **-A** | -C≡C-H |
| **-nA-** | $CnH_{2n+1}-C≡C-$ | **-An** | $-C≡C-C_nH_{2n+1}$ |
| **-NA-** | N≡C-C≡C- | **-AN** | -C≡C-C≡N |
| **Left hand side, used in combination with others only** | | **Right hand side, used in combination with others only** | |
| **-...n...-** | $-C_nH_{2n}-$ | **-...n...** | $-C_nH_{2n}-$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n and m each are integers and three points "..." indicate a space for other symbols of this table.

Preferably the liquid crystalline media according to the present invention comprise besides the compound(s) of formula I one or more compounds selected from the group of compounds of the formulae of the following table.

## Table D

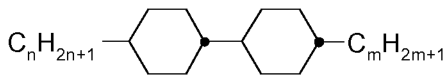

**CC-n-m**

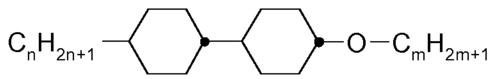

**CC-n-Om**

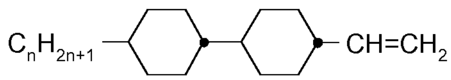

**CC-n-V**

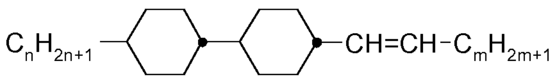

**CC-n-Vm**

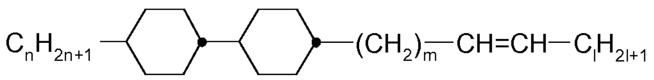

**CC-n-mVl**

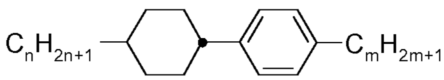

**CP-n-m**

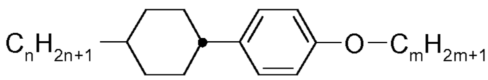

**CP-n-Om**

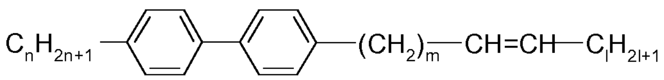

**PP-n-mVl**

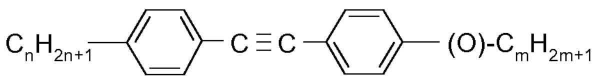

**PTP-n-(O)m**

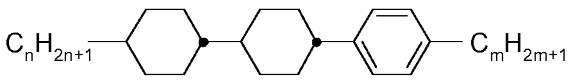

**CCP-n-m**

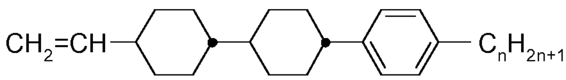

**CCP-V-n**

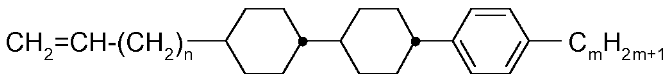

**CCP-Vn-m**

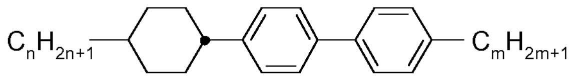

**CPP-n-m**

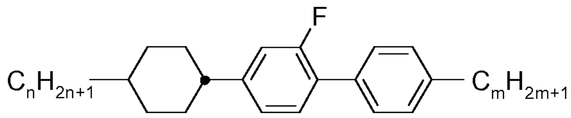

**CGP-n-m**

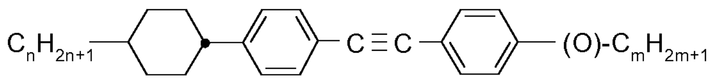

**CPTP-n-(O)m**

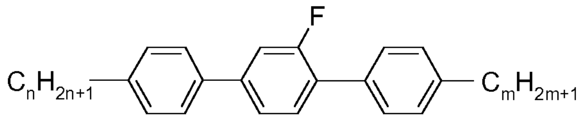

**PGP-n-m**

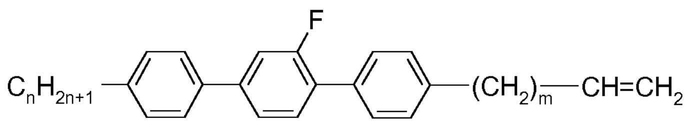

**PGP-n-mV**

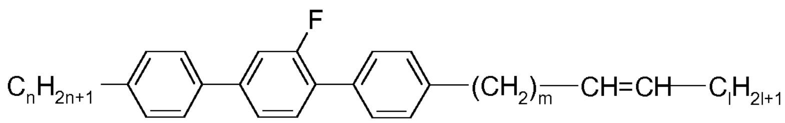

**PGP-n-mVI**

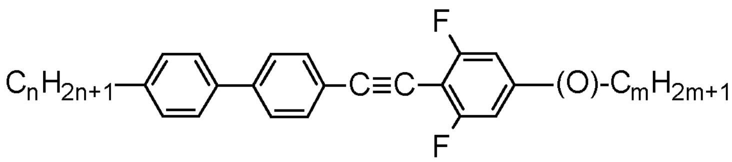

**PPTUI-n-(O)m**

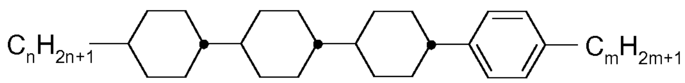

**CCCP-n-m**

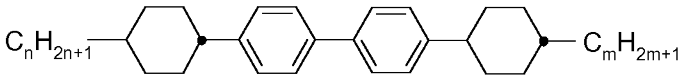

**CPPC-n-m**

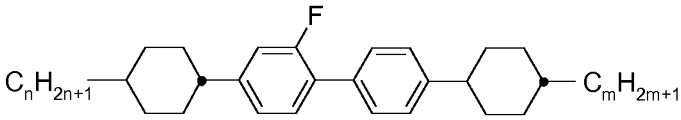

**CGPC-n-m**

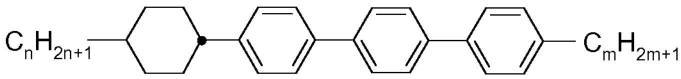

**CPPP-n-m**

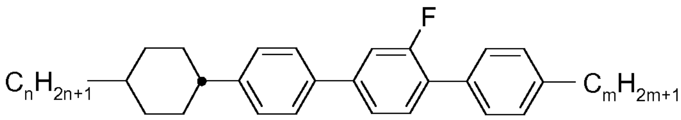

**CPGP-n-m**

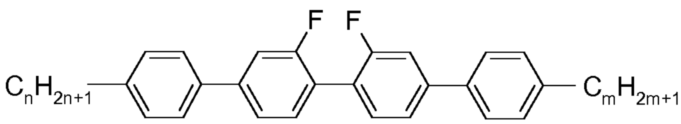

**PGGIP-n-m**

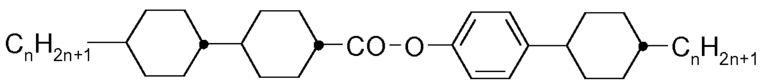

**CCZPC-n-m**

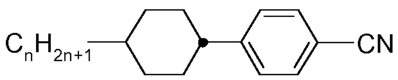

**CP-n-N**

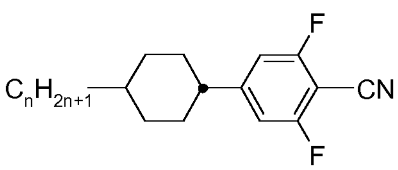

**CU-n-N**

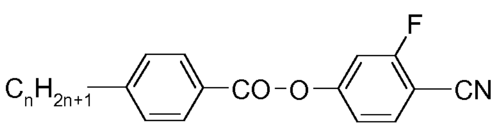

**PZG-n-N**

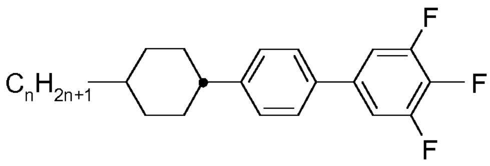

**CPU-n-F**

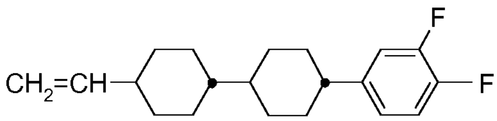

**CCG-V-F**

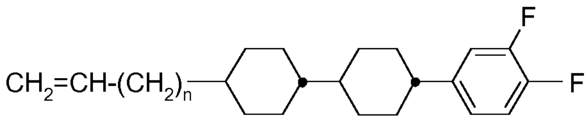

**CCG-Vn-F**

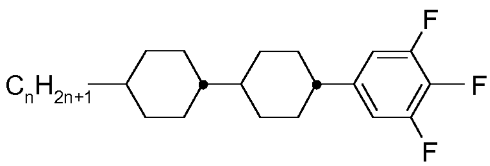

**CCU-n-F**

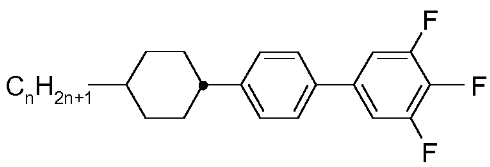

**CPU-n-F**

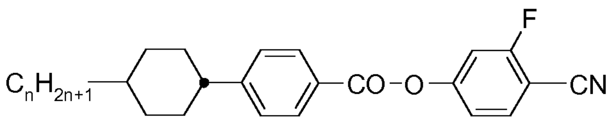

**CPZG-n-N**

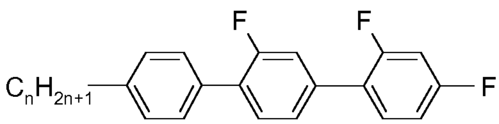

**PGIGI-n-F**

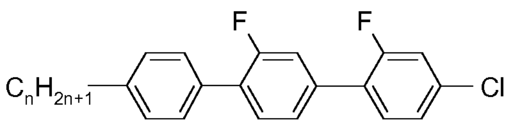

**PGIGI-n-Cl**

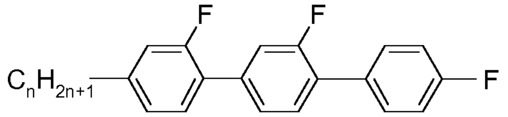

GGP-n-F

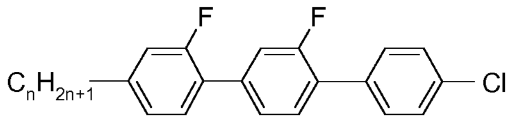

GGP-n-Cl

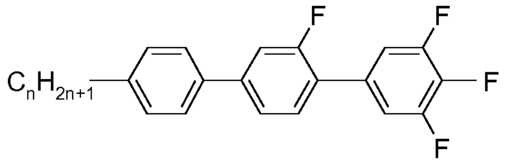

PGU-n-F

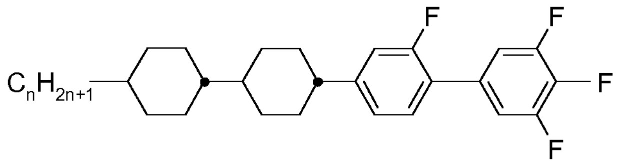

CCGU-n-F

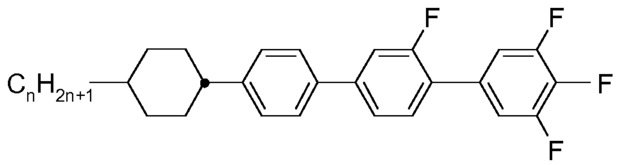

CPGU-n-F

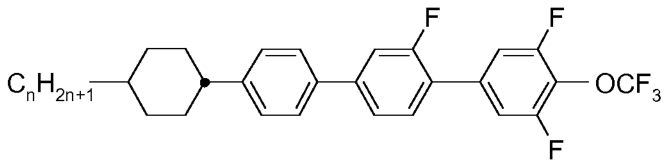

CPGU-n-OT

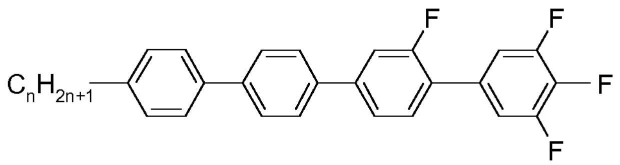

PPGU-n-F

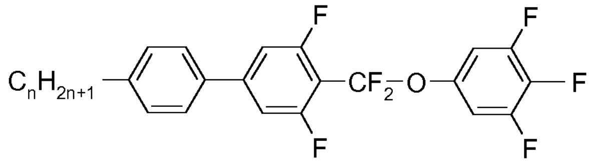

**PUQU-n-F**

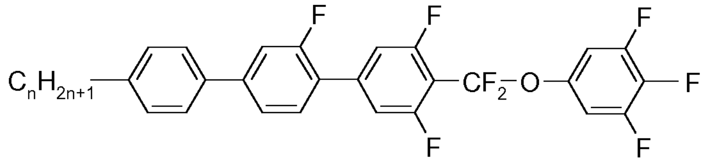

**PGUQU-n-F**

Table E lists chiral dopants, which are preferably used in the liquid crystalline media according to the present invention.

## Table E

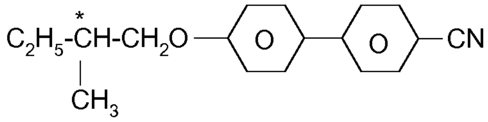

**C 15**

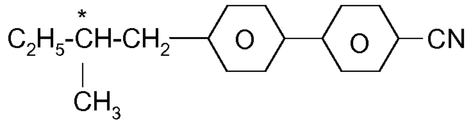

**CB 15**

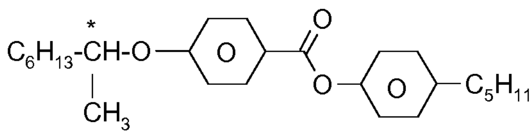

**CM 21**

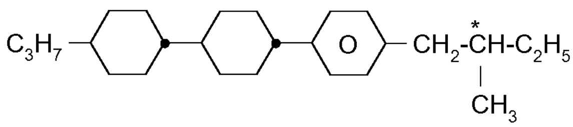

**CM 44**

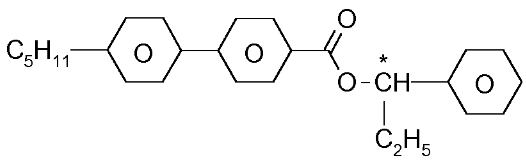

**CM 45**

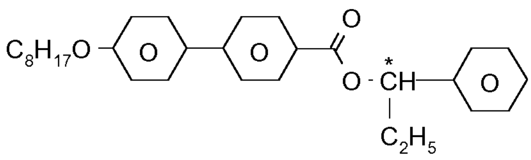

**CM 47**

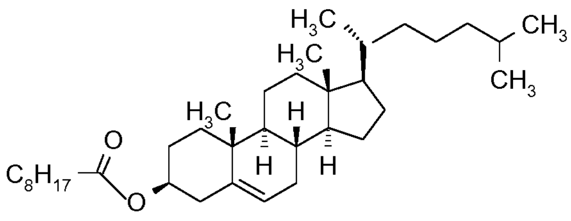

**CN**

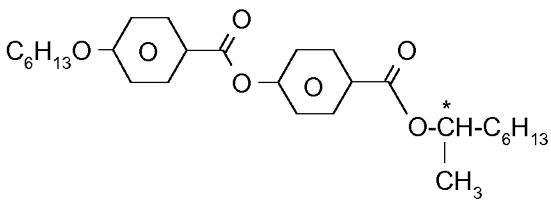

**R S-811 / S-811**

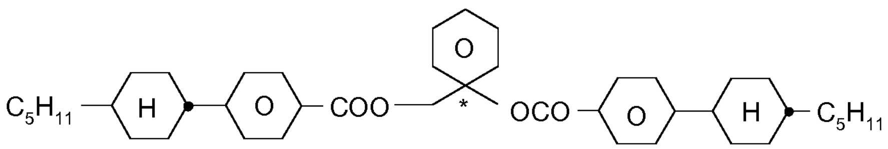

**R-1011 / S-1011**

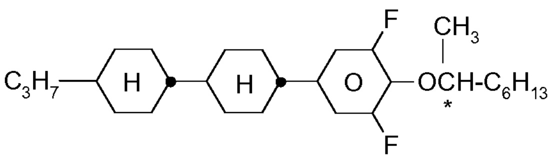

**R-2011 / S-2011**

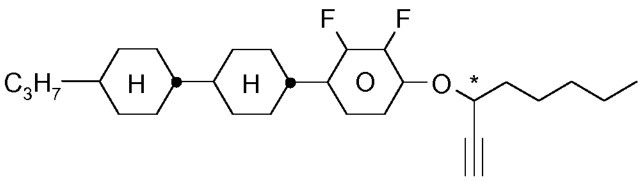

**R-3011 / S-3011**

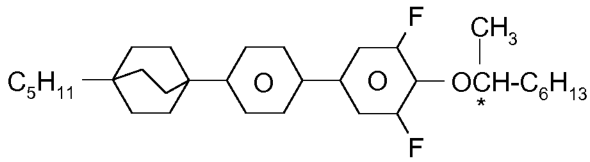

**R-4011 / S-4011**

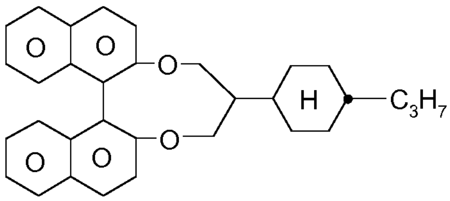

**R-5011 / S-5011**

In a preferred embodiment of the present invention the media according to the present invention comprise one or more compounds selected from the group of compounds of table E.

Table F lists stabilizers, which are preferably used in the liquid crystalline media according to the present invention.

## Table F

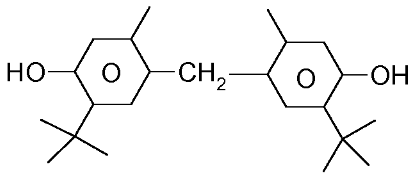

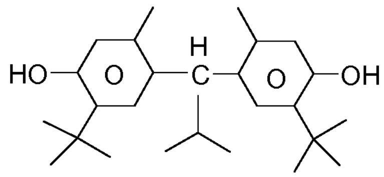

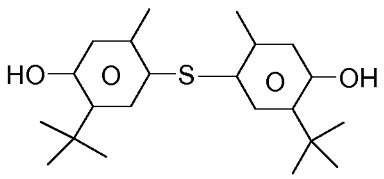

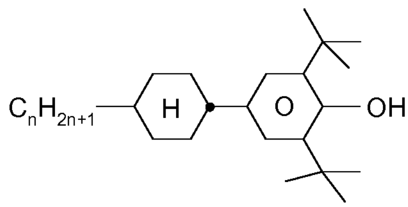

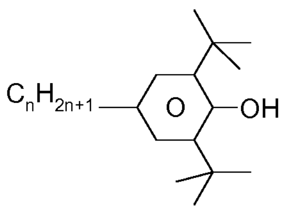

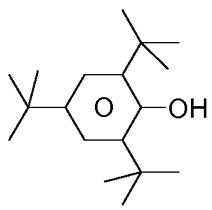

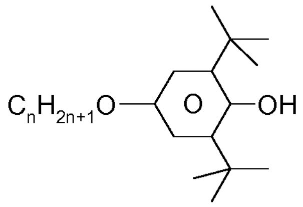

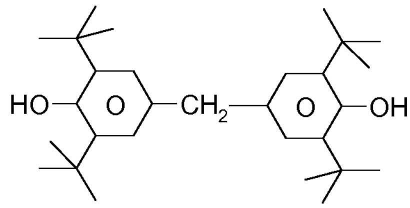

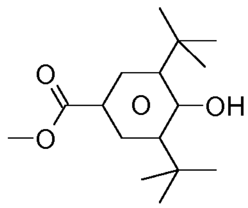

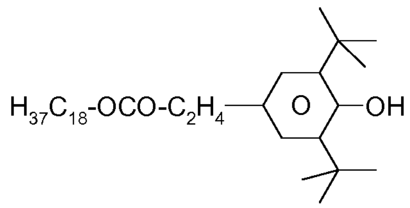

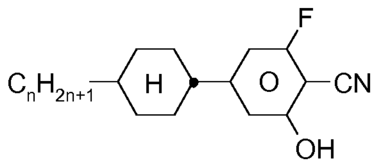

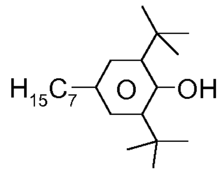

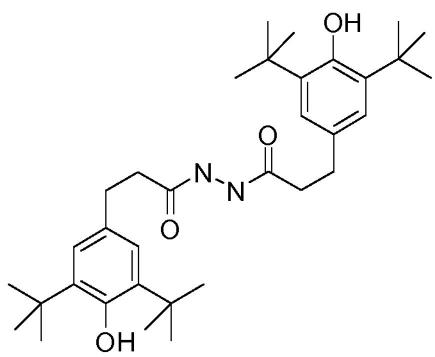

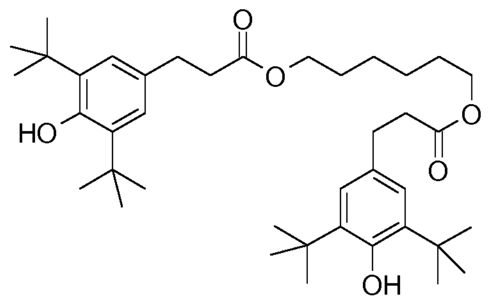

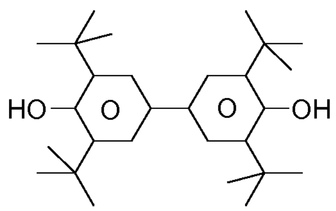

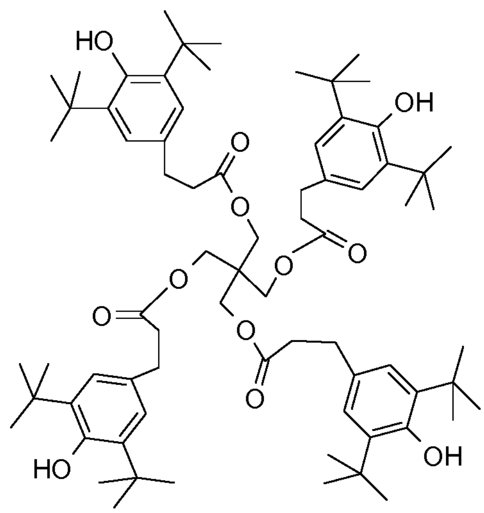

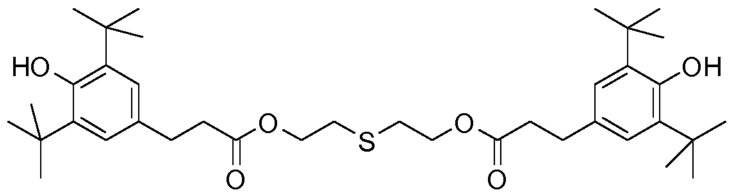

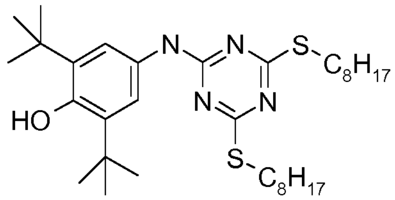

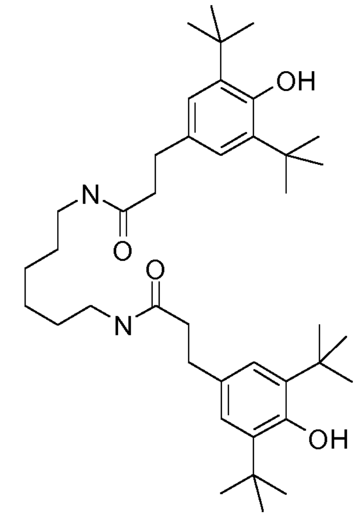

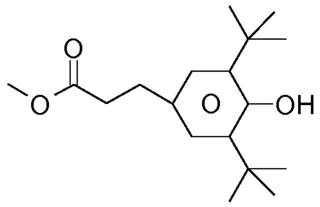

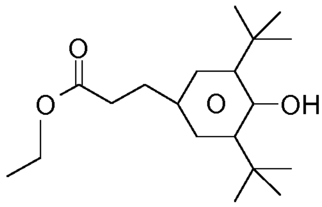

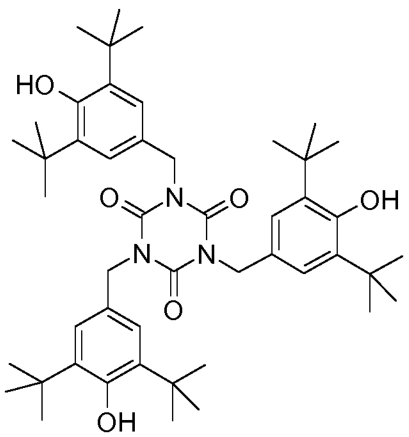

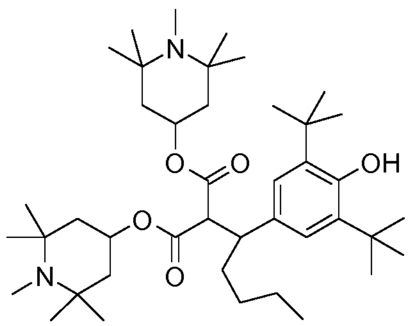

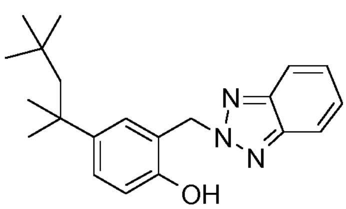

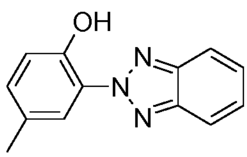

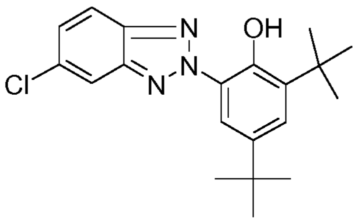

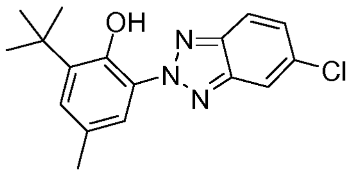

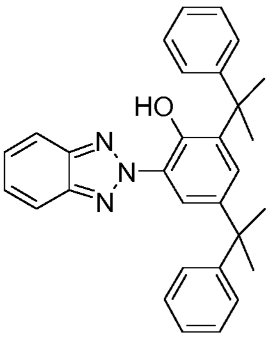

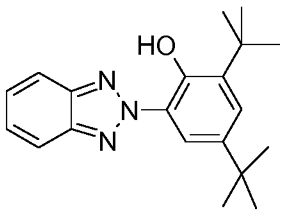

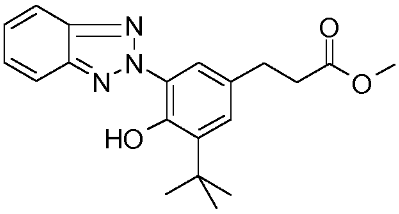

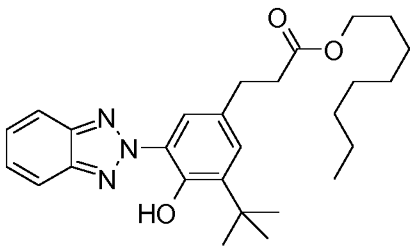

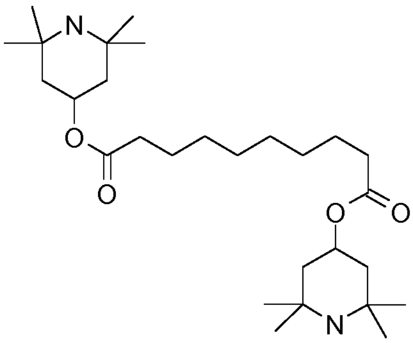

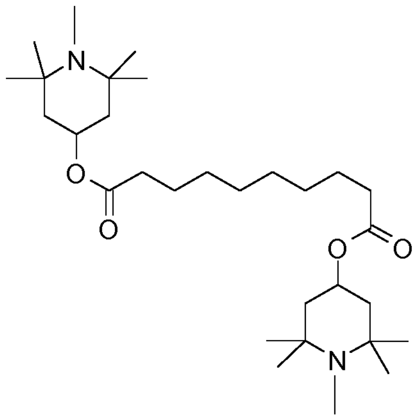

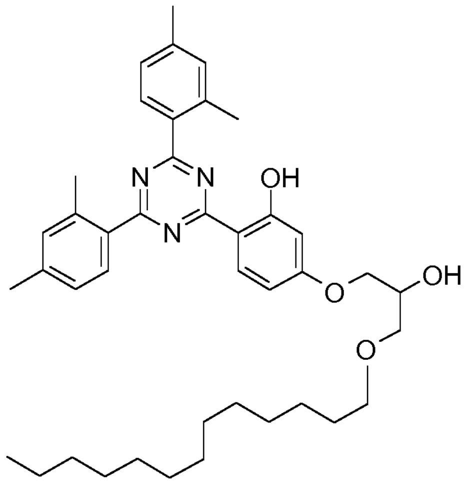

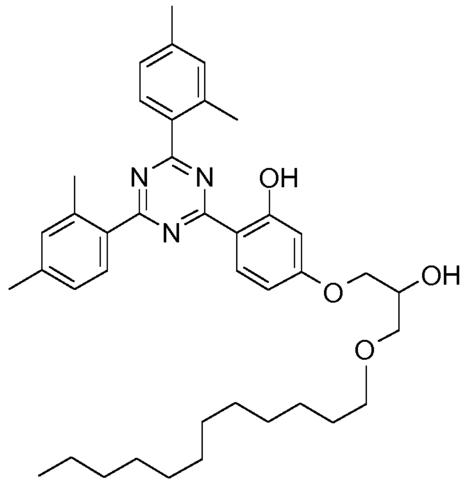

In this table F n means an integer in the range from 1 to 12.

In a preferred embodiment of the present invention the media according to the present invention comprise one or more compounds selected from the group of compounds of Table F.

**Table G**

Table G collates example compounds which can be used in the LC media according to the present invention, preferably as reactive mesogenic compounds. Preferably an initiator or a mixture of two or more initiators is added for the polymerisation. The initiator or initiator mixture is preferably added in amounts of 0.001% to 2% by weight, based on the mixture. A suitable initiator is, for example, Irgacure®651 (from BASF).

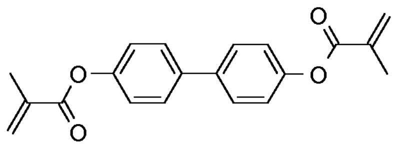

RM-1

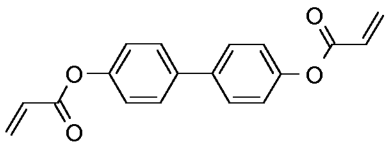

RM-2

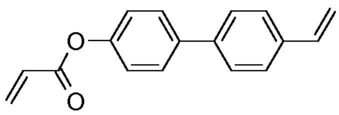

RM-3

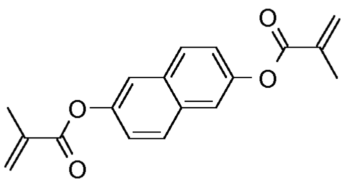

RM-4

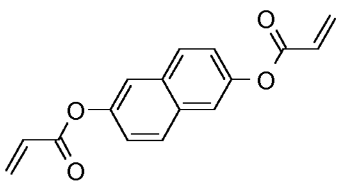

RM-5

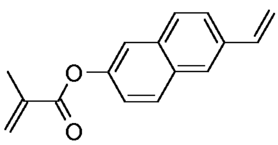

RM-6

(continued)

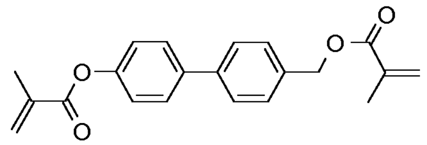

RM-7

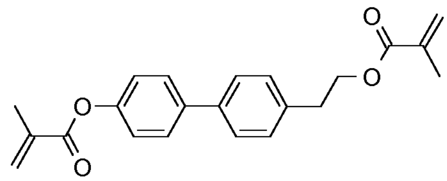

RM-8

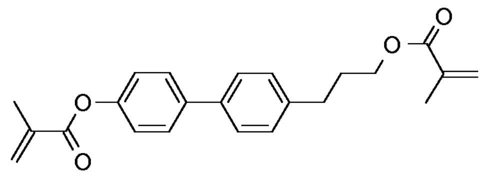

RM-9

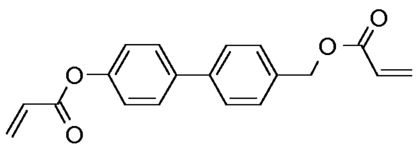

RM-10

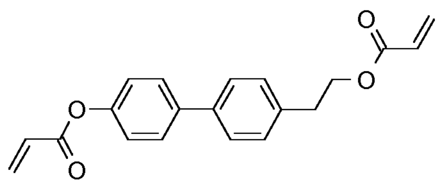

RM-11

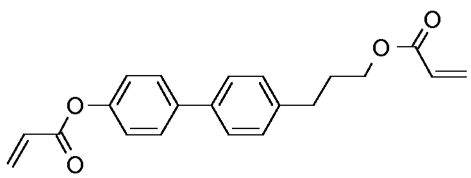

RM-12

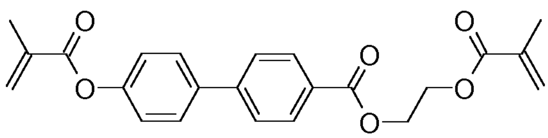

RM-13

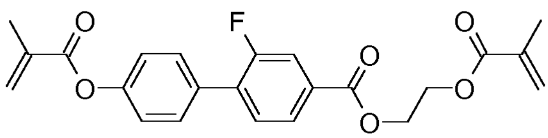

RM-14

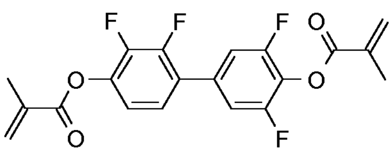

RM-15

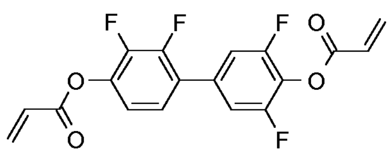

RM-16

(continued)

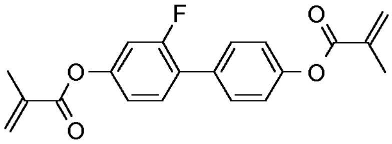
RM-17

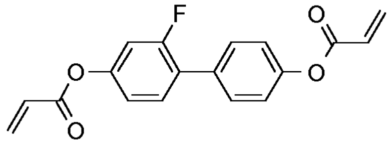
RM-18

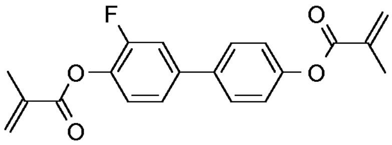
RM-19

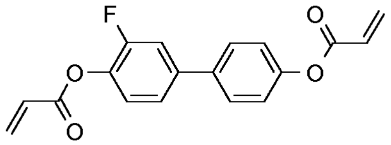
RM-20

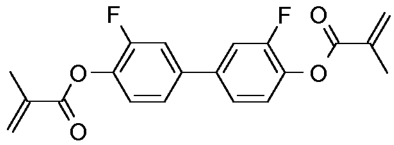
RM-21

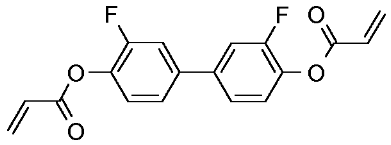
RM-22

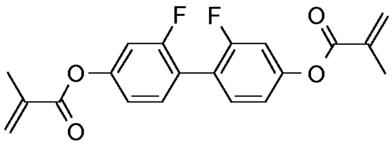
RM-23

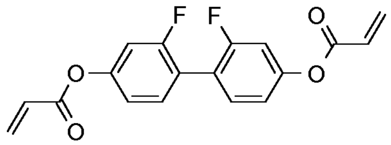
RM-24

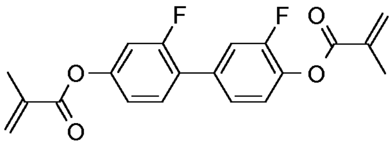
RM-25

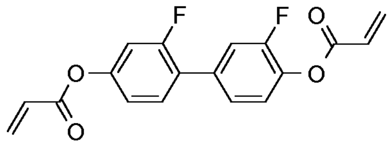
RM-26

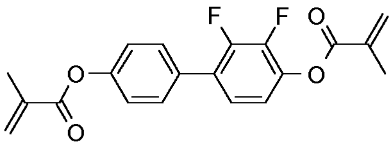
RM-27

(continued)

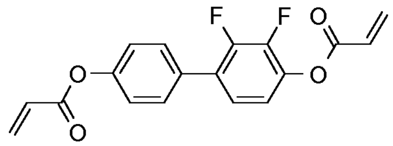
RM-28

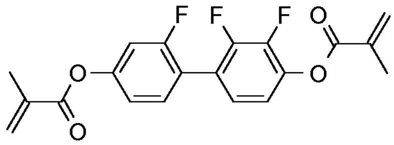
RM-29

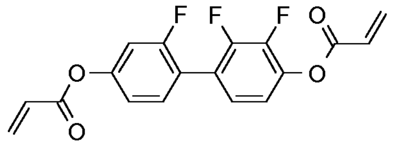
RM-30

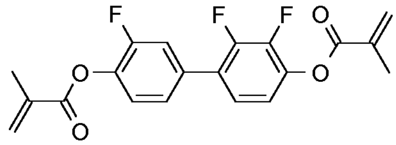
RM-31

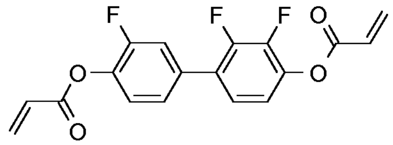
RM-32

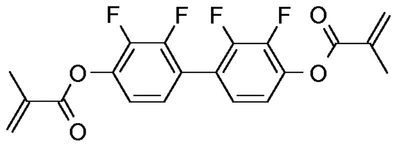
RM-33

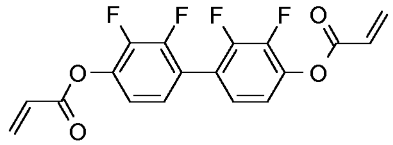
RM-34

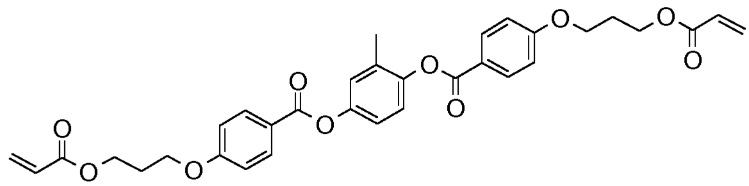
RM-35

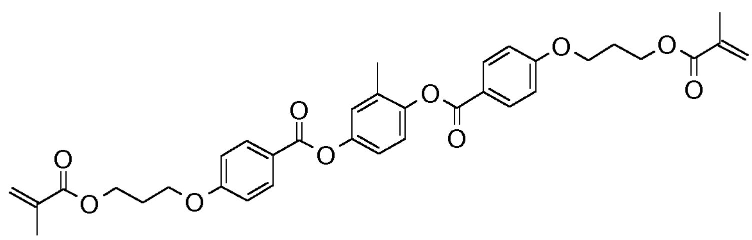
RM-36

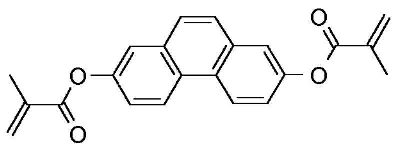
RM-37

(continued)

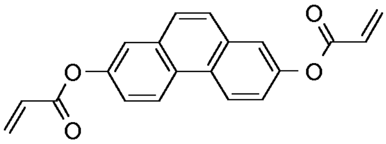

RM-38

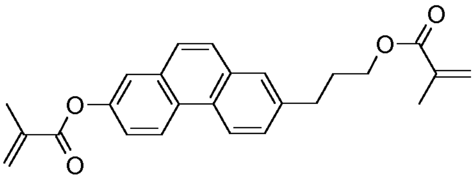

RM-39

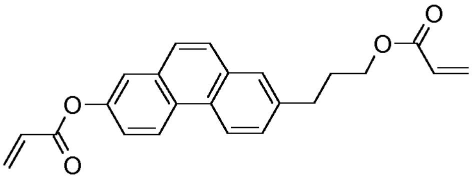

RM-40

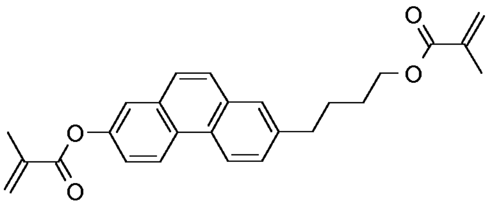

RM-41

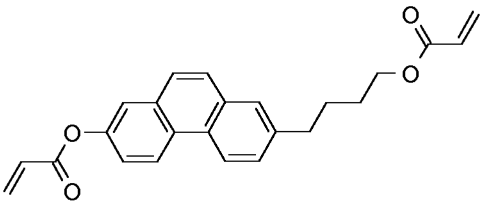

RM-42

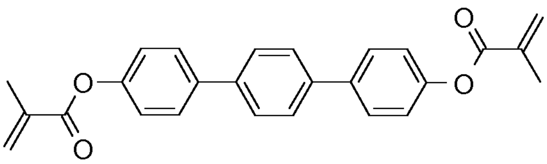

RM-43

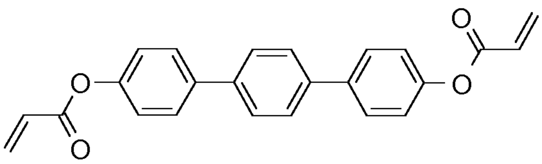

RM-44

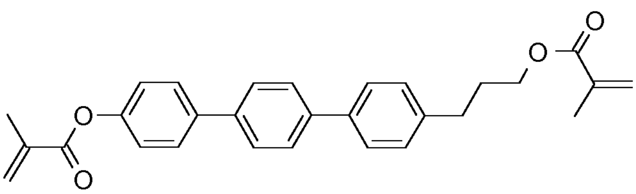

RM-45

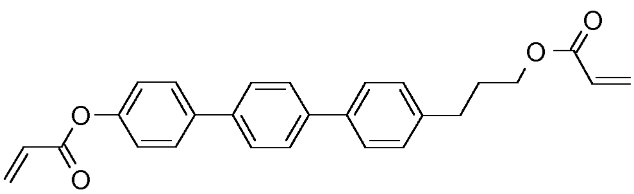

RM-46

(continued)

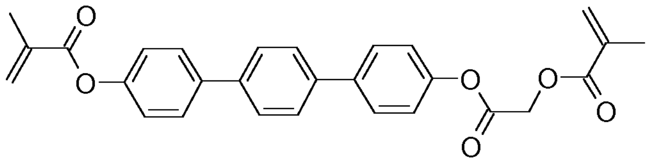

RM-47

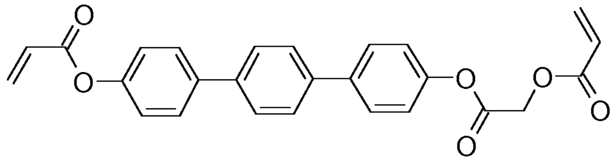

RM-48

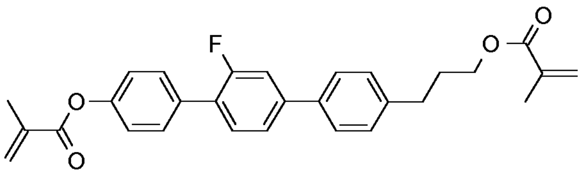

RM-49

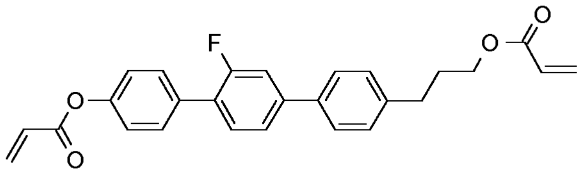

RM-50

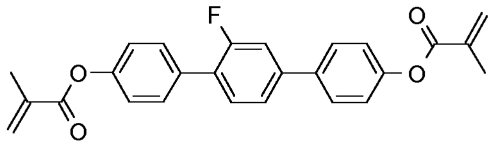

RM-51

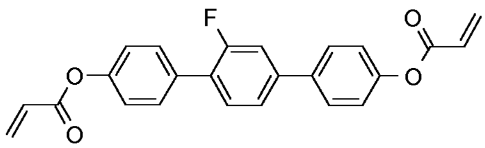

RM-52

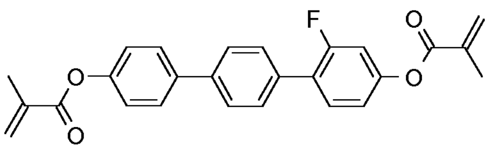

RM-53

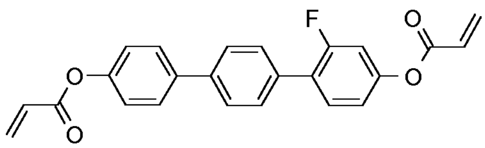

RM-54

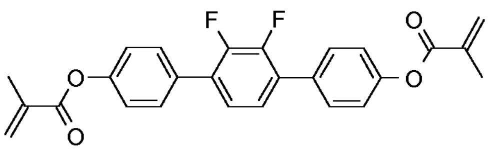

RM-55

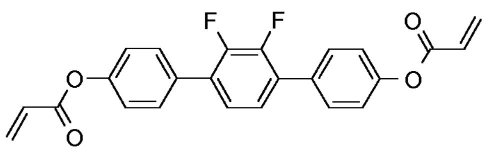

RM-56

(continued)

RM-57

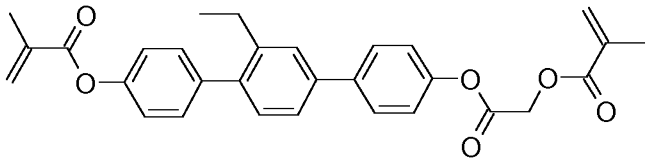

RM-58

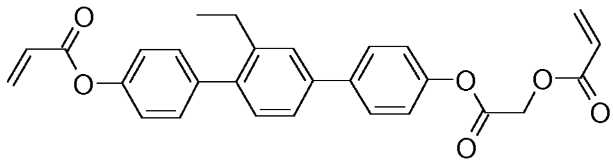

RM-59

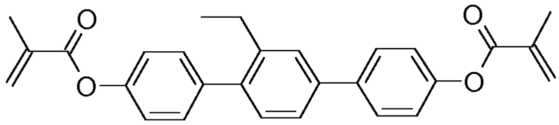

RM-60

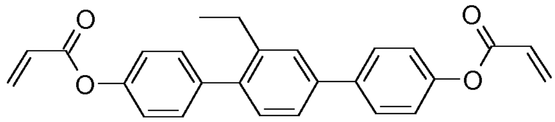

RM-61

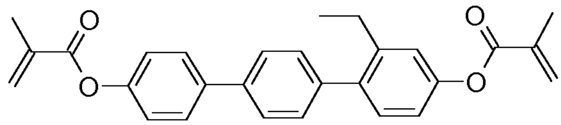

RM-62

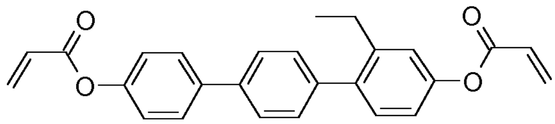

RM-63

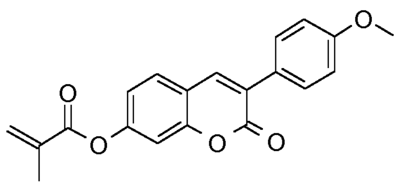

RM-64

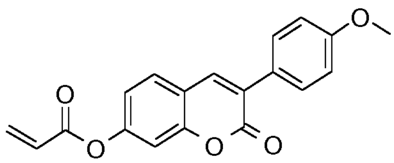

RM-65

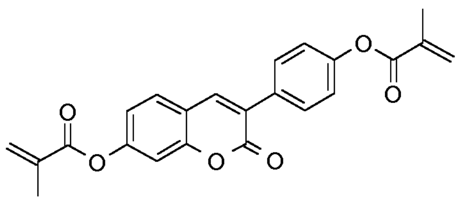

RM-66

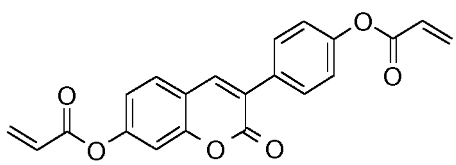

(continued)

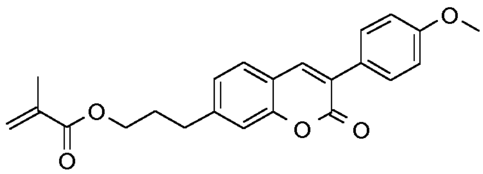

RM-67

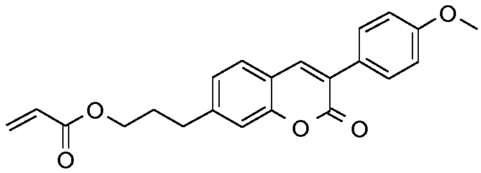

RM-68

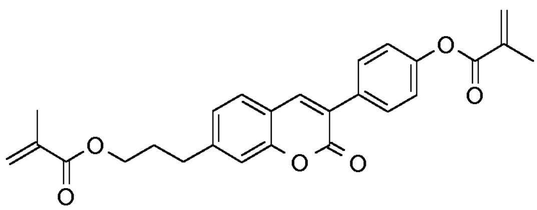

RM-69

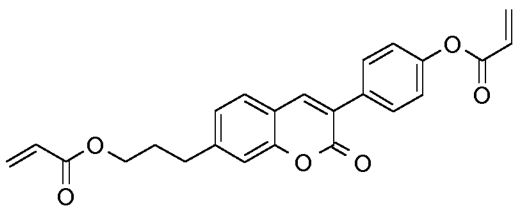

RM-70

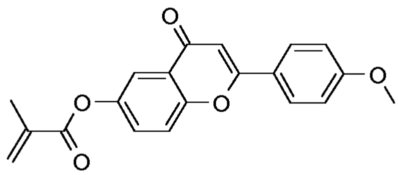

RM-71

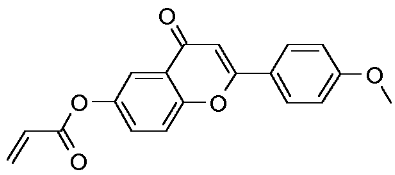

RM-72

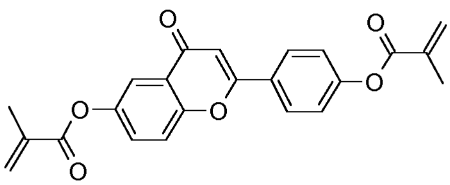

RM-73

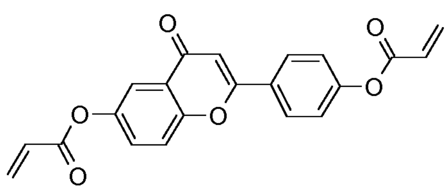

RM-74

(continued)

RM-75

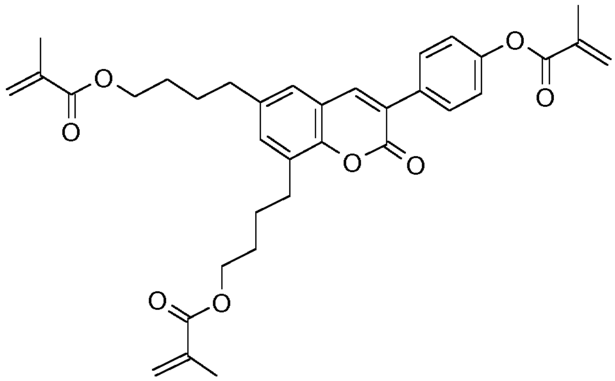

RM-76

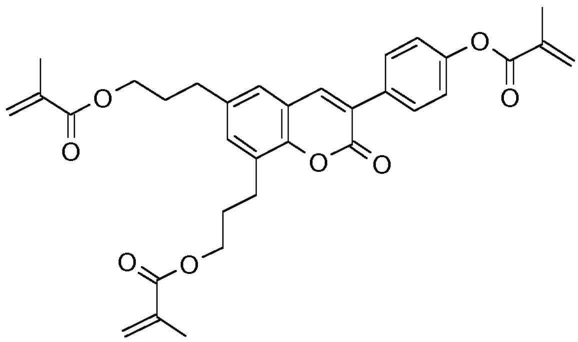

RM-77

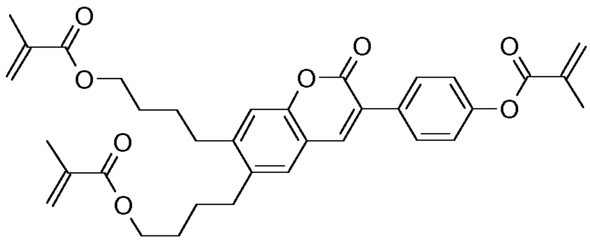

RM-78

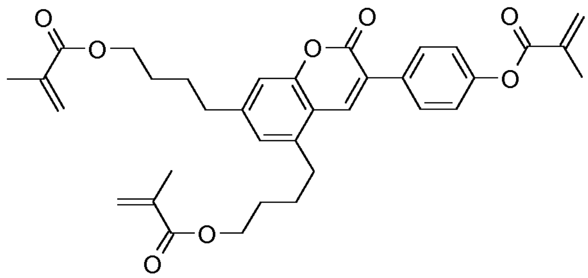

RM-79

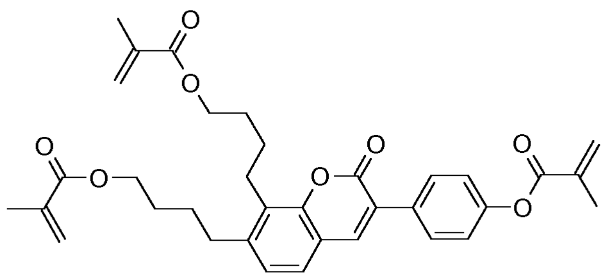

(continued)

RM-80

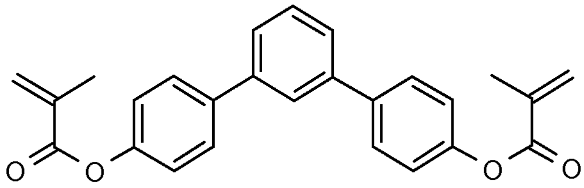

RM-81

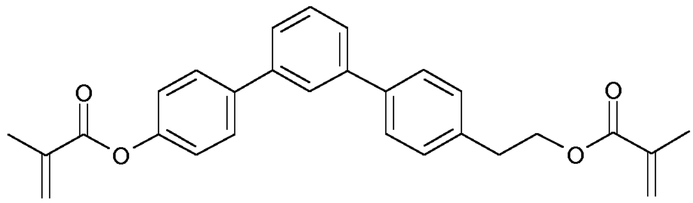

RM-82

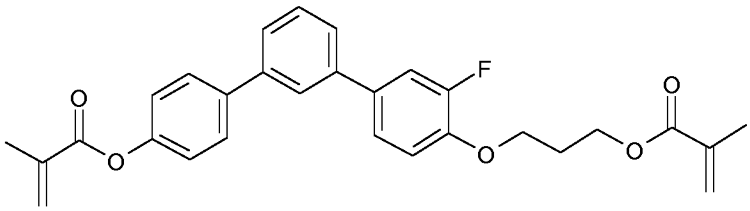

RM-83

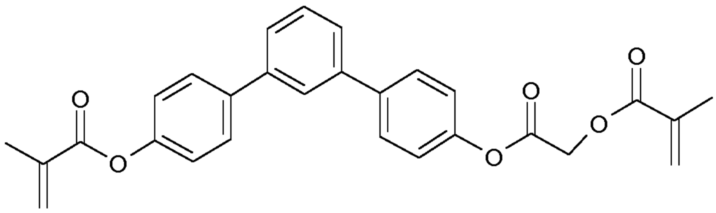

RM-84

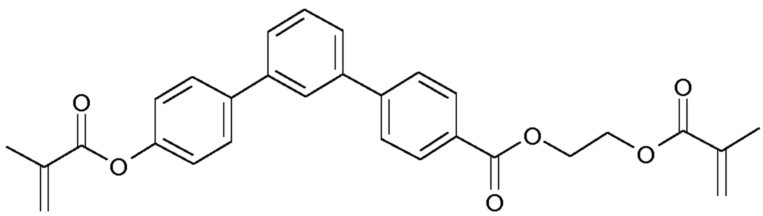

RM-85

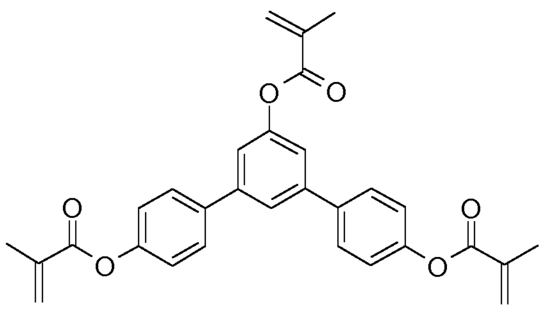

RM-86

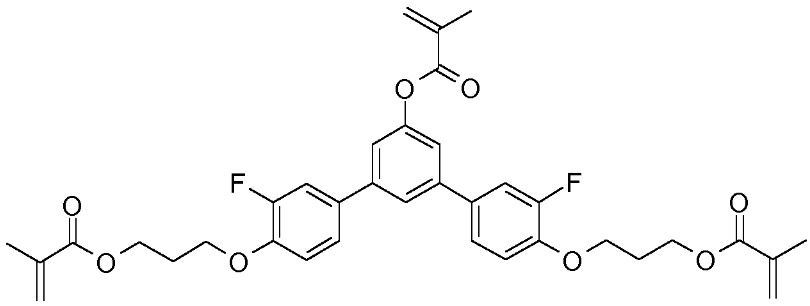

(continued)

RM-87

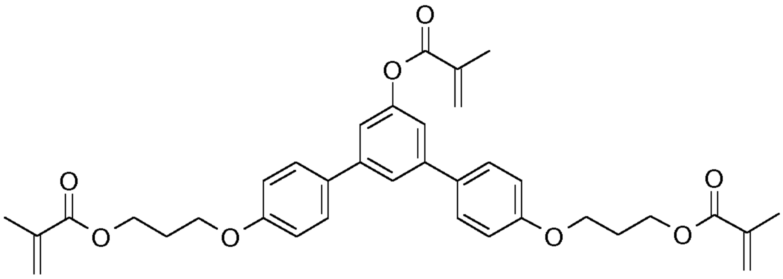

RM-88

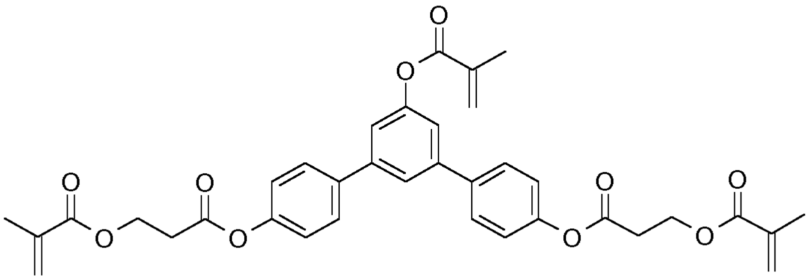

RM-89

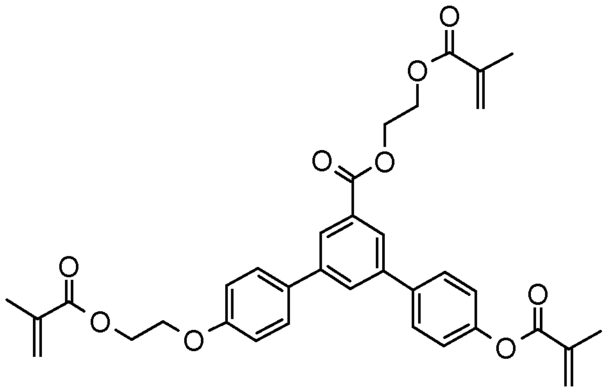

RM-90

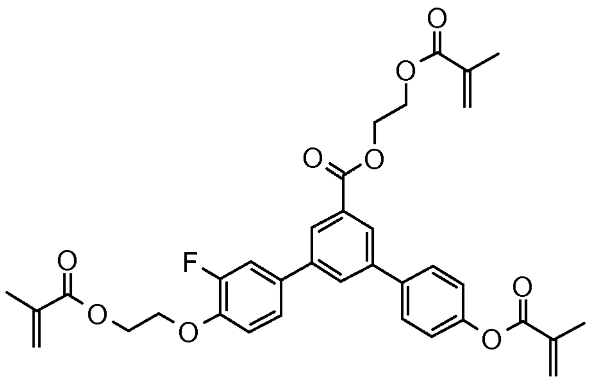

RM-91

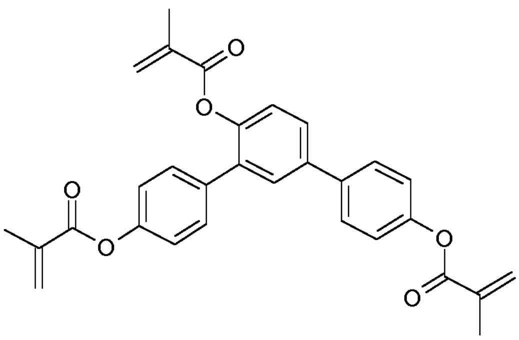

(continued)

RM-92

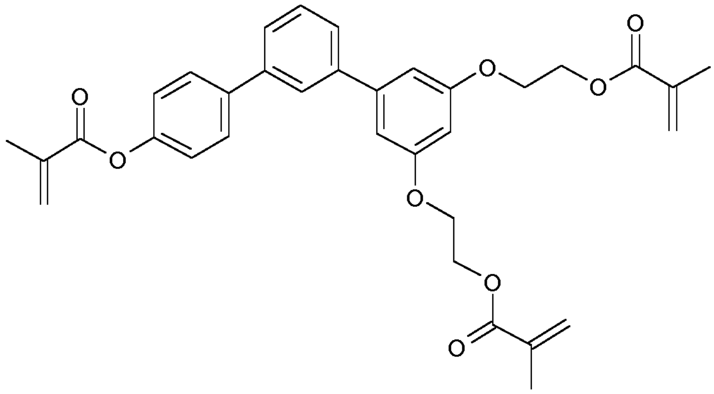

RM-93

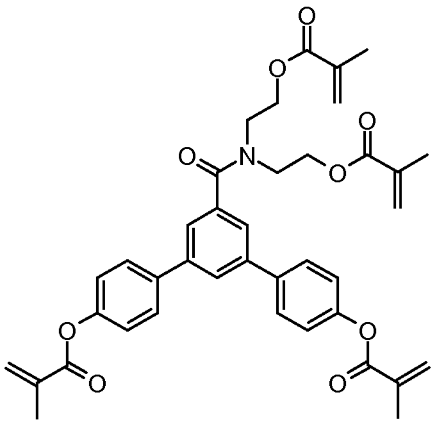

RM-94

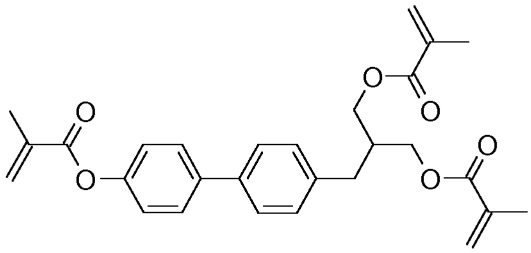

RM-95

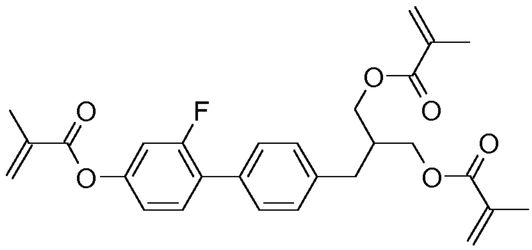

RM-96

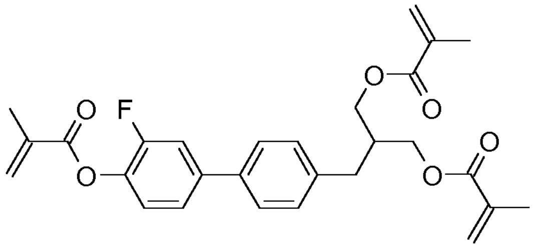

(continued)

RM-97

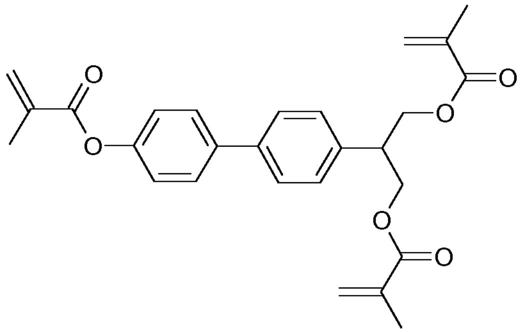

RM-98

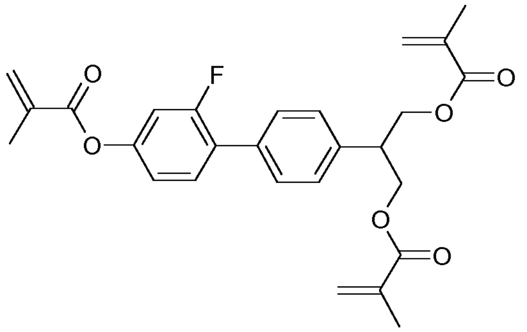

RM-99

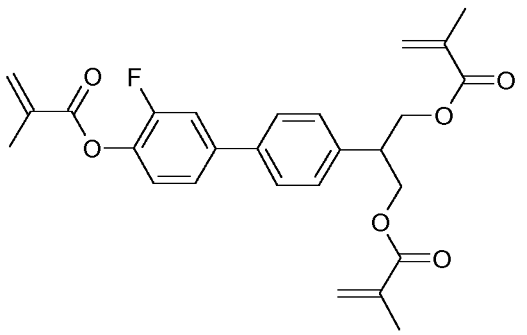

RM-100

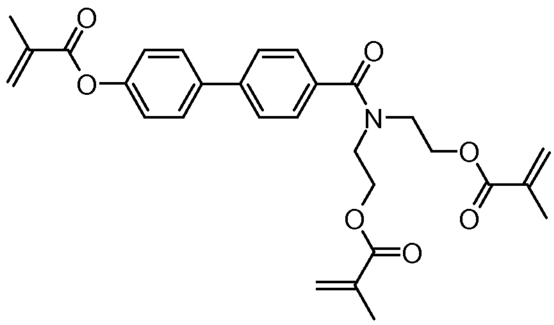

RM-101

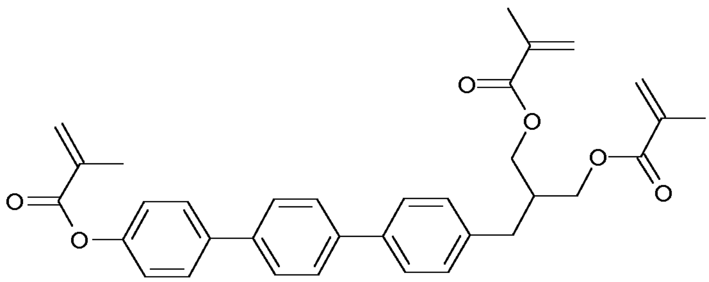

(continued)

RM-102

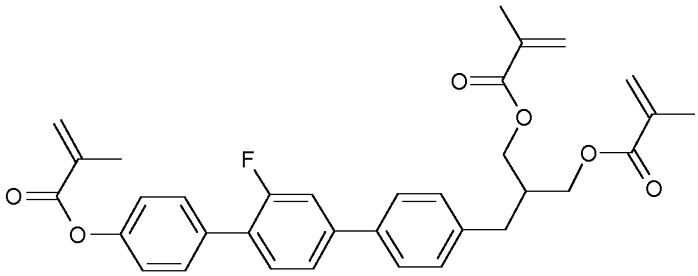

RM-103

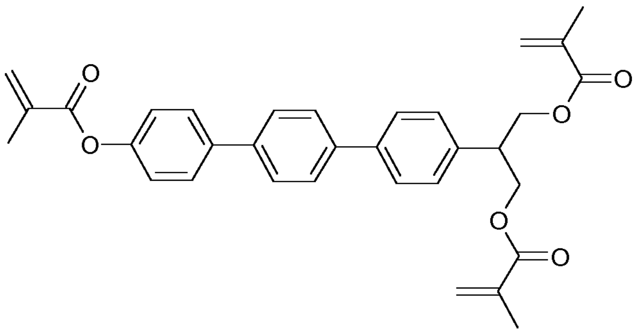

RM-104

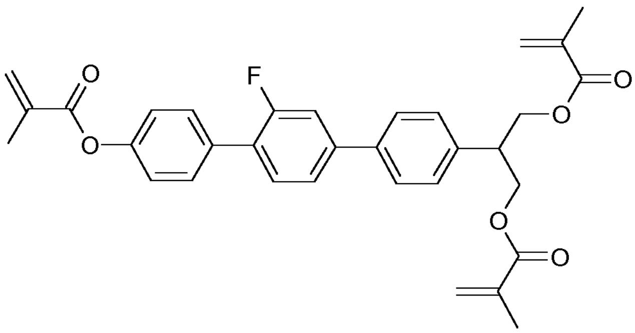

RM-105

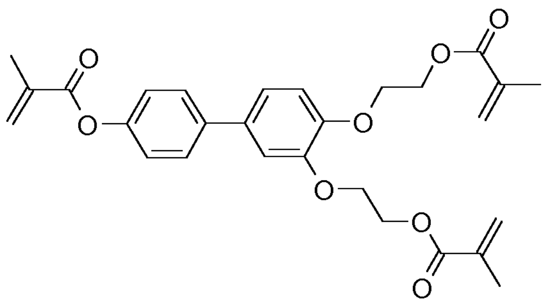

RM-106

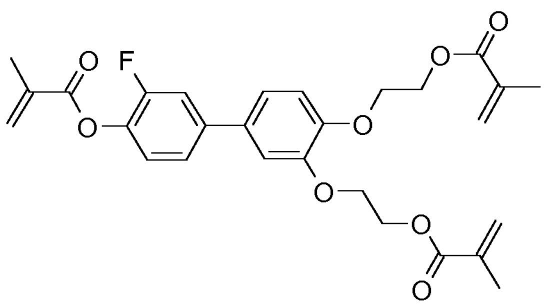

(continued)

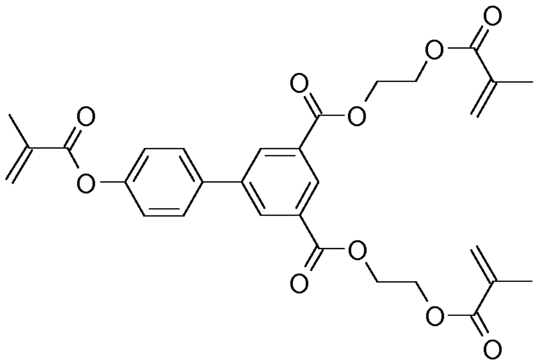

RM-107

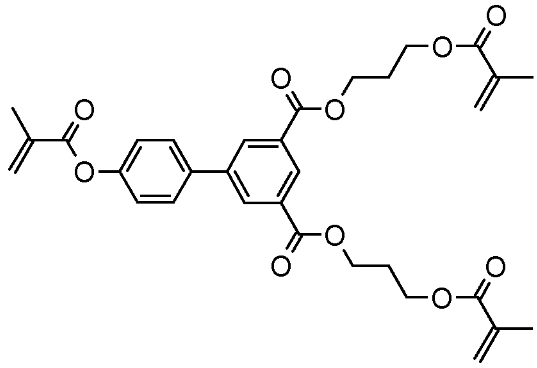

RM-108

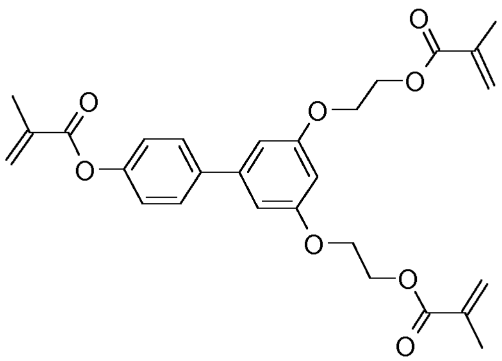

RM-109

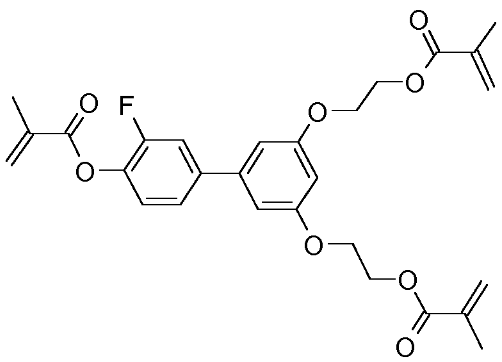

RM-110

(continued)

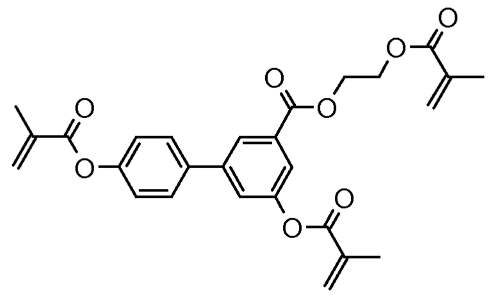

RM-111

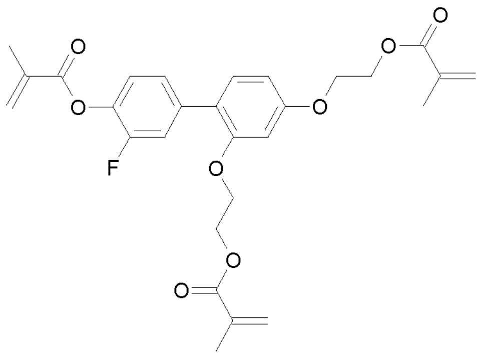

RM-112

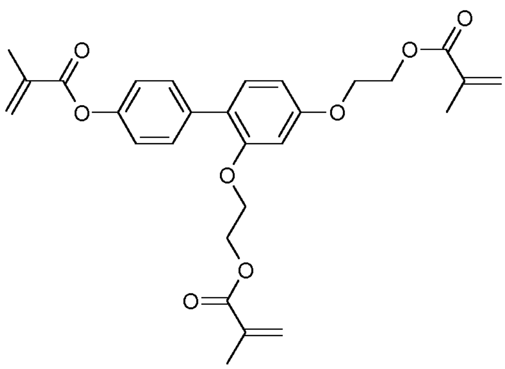

RM-113

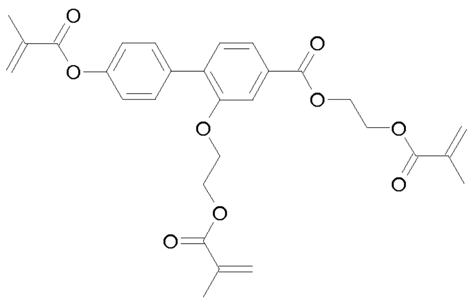

RM-114

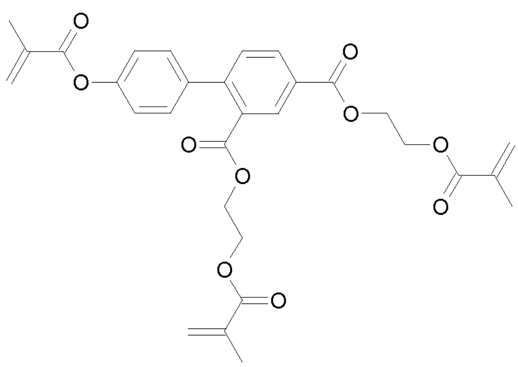

RM-115

(continued)

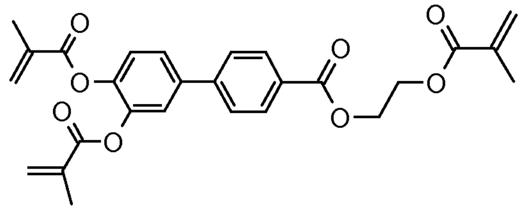

RM-116

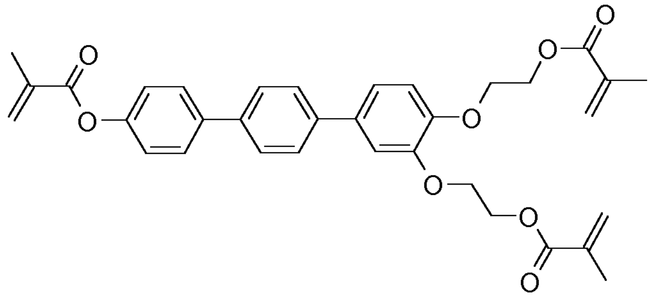

RM-117

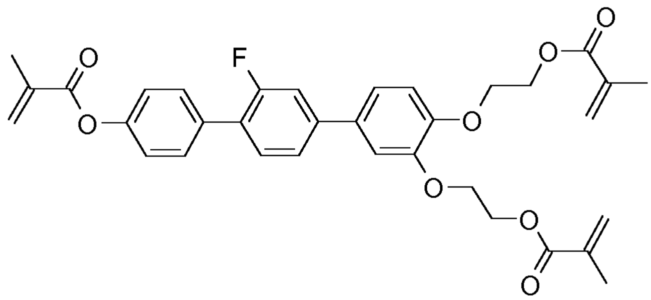

RM-118

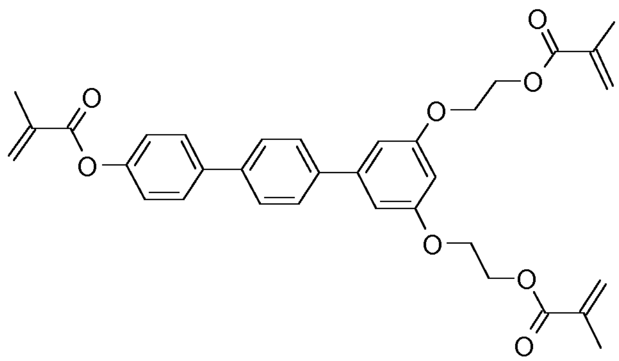

RM-119

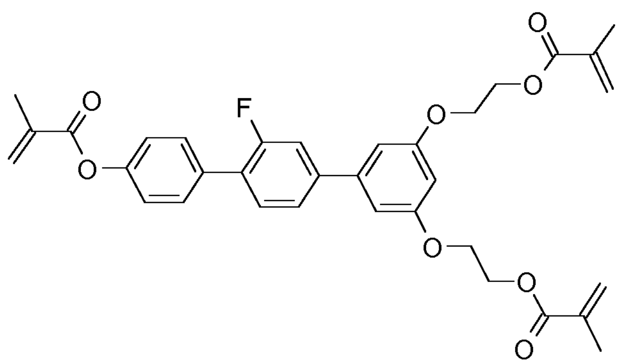

RM-120

(continued)

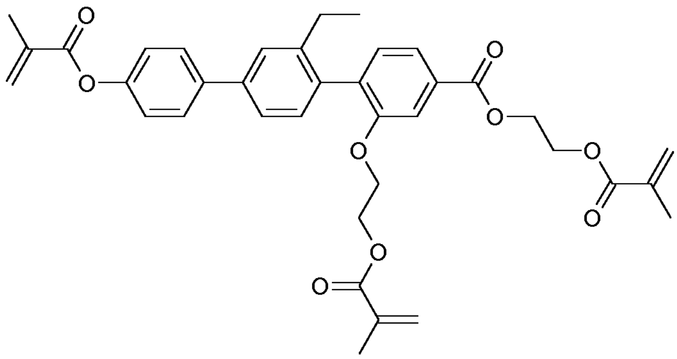

RM-121

In a preferred embodiment of the present invention, the mesogenic media comprise one or more compounds selected from the group of the compounds from Table G.

The liquid crystalline media according to the present invention comprise preferably four or more, more preferably six or more, even more preferably seven or more, and particularly preferably eight or more compounds selected from the group of compounds of table D, preferably compounds of three or more different formulae selected from the group of formulae of table D. It is particularly preferred that the medium additionally contains one, two or more compounds selected from the group of formulae of table E. Even more preferably the medium further contains one, two or more compounds selected from the group of formulae of table G.

The following examples are merely illustrative of the present invention and they should not be considered as limiting the scope of the invention in any way. The examples and modifications or other equivalents thereof will become apparent to those skilled in the art in the light of the present disclosure.

However, the physical properties and compositions shown in the following illustrate which properties can be achieved and in which ranges they can be modified. Especially the combination of the various properties, which can be preferably achieved, is thus well defined.

## Examples

Liquid crystal mixtures and composite systems are realized with the compositions and properties as given in the following. Their properties and optical performance are investigated.

### Example 1

A liquid-crystal mixture B-1 is prepared and characterized with respect to its general physical properties, having the composition and properties as indicated in the following table.

| Base Mixture B-1 | | | Physical Properties | | |
|---|---|---|---|---|---|
| Compound | | | T(N,I) | = 100.0 | °C |
| No. | Abbreviation | Conc. /% | | | |
| 1 | PUQU-2-F | 7.00 | $n_e$ (20 °C, 589.3 nm) | = 1.618 | |
| 2 | APUQU-3-F | 8.00 | $\Delta n$ (20 °C, 589.3 nm) | = 0.134 | |
| 3 | CCGU-3-F | 10.00 | | | |
| 4 | CDUQU-3-F | 10.00 | $\varepsilon_{\|\|}$ (20 °C, 1 kHz) | = 60.6 | |
| 5 | DGUQU-4-F | 8.00 | $\Delta\varepsilon$ (20 °C, 1 kHz) | = 52.4 | |
| 6 | CCP-3-1 | 8.00 | | | |
| 7 | CCQU-3-F | 15.00 | | | |
| 8 | CCQU-5-F | 8.00 | | | |
| 9 | PZG-2-N | 8.00 | | | |
| 10 | PZG-3-N | 8.00 | | | |
| 11 | PZG-4-N | 10.00 | | | |
| Σ | | 100.00 | | | |

A cholesteric mixture C-1 is prepared by adding the chiral dopant R-5011 available from Merck KGaA, Darmstadt, Germany to the base mixture B-1, wherein C-1 contains 98.37% of the mixture B-1 and 1.63% of R-5011.

Then a mixture M-1 is prepared by adding 2-ethylhexyl acrylate, isobornyl methacrylate and the photoinitiator Irgacure® 651 (abbreviated as IRG-651)

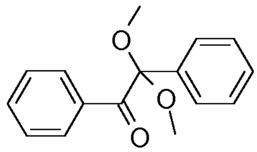

,

available from Ciba, Switzerland,

to the mixture C-1, wherein M-1 contains 95.96% of the mixture C-1, 2.00% of 2-ethylhexyl acrylate, 2.00% of isobornyl methacrylate and 0.04% of IRG-651.

The mixture M-1 is filled into a test cell having alkali-free glass substrates with ITO electrodes as well as rubbed polyimide alignment layers with a thickness of 50 nm, wherein the cell gap is 6 μm. Subsequently polymerisation by exposure to UV radiation through a photomask is carried out. The photomask (chromium coated on quartz) exhibits a structure of an array of opaque squares each with a side length of 0.98 mm, wherein each square is bounded on all sides by transparent strips each having a width of 20 μm. Each opaque square is thus boxed by a transparent frame and separated from neighbouring squares.

Polymerisation is carried out by irradiating the test cell with UV light from a lamp (Mirho, high pressure mercury vapour lamp with a 365 nm bandpass filter, power = 10 mW/cm$^2$) for 2,000 s, wherein polymeric walls are formed in the regions left exposed by the frame-like transparent structures of the photomask.

Then the photomask is removed and in a subsequent step the whole test cell, i.e. without spatial discrimination, is irradiated with UV light (power = 10 mW/cm$^2$) for 1,000 s.

The test cell obtained after the polymerisation steps exhibits the desired polymer walls, while furthermore providing suitable switching behaviour and electro-optical performance in the active regions and favourable contrast with respect to the inactive areas, in which unwanted reflection is reduced.

Comparative Example 2

A liquid-crystal mixture B-2 is prepared and characterized with respect to its general physical properties, having the composition and properties as indicated in the following table.

| Base Mixture B-2 | | | Physical Properties | | |
|---|---|---|---|---|---|
| Compound | | | T(N,I) | = 132.0 | °C |
| No. | Abbreviation | Conc. /% | | | |
| 1 | CPZG-3-N | 10.00 | $n_e$ (20 °C, 589.3 nm) | = 1.820 | |
| 2 | PZG-2-N | 17.00 | $\Delta n$ (20 °C, 589.3 nm) | = 0.303 | |
| 3 | PZG-3-N | 5.00 | | | |
| 4 | PGUQU-3-F | 3.00 | $\varepsilon_{\parallel}$ (20 °C, 1 kHz) | = 39.7 | |
| 5 | PGUQU-5-F | 3.00 | $\Delta\varepsilon$ (20 °C, 1 kHz) | = 34.1 | |
| 6 | PPTUI-3-2 | 29.00 | | | |
| 7 | PPTUI-3-4 | 30.00 | | | |
| 8 | PTP-1-O2 | 3.00 | | | |
| Σ | | 100.00 | | | |

A mixture M-2 is then prepared by adding the chiral dopant R-5011 and the reactive mesogens RM-A and RM-B

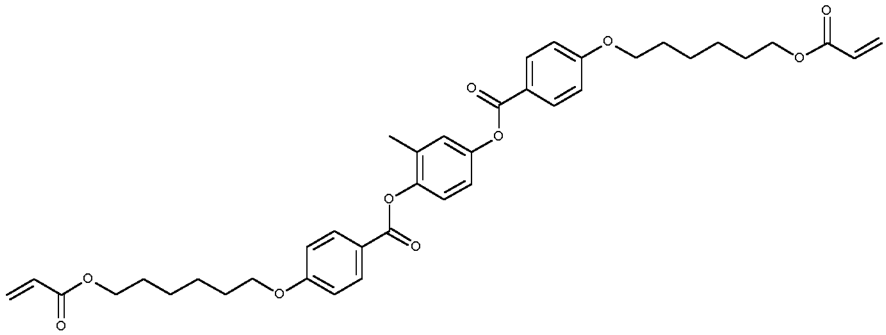

RM-A

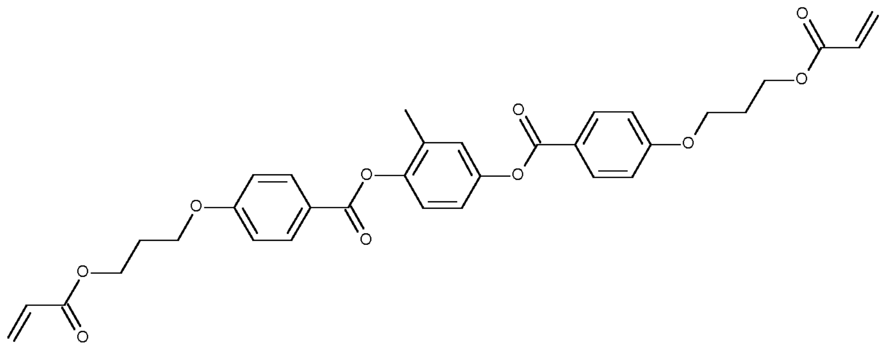

RM-B

to the base mixture B-2, wherein the obtained mixture M-2 contains 87.35% of the mixture B-2, 2.65% of R-5011, 5.00% of RM-A and 5.00% of RM-B.

The mixture M-2 is then divided into two parts, wherein to one part 0.04% of IRG-651 is added.

Both parts of the mixture, i.e. with and without photoinitiator, are respectively filled in a test cell as described in Example 1. Polymerisation is carried out by irradiating each test cell with UV light from a lamp as described in Example 1 (power = 10 mW/cm$^2$) for 2000 s, using a photomask analogous to the mask in Example 1, wherein however the transparent strips each have a width of 40 μm.

Even without a subsequent further exposure of the whole cell to UV light, the test cells obtained exhibit the desired polymer walls, while furthermore providing suitable switching behaviour and electro-optical performance in the active regions and favourable contrast with respect to the inactive areas, in which unwanted reflection is reduced.

<u>Example 3</u>

A liquid-crystal mixture B-3 is prepared and characterized with respect to its general physical properties, having the composition and properties as indicated in the following table.

| Base Mixture B-3 | | | Physical Properties | | |
|---|---|---|---|---|---|
| Compound | | | T(N,I) | = 94.5 | °C |
| No. | Abbreviation | Conc. /% | | | |
| 1 | PZG-5-N | 10.00 | $n_e$ (20 °C, 589.3 nm) | = 1.709 | |
| 2 | CCU-3-F | 4.00 | $\Delta n$ (20 °C, 589.3 nm) | = 0.200 | |
| 3 | PGU-2-F | 5.00 | | | |
| 4 | PGU-3-F | 10.00 | $\varepsilon_{\|\|}$ (20 °C, 1 kHz) | = 30.2 | |
| 5 | CCGU-3-F | 6.00 | $\Delta\varepsilon$ (20 °C, 1 kHz) | = 24.9 | |
| 6 | PUQU-3-F | 16.00 | | | |
| 7 | PGUQU-3-F | 8.00 | | | |
| 8 | CP-3-O1 | 8.00 | | | |
| 9 | PP-1-2V1 | 4.00 | | | |
| 10 | PGP-2-2V | 15.00 | | | |
| 11 | CPTP-3-O1 | 4.00 | | | |

(continued)

| Base Mixture B-3 | | | Physical Properties |
|---|---|---|---|
| 12 | CPGP-4-3 | 5.00 | |
| 13 | CPGP-5-2 | 5.00 | |
| Σ | | 100.00 | |

A mixture M-3 is then prepared analogous to Example 1, wherein the chiral dopant, the reactive monomers and the photoinitiator as described in Example 1 are added in the amounts as given in Example 1 to the mixture B-3.
The spatially selective polymerisation and the subsequent UV treatment of the whole cell are then carried out as described in Example 1.
A cell having polymeric walls and favourable properties is obtained.

Example 4

A liquid-crystal mixture B-4 is prepared and characterized with respect to its general physical properties, having the composition and properties as indicated in the following table.

| Base Mixture B-4 | | | Physical Properties | | |
|---|---|---|---|---|---|
| Compound | | | T(N,I) | = 83.0 | °C |
| No. | Abbreviation | Conc. /% | | | |
| 1 | PZG-3-N | 7.00 | $n_e$ (20 °C, 589.3 nm) | = 1.752 | |
| 2 | PZG-5-N | 10.00 | Δn (20 °C, 589.3 nm) | = 0.235 | |
| 3 | PGU-3-F | 12.00 | | | |
| 4 | PUQU-3-F | 8.00 | $\varepsilon_{\|\|}$ (20 °C, 1 kHz) | = 31.1 | |
| 5 | PGUQU-3-F | 9.00 | Δε (20 °C, 1 kHz) | = 25.9 | |
| 6 | CP-3-O1 | 8.00 | | | |
| 7 | PP-1-2V1 | 4.00 | | | |
| 8 | PTP-1-O2 | 4.00 | | | |
| 9 | PTP-2-O1 | 4.00 | | | |
| 10 | PGP-2-2V | 11.00 | | | |
| 11 | PPTUI-3-2 | 8.00 | | | |
| 12 | PPTUI-3-4 | 10.00 | | | |
| 13 | CPGP-4-3 | 5.00 | | | |
| Σ | | 100.00 | | | |

A mixture M-4 is then prepared analogous to Example 1, wherein the chiral dopant, the reactive monomers and the photoinitiator as described in Example 1 are added in the amounts as given in Example 1 to the mixture B-4.
The spatially selective polymerisation is then carried out as described in Example 1. However, no subsequent UV treatment of the whole cell is performed.
A cell having polymeric walls and favourable properties is obtained.

Example 5

A liquid-crystal mixture B-5 is prepared and characterized with respect to its general physical properties, having the composition and properties as indicated in the following table.

| Base Mixture B-5 | | | Physical Properties | | |
|---|---|---|---|---|---|
| Compound | | | T(N,I) | = 91.5 | °C |
| No. | Abbreviation | Conc. /% | | | |
| 1 | PZG-3-N | 8.50 | $n_e$ (20 °C, 589.3 nm) | = 1.767 | |

(continued)

| Base Mixture B-5 | | | Physical Properties | |
|---|---|---|---|---|
| 2 | PZG-5-N | 11.00 | Δn (20 °C, 589.3 nm) | = 0.250 |
| 3 | PGU-3-F | 8.00 | | |
| 4 | PUQU-3-F | 6.00 | $\varepsilon_{\|\|}$ (20 °C, 1 kHz) | = 31.4 |
| 5 | PGUQU-3-F | 9.00 | Δε (20 °C, 1 kHz) | = 26.1 |
| 6 | CP-3-O1 | 6.00 | | |
| 7 | PTP-1-O2 | 4.00 | | |
| 8 | PTP-2-O1 | 5.00 | | |
| 9 | PGP-2-5 | 6.00 | | |
| 10 | PGP-2-2V | 10.00 | | |
| 11 | PPTUI-3-2 | 10.00 | | |
| 12 | PPTUI-3-4 | 13.00 | | |
| 13 | CPGP-4-3 | 3.50 | | |
| Σ | | 100.00 | | |

A mixture M-5 is then prepared analogous to Example 1, wherein the chiral dopant, the reactive monomers and the photoinitiator as described in Example 1 are added in the amounts as given in Example 1 to the mixture B-5.
The spatially selective polymerisation and the subsequent UV treatment of the whole cell are then carried out as described in Example 1.
A cell having polymeric walls and favourable properties is obtained.

Example 6

A liquid-crystal mixture B-6 is prepared and characterized with respect to its general physical properties, having the composition and properties as indicated in the following table.

| Base Mixture B-6 | | | Physical Properties | | |
|---|---|---|---|---|---|
| Compound | | | T(N,I) | = 85.5 | °C |
| No. | Abbreviation | Conc. /% | | | |
| 1 | PZG-3-N | 10.00 | $n_e$ (20 °C, 589.3 nm) | = 1.771 | |
| 2 | PZG-5-N | 10.00 | Δn (20 °C, 589.3 nm) | = 0.251 | |
| 3 | PGU-3-F | 18.00 | | | |
| 4 | PGUQU-3-F | 10.00 | $\varepsilon_{\|\|}$ (20 °C, 1 kHz) | = 37.9 | |
| 5 | CP-3-O1 | 6.00 | Δε (20 °C, 1 kHz) | = 32.1 | |
| 6 | PTP-1-O2 | 3.00 | | | |
| 7 | PTP-2-O1 | 3.00 | | | |
| 8 | PGP-2-3 | 8.00 | | | |
| 9 | PGP-2-4 | 7.00 | | | |
| 10 | PPTUI-3-2 | 10.00 | | | |
| 11 | PPTUI-3-4 | 15.00 | | | |
| Σ | | 100.00 | | | |

A mixture M-6 is then prepared analogous to Example 1, wherein the chiral dopant, the reactive monomers and the photoinitiator as described in Example 1 are added in the amounts as given in Example 1 to the mixture B-6.
The spatially selective polymerisation and the subsequent UV treatment of the whole cell are then carried out as described in Example 1.
A cell having polymeric walls and favourable properties is obtained.

Example 7

A liquid-crystal mixture B-7 is prepared and characterized with respect to its general physical properties, having the composition and properties as indicated in the following table.

| Base Mixture B-7 | | | Physical Properties | | |
|---|---|---|---|---|---|
| Compound | | | T(N,I) | = 81.5 | °C |
| No. | Abbreviation | Conc. /% | | | |
| 1 | PZG-2-N | 11.00 | $n_e$ (20 °C, 589.3 nm) | = 1.752 | |
| 2 | PZG-3-N | 9.00 | Δn (20 °C, 589.3 nm) | = 0.229 | |
| 3 | PZG-5-N | 7.00 | | | |
| 4 | PGU-2-F | 7.00 | $\varepsilon_{\|\|}$ (20 °C, 1 kHz) | = 30.4 | |
| 5 | PGU-3-F | 7.00 | Δε (20 °C, 1 kHz) | = 24.2 | |
| 6 | CP-3-O1 | 6.00 | | | |
| 7 | PTP-1-O2 | 5.00 | | | |
| 8 | PTP-2-O1 | 7.00 | | | |
| 9 | PTP-3-O1 | 5.00 | | | |
| 10 | PGP-2-3 | 7.00 | | | |
| 11 | PGP-2-4 | 7.00 | | | |
| 12 | PGP-2-5 | 7.00 | | | |
| 13 | CPTP-3-O1 | 5.00 | | | |
| 14 | CPTP-3-O2 | 5.00 | | | |
| 15 | CPTP-3-O3 | 5.00 | | | |
| Σ | | 100.00 | | | |

A mixture M-7 is then prepared analogous to Example 1, wherein the chiral dopant, the reactive monomers and the photoinitiator as described in Example 1 are added in the amounts as given in Example 1 to the mixture B-7.

The spatially selective polymerisation and the subsequent UV treatment of the whole cell are then carried out as described in Example 1.

A cell having polymeric walls and favourable properties is obtained.

Example 8

A liquid-crystal mixture B-8 is prepared and characterized with respect to its general physical properties, having the composition and properties as indicated in the following table.

| Base Mixture B-8 | | | Physical Properties | | |
|---|---|---|---|---|---|
| Compound | | | T(N,I) | = 95.5 | °C |
| No. | Abbreviation | Conc. /% | | | |
| 1 | CU-3-N | 10.00 | $n_e$ (20 °C, 589.3 nm) | = 1.626 | |
| 2 | PZG-2-N | 9.00 | Δn (20 °C, 589.3 nm) | = 0.129 | |
| 3 | PZG-3-N | 9.00 | | | |
| 4 | PZG-4-N | 10.00 | $\varepsilon_{\|\|}$ (20 °C, 1 kHz) | = 36.1 | |
| 5 | PZG-5-N | 8.00 | Δε (20 °C, 1 kHz) | = 28.9 | |
| 6 | CCG-V-F | 16.00 | | | |
| 7 | CC-5-V | 6.00 | | | |
| 8 | CCP-V-1 | 11.00 | | | |
| 9 | CPTP-3-O1 | 2.00 | | | |
| 10 | CCZPC-3-3 | 5.00 | | | |
| 11 | CCZPC-3-4 | 5.00 | | | |
| 12 | CCZPC-3-5 | 5.00 | | | |

(continued)

| Base Mixture B-8 | | | Physical Properties |
|---|---|---|---|
| 13 | CPPC-3-3 | 2.00 | |
| 14 | CGPC-3-3 | 2.00 | |
| Σ | | 100.00 | |

A mixture M-8 is then prepared analogous to Example 1, wherein the chiral dopant, the reactive monomers and the photoinitiator as described in Example 1 are added in the amounts as given in Example 1 to the mixture B-8.
The spatially selective polymerisation and the subsequent UV treatment of the whole cell are then carried out as described in Example 1.
A cell having polymeric walls and favourable properties is obtained.

Examples 9 to 12

Liquid-crystal mixtures B-9, B-10, B-11 and B-12 are prepared and characterized with respect to their general physical properties, having the respective compositions and properties as indicated in the following table.

| Mixture | | B-9 | B-10 | B-11 | B-12 |
|---|---|---|---|---|---|
| Composition | | | | | |
| Compound | | c / % | | | |
| No. | Abbreviation | | | | |
| 1 | CP-3-N | - | - | 3.50 | - |
| 2 | PZG-2-N | 6.50 | - | 4.50 | 9.00 |
| 3 | PZG-3-N | 10.00 | 5.00 | 10.00 | 10.00 |
| 4 | PZG-4-N | - | - | 14.00 | 16.00 |
| 5 | PZG-5-N | - | - | 14.00 | 13.50 |
| 6 | CPZG-3-N | - | - | - | 5.00 |
| 7 | CPZG-4-N | - | - | - | 3.00 |
| 8 | PGU-3-F | 18.00 | 18.00 | - | - |
| 9 | PUQU-3-F | - | 7.50 | - | - |
| 10 | PGUQU-3-F | 8.50 | 8.00 | 7.00 | - |
| 11 | CP-3-O1 | 8.00 | 8.00 | - | - |
| 12 | PTP-1-O2 | 5.00 | 4.00 | - | 2.00 |
| 13 | PTP-2-O1 | 5.00 | 5.00 | - | - |
| 14 | PTP-3-O1 | 4.00 | 7.00 | - | - |
| 15 | PGP-2-5 | - | 4.50 | - | - |
| 16 | PGP-2-2V | 11.50 | 13.00 | - | - |
| 17 | CPTP-3-O1 | - | 3.50 | - | - |
| 18 | CPTP-3-O3 | 5.00 | - | - | - |
| 19 | PPTUI-3-2 | 8.50 | 6.50 | 20.00 | 20.00 |
| 20 | PPTUI-3-3 | 10.00 | 10.00 | 23.00 | 21.50 |
| 21 | CPGP-4-3 | - | - | 4.00 | - |
| Σ | | 100.00 | 100.00 | 100.00 | 100.00 |

(continued)

| Properties | | | | |
|---|---|---|---|---|
| T(N,I) /°C | 86.5 | 88.5 | 95.5 | 89.0 |
| $n_e$ (20 °C, 589.3 nm) | 1.770 | 1.773 | 1.772 | 1.768 |
| $\Delta n$ (20 °C, 589.3 nm) | 0.249 | 0.254 | 0.257 | 0.252 |
| $\varepsilon_{\parallel}$ (20 °C, 1 kHz) | 28.8 | 19.6 | 50.8 | 59.1 |
| $\Delta\varepsilon$ (20 °C, 1 kHz) | 23.4 | 15.2 | 43.5 | 50.7 |

To each of these mixtures B-9, B-10, B-11 and B-12 the chiral dopant, the reactive monomers and the photoinitiator as described in Example 1 are added in the amounts as given in Example 1 to prepare the respective mixtures M-9, M-10, M-11 and M-12

Each mixture M-9, M-10, M-11 and M-12 is then respectively filled in a test cell, and the spatially selective polymerisation and the subsequent UV treatment of the whole cells are then carried out as described in Example 1.

Cells having polymeric walls and favourable properties are obtained.

## Claims

**1.** A liquid-crystalline medium, comprising

- one or more mesogenic compounds selected from the group of compounds of formulae I and II

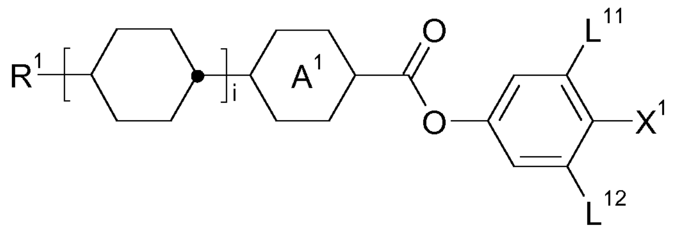

I

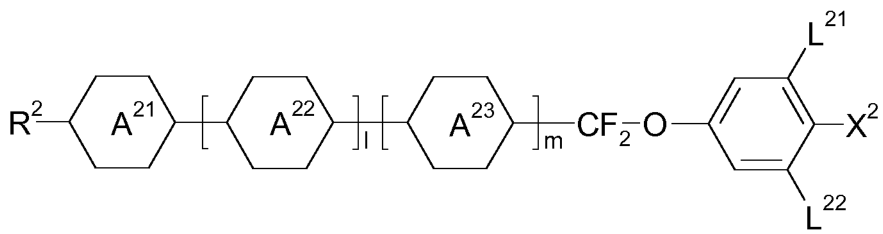

II

wherein

$R^1$ and $R^2$ are, independently of each other, alkyl, alkoxy, fluorinated alkyl or fluorinated alkoxy with 1 to 12 C atoms, alkenyl, alkenyloxy, alkoxyalkyl, fluorinated alkenyl or fluorinated alkenyloxy with 2 to 12 C atoms,

$L^{11}$, $L^{12}$, $L^{21}$ and $L^{22}$ are, independently of each other, H or F,

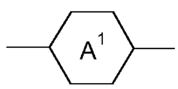

is

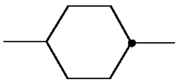 , 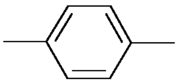 or 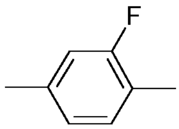 ,

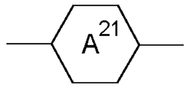

to

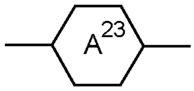

are, independently of each other,

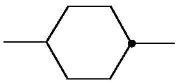 , 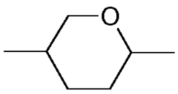 , 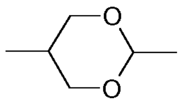 ,

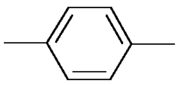 , 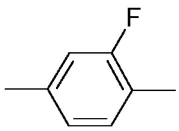 , 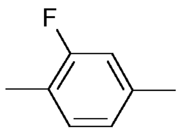

or

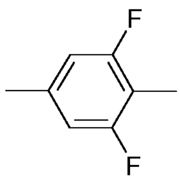 ,

$X^1$ is CN or NCS,
$X^2$ is halogen, halogenated alkyl or alkoxy with 1 to 3 C atoms or halogenated alkenyl or alkenyloxy with 2 or 3 C atoms,
and
i, l and m are, independently of each other, 0 or 1,

- one or more chiral compounds,
and
- one or more polymerisable compounds,

wherein the one or more polymerisable compounds are present in an amount, based on the overall contents of the medium, of 2.0% or more by weight, and wherein the one or more polymerisable compounds comprise at least one compound which contains a cycloalkyl group selected from unsubstituted or substituted bridged bicyclic rings and unsubstituted or substituted adamantyl.

**2.** The medium according to claim 1, wherein the one or more polymerisable compounds comprise at least one compound which contains a cycloalkyl group selected from isobornyl and adamantyl.

**3.** The medium according to claim 1 or 2, wherein the one or more polymerisable compounds comprise one, two or

more acrylate and/or methacrylate groups.

**4.** The medium according to one or more of claims 1 to 3, wherein the one or more chiral compounds have an absolute value of the helical twisting power of 20 $\mu m^{-1}$ or more.

**5.** A composite system, obtained from or respectively obtainable from the medium according to one or more of claims 1 to 4 by polymerising the one or more polymerisable compounds as set forth in one or more of claims 1 to 3, wherein the system comprises

- a low molecular weight component
comprising the one or more mesogenic compounds selected from the group of compounds of formulae I and II as set forth in claim 1, and the one or more chiral compounds as set forth in claim 1 or 4,
and
- a polymeric component
comprising one or more polymeric structures obtained by or respectively obtainable from polymerising the one or more polymerisable compounds.

**6.** A light modulation element, comprising the composite system according to claim 5 and at least one substrate, wherein the components as set forth in claim 5 are supported by the at least one substrate and are separated such that the polymeric component comprising the one or more polymeric structures forms polymeric walls to contain the low molecular weight component in compartments.

**7.** The element according to claim 6, wherein the at least one substrate comprises electrodes to electrically address the low molecular weight component, and
wherein the polymeric walls are based on the surface of the at least one substrate and are at least partially formed in electrically inactive regions.

**8.** A process for preparing a composite system or a light modulation element, comprising the following steps

(a) providing the medium according to one or more of claims 1 to 4 as a layer,
(b) carrying out spatially selective polymerisation of the one or more polymerisable compounds as set forth in one or more of claims 1 to 3 in defined regions of the layer to obtain polymeric structures in the defined regions.

**9.** The process according to claim 8, wherein in step (b) the defined regions of the layer are selectively exposed to actinic radiation.

**10.** The process according to claim 8 or 9, wherein the layer is supported on a substrate, wherein preferably the layer is sandwiched between two substrates, and wherein the polymeric structures are formed as polymeric walls, preferably by selectively exposing the defined regions to UV radiation, more preferably by using a photomask.

**11.** The process according to one or more of claims 8 to 10, wherein subsequent to step (b) the whole layer is exposed to actinic radiation, preferably UV radiation.

**12.** A composite system or a light modulation element obtained by or respectively obtainable from carrying out the process according to one or more of claims 8 to 11.

**13.** Use of the medium according to one or more of claims 1 to 4 or the composite system according to claim 5 or 12 in a light modulation element, a liquid crystal mirror or an electro-optical device.

**14.** A liquid crystal display, comprising the composite system according to claim 5 or 12 or the light modulation element according to one or more of claims 6, 7 and 12.

**15.** The liquid crystal display according to claim 14, which is a reflective display, and which preferably exhibits a selective reflection with a wavelength in the near UV or in the visible range of the electromagnetic spectrum.

**Patentansprüche**

1. Flüssigkristallines Medium enthaltend

- eine oder mehrere mesogene Verbindungen, die ausgewählt sind aus der Gruppe der Verbindungen der Formeln I und II

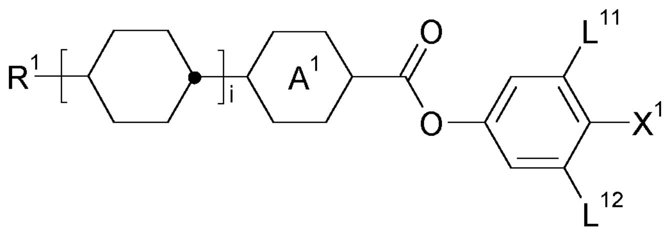

I

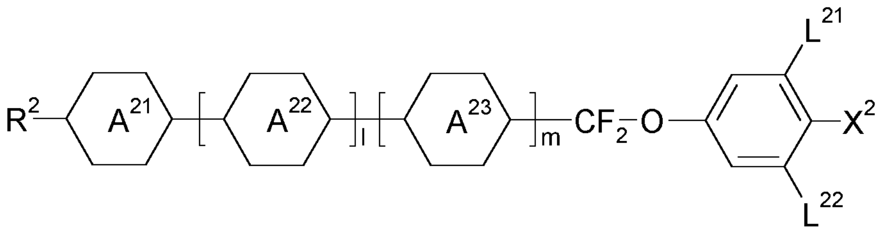

II

bei denen

$R^1$ und $R^2$ unabhängig voneinander Alkyl, Alkoxy, fluoriertes Alkyl oder fluoriertes Alkoxy mit 1 bis 12 C-Atomen, Alkenyl, Alkenyloxy, Alkoxyalkyl, fluoriertes Alkenyl oder fluoriertes Alkenyloxy mit 2 bis 12 C-Atomen sind,
$L^{11}$, $L^{12}$ , $L^{21}$ und $L^{22}$ unabhängig voneinander H oder F sind,

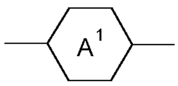

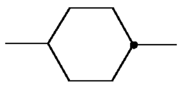

,

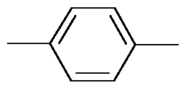

oder

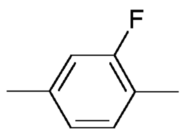

ist,

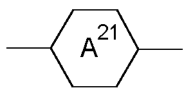

bis

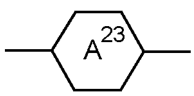

unabhängig voneinander

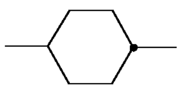

,

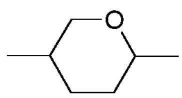

,

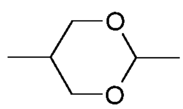

,

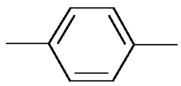, 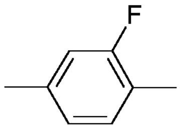, 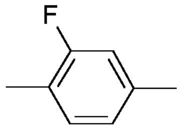

oder

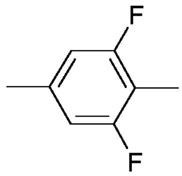 sind,

$X^1$ CN oder NCS ist,
$X^2$ Halogen, halogeniertes Alkyl oder Alkoxy mit 1 bis 3 C-Atomen oder halogeniertes Alkenyl oder Alkenyloxy mit 2 oder 3 C-Atomen ist,
und
i, l und m unabhängig voneinander 0 oder 1 sind,

- eine oder mehrere chirale Verbindungen
und
- eine oder mehrere polymerisierbare Verbindungen,

bei dem die eine oder mehreren polymerisierbaren Verbindungen in einer Menge, bezogen auf den Gesamtgehalt des Mediums, von 2,0 Gew.-% oder mehr vorliegen und bei dem die eine oder mehreren polymerisierbaren Verbindungen mindestens eine Verbindung umfassen, die eine aus unsubstituierten oder substituierten verbrückten bicyclischen Ringen und unsubstituiertem oder substituiertem Adamantyl ausgewählte Cycloalkylgruppe enthält.

**2.** Medium nach Anspruch 1, bei dem die eine oder mehreren polymerisierbaren Verbindungen mindestens eine Verbindung umfassen, die eine aus Isobornyl und Adamantyl ausgewählte Cycloalkylgruppe enthält.

**3.** Medium nach Anspruch 1 oder 2, bei dem die eine oder mehreren polymerisierbaren Verbindungen eine, zwei oder mehr Acrylat- und/oder Methacrylatgruppen enthalten.

**4.** Medium nach einem oder mehreren der Ansprüche 1 bis 3, bei dem die eine oder mehreren chiralen Verbindungen einen absoluten Wert des helikalen Verdrillungsvermögens von 20 $\mu m^{-1}$ oder mehr besitzen.

**5.** Verbundsystem, erhalten aus bzw. erhältlich aus dem Medium nach einem oder mehreren der Ansprüche 1 bis 4 durch Polymerisieren der einen oder mehreren polymerisierbaren Verbindungen wie in einem oder mehreren der Ansprüche 1 bis 3 dargelegt,
bei dem das System

- eine niedermolekulare Komponente
enthaltend die eine oder mehreren mesogenen Verbindungen, die aus der Gruppe der Verbindungen der Formeln I und II wie in Anspruch 1 dargelegt ausgewählt sind, und die eine oder mehreren chiralen Verbindungen wie in Anspruch 1 oder 4 dargelegt
und
- eine Polymerkomponente
enthaltend eine oder mehrere Polymerstrukturen, die durch Polymerisieren der einen oder mehreren polymerisierbaren Verbindungen erhalten wurden bzw. erhältlich sind, enthält.

**6.** Lichtmodulationselement enthaltend das Verbundsystem nach Anspruch 5 und mindestens ein Substrat,
bei dem die Komponenten wie in Anspruch 5 dargelegt auf dem mindestens einen Substrat geträgert sind und so beabstandet sind, dass die Polymerkomponente, die die eine oder mehreren Polymerstrukturen enthält, Polymerwände bildet, um die niedermolekulare Komponente in Kompartimente einzuschließen.

7. Element nach Anspruch 6, bei dem das mindestens eine Substrat Elektroden umfasst, um die niedermolekulare Komponente elektrisch anzusteuern, und
bei dem die Polymerwände auf der Oberfläche des mindestens einen Substrates basiert sind und mindestens teilweise in elektrisch inaktiven Bereichen ausgebildet sind.

8. Verfahren zur Herstellung eines Verbundsystems oder eines Lichtmodulationselements, umfassend die folgenden Schritte

(a) Bereitstellen des Mediums nach einem oder mehreren der Ansprüche 1 bis 4 als Schicht,
(b) Durchführen räumlich selektiver Polymerisation der einen oder mehreren polymerisierbaren Verbindungen wie in einem oder mehreren der Ansprüche 1 bis 3 dargelegt in definierten Bereichen der Schicht, so dass man Polymerstrukturen in den definierten Bereichen erhält.

9. Verfahren nach Anspruch 8, bei dem die definierten Bereiche der Schicht in Schritt (b) selektiv aktinischer Strahlung ausgesetzt werden.

10. Verfahren nach Anspruch 8 oder 9, bei dem die Schicht auf einen Substrat geträgert ist, bei dem vorzugsweise die Schicht zwischen zwei Substraten angeordnet ist und bei dem die Polymerstrukturen als Polymerwände ausgebildet sind, vorzugsweise durch selektive Einwirkung von UV-Strahlung auf die definierten Bereiche, stärker bevorzugt durch Verwendung einer Photomaske.

11. Verfahren nach einem oder mehreren der Ansprüche 8 bis 10, bei dem anschließend an Schritt (b) die gesamte Schicht aktinischer Strahlung, vorzugsweise UV-Strahlung ausgesetzt wird.

12. Verbundsystem oder Lichtmodulationselement, das durch Durchführen des Verfahrens nach einem oder mehreren der Ansprüche 8 bis 11 erhalten wurde bzw. erhältlich ist.

13. Verwendung des Mediums nach einem oder mehreren der Ansprüche 1 bis 4 oder des Verbundsystems nach Anspruch 5 oder 12 in einem Lichtmodulationselement, einem Flüssigkristallspiegel oder einer elektrooptischen Vorrichtung.

14. Flüssigkristallanzeige enthaltend das Verbundsystem nach Anspruch 5 oder 12 oder das Lichtmodulationselement nach einem oder mehreren der Ansprüche 6, 7 und 12.

15. Flüssigkristallanzeige nach Anspruch 14, bei der es sich um eine reflektierende Anzeige handelt und die vorzugsweise eine selektive Reflexion mit einer Wellenlänge im Nah-UV- oder im sichtbaren Bereich des elektromagnetischen Spektrums aufweist.

## Revendications

1. Milieu cristallin liquide, comprenant :

- un ou plusieurs composé(s) mésogène(s) qui est/sont sélectionné(s) parmi le groupe de composés des formules I et II

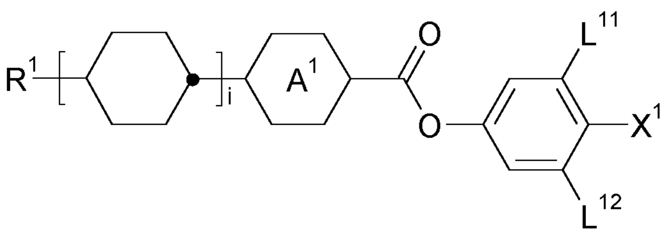

I

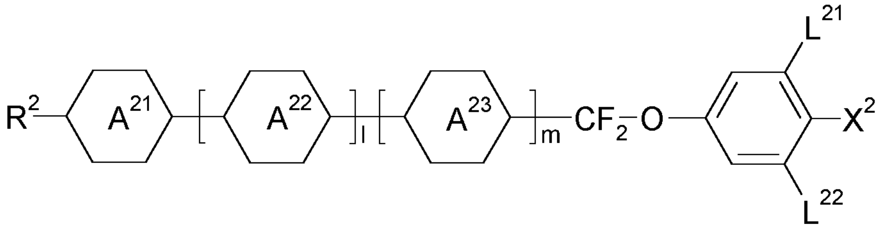

II

dans lesquelles

$R^1$ et $R^2$ sont, de manière indépendante l'un de l'autre, alkyle, alcoxy, alkyle fluoré ou alcoxy fluoré qui comporte de 1 à 12 atome(s) de C, alkényle, alkényloxy, alcoxyalkyle, alkényle fluoré ou alkényloxy fluoré qui comporte de 2 à 12 atomes de C,

$L^{11}$, $L^{12}$, $L^{21}$ et $L^{22}$ sont, de manière indépendante les uns des autres, H ou F,

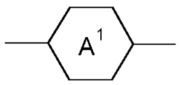

est

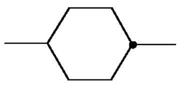, 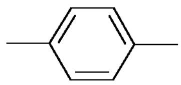 ou 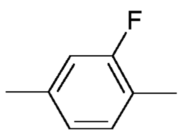,

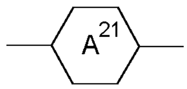

à

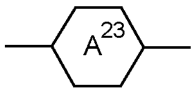

sont, de manière indépendante les uns des autres,

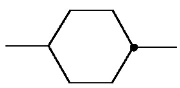, 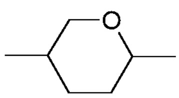, 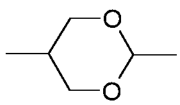,

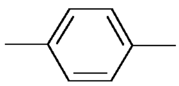, 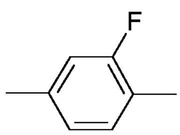, 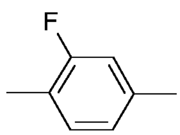

ou

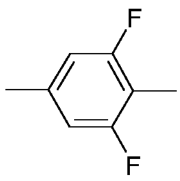

,

$X^1$ est CN ou NCS,
$X^2$ est halogène, alkyle ou alcoxy halogéné qui comporte de 1 à 3 atome(s) de C ou alkényle ou alkényloxy halogéné qui comporte 2 ou 3 atomes de C, et
i, l et m sont, de manière indépendante les uns des autres, 0 ou 1,

- un ou plusieurs composé(s) chiral/chiraux,
et
- un ou plusieurs composé(s) polymérisable(s),
dans lequel les un ou plusieurs composés polymérisables sont présents selon une quantité, sur la base des teneurs globales du milieu, de 2,0 % ou plus en poids, et dans lequel les un ou plusieurs composés polymérisables comprennent au moins un composé qui contient un groupe cycloalkyle qui est sélectionné parmi les cycles bicycliques pontés non substitués ou substitués et l'adamantyle non substitué ou substitué.

**2.** Milieu selon la revendication 1, dans lequel les un ou plusieurs composés polymérisables comprennent au moins un composé qui contient un groupe cycloalkyle qui est sélectionné parmi l'isobornyle et l'adamantyle.

**3.** Milieu selon la revendication 1 ou 2, dans lequel les un ou plusieurs composés polymérisables comprennent un, deux groupe(s) acrylate et/ou méthacrylate ou plus.

**4.** Milieu selon une ou plusieurs des revendications 1 à 3, dans lequel les un ou plusieurs composés chiraux présentent une valeur absolue de la puissance de torsion en hélice de 20 $\mu m^{-1}$ ou plus.

**5.** Système composite, obtenu ou pouvant être obtenu de façon respective à partir du milieu selon une ou plusieurs des revendications 1 à 4 par polymérisation des un ou plusieurs composés polymérisables tel qu'il a été défini selon une ou plusieurs des revendications 1 à 3, dans lequel le système comprend

- un composant de poids moléculaire faible qui comprend les un ou plusieurs composés mésogènes qui sont sélectionnés parmi le groupe de composés des formules I et II tel qu'il a été défini selon la revendication 1, et les un ou plusieurs composés chiraux tel qu'il a été défini selon la revendication 1 ou 4,
et
- un composant polymérique
qui comprend une ou plusieurs structure(s) polymérique(s) qui est/sont obtenue(s) ou qui peut/peuvent être obtenue(s) de façon respective à partir de la polymérisation des un ou plusieurs composés polymérisables.

**6.** Élément de modulation de la lumière comprenant le système composite selon la revendication 5 et au moins un substrat, dans lequel les composants tel qu'il a été défini selon la revendication 5 sont supportés par l'au moins un substrat et sont séparés de telle sorte que le composant polymérique qui comprend les une ou plusieurs structures polymériques forme des parois polymériques pour contenir le composant de poids moléculaire faible dans des compartiments.

**7.** Élément selon la revendication 6, dans lequel l'au moins un substrat comprend des électrodes pour adresser électriquement le composant de poids moléculaire faible, et
dans lequel les parois polymériques sont basées sur la surface de l'au moins un substrat et sont au moins partiellement formées dans des régions électriquement inactives.

**8.** Procéder pour préparer un système composite ou un élément de modulation de la lumière, comprenant les étapes qui suivent

(a) la fourniture du milieu selon une ou plusieurs des revendications 1 à 4 en tant que couche, et
(b) la mise en œuvre d'une polymérisation sélective spatialement des un ou plusieurs composés polymérisables

tel qu'il a été défini selon une ou plusieurs des revendications 1 à 3 dans des régions définies de la couche de manière à obtenir des structures polymériques dans les régions définies.

**9.** Procédé selon la revendication 8, dans lequel, au niveau de l'étape (b), les régions définies de la couche sont exposées de façon sélective à un rayonnement actinique.

**10.** Procédé selon la revendication 8 ou 9, dans lequel la couche est supportée sur un substrat, dans lequel, de préférence, la couche est prise en sandwich entre deux substrats et dans lequel les structures polymériques sont formées en tant que parois polymériques, de préférence en exposant de façon sélective les régions définies à un rayonnement UV, de façon davantage préférable, en utilisant un photomasque.

**11.** Procédé selon une ou plusieurs des revendications 8 à 10, dans lequel, suite à l'étape (b), la couche complète est exposée à un rayonnement actinique, de préférence un rayonnement UV.

**12.** Système composite ou élément de modulation de la lumière obtenu ou pouvant être obtenu de façon respective à partir de la mise en œuvre du procédé selon une ou plusieurs des revendications 8 à 11.

**13.** Utilisation du milieu selon une ou plusieurs des revendications 1 à 4 ou du système composite selon la revendication 5 ou 12 dans un élément de modulation de la lumière, un miroir à cristaux liquides ou un dispositif électrooptique.

**14.** Affichage à cristaux liquides, comprenant le système composite selon la revendication 5 ou 12 ou l'élément de modulation de la lumière selon une ou plusieurs des revendications 6, 7 et 12.

**15.** Affichage à cristaux liquides selon la revendication 14, lequel est un affichage réflectif et lequel présente, de préférence, une réflexion sélective avec une longueur d'onde dans les UV proches ou dans la plage visible du spectre électromagnétique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9219695 A
- US 5384067 A
- US 5453863 A
- US 5570216 A
- US 6285434 B
- WO 2010022891 A1
- WO 2011137986 A1
- WO 2015101405 A1
- WO 2014169985 A1
- WO 2013156113 A1
- WO 2013034219 A1
- EP 2568032 A2
- DE 3425503
- DE 3534777
- DE 3534778
- DE 3534779
- DE 3534780
- DE 4342280
- EP 01038941 A
- DE 19541820
- WO 9800428 A
- GB 2328207 A
- WO 0294805 A
- WO 0234739 A
- WO 0206265 A
- WO 0206196 A
- WO 0206195 A


### Non-patent literature cited in the description


- Merck Liquid Crystals, Physical Properties of Liquid Crystals. Status. Merck KGaA, November 1997